(19) Europäisches Patentamt
European Patent Office
Office européen des brevets

(11) Publication number: 0 156 481 B1

(12) EUROPEAN PATENT SPECIFICATION

(45) Date of publication of patent specification: 08.06.88

(51) Int. Cl.$^4$: **G 03 G 5/06**, C 09 B 35/00

(21) Application number: 85300955.3

(22) Date of filing: 13.02.85

# (54) Photoreceptor.

(30) Priority: 27.03.84 JP 60419/84
10.04.84 JP 72375/84
10.04.84 JP 72376/84
10.04.84 JP 72377/84
11.04.84 JP 73820/84

(43) Date of publication of application:
02.10.85 Bulletin 85/40

(45) Publication of the grant of the patent:
08.06.88 Bulletin 88/23

(84) Designated Contracting States:
DE FR GB

(56) References cited:
EP-A-0 034 497
DE-A-2 831 557
PATENTS ABSTRACTS OF JAPAN, vol. 8, no. 42 (P-256)1479r, 23rd February 1984; & JP - A - 58 194 035 (KONISHIROKU SHASHIN KOGYO K.K.) 11-11-1983

(73) Proprietor: KONISHIROKU PHOTO INDUSTRY CO. LTD.
No. 26-2, Nishishinjuku 1-chome Shinjuku-ku
Tokyo 160 (JP)

(72) Inventor: Hirose, Naohiro
9-2, Honcho
Hachioji-shi Tokyo (JP)
Inventor: Sasaki, Osamu
491-99, Nagafusacho
Hachioji-shi Tokyo (JP)
Inventor: Takizawa, Yoshio
2-5-19, Owadacho
Hachioji-shi Tokyo (JP)

(74) Representative: Ellis-Jones, Patrick George Armine et al
J.A. KEMP & CO. 14 South Square Gray's Inn
London WC1R 5EU (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 156 481 B1

Courier Press, Leamington Spa, England.

**Description**

This invention relates to a photoreceptor, particularly to a photoreceptor having a photosensitive layer containing an azo compound.

In the prior art, as electrophotographic receptors, there have widely been employed inorganic photoreceptors having photosensitive layers composed mainly of inorganic photoconductive compounds such as selenium, zinc oxide, cadmium sulfide, silicon. However, these do not necessarily have satisfactory sensitivity, heat stability, humidity resistance or durability properties. For example, the characteristics of selenium are deteriorated as a photoreceptor when crystallized and it can only be manufactured with difficulty; heat or fingerprints may cause crystallization which results in its deterioration of performance as a photoreceptor. Problems are also involved with cadmium sulfide with respect to humidity resistance or durability, while zinc oxide has durability problems.

In order to overcome the drawbacks possessed by inorganic photoreceptors, organic photoreceptors having photosensitive layers composed mainly of various organic photoconductive compounds have been investigated. For example, Japanese Patent Publication No. 10496/1975 discloses an organic photoreceptor having a photosensitive layer containing poly-N-vinylcarbazole and 2,4,7-trinitro-9-fluorenone. However, this photoreceptor does not necessarily have satisfactory sensitivity and durability properties. To improve such drawbacks, it has been attempted to develop an organic photoreceptor with higher performance by having the carrier generating function and the carrier transporting function assigned to different materials. Many studies have been made of such a photoreceptor, of the so-called function separation type, since the respective materials can be selected from a broad range of materials and photoreceptors having any desired performance can be prepared with relative ease.

A large number of compounds have been proposed for use in such a photoreceptor. As an example of an inorganic compound as the carrier generating material, Japanese Patent Publication No. 16198/1968 discloses an amorphous selenium, which can be employed in combination with an organic photoconductive compound. However, the carrier generating layer comprising the amorphous selenium still has the drawback of being crystallized by heat and has deteriorated characteristics as a photoreceptor.

Proposals have also been made to use organic dyes as the carrier generating material. For example, photoreceptors containing bisazo compounds or trisazo compounds in the photosensitive layer are disclosed in Japanese Unexamined Patent Publications Nos. 22834/1979, 46558/1979, 46237/1981 and 196241/1982. However, these bisazo compounds or trisazo compounds do not necessarily have satisfactory sensitivity, residual potential or repeated use stability characteristics, and the range of carrier transporting materials which can be selected for use with them is limited, thus failing to satisfy sufficiently the wide range of requirements demanded by an electrophotographic process.

Further, recourse has recently been made to gas lasers such as an Ar laser or He-Ne laser or semiconductor lasers as the light source for the photoreceptor. These lasers are characterized by a capability of ON/OFF time series, and are expected to be promising as the light source for a copying having an image processing function, typically an intelligent copier, as well as for a printer for computer output. Among these, semiconductor lasers are attracting attention, because they require no electrical signal/light signal transducing element such as an acousatic optical element and also because they can be made in small scale and have light weight. However, these semiconductor lasers have a low output as compared with gas lasers and their wavelength is longer (about 780 nm or longer), and therefore the photoreceptor of the prior art, which has a spectral sensitivity of a shorter wavelength, can not be used as such as a photoreceptor using a semiconductor laser as the light source.

Moreover, an electrophotographic photosensitive member containing bisazo compounds in the photosensitive layer is disclosed in Japanese Unexamined Patent Publication No. 194035/1983 (equivalent to co-pending U.S. Patent Application Serial No. 549,589). However, the bisazo compound used in a photoreceptor of the present invention has better dispersibility and coating characteristics than those of the above application, and the photoreceptor of the present invention has better electrified potential, durability and sensitivity than the above.

The present invention seeks to provide a photoreceptor containing a specific azo compound which is stable to heat and light, and also excellent in carrier generating ability.

It also seeks to provide a photoreceptor which has high sensitivity and low residual potential, and excellent durability characteristics which do not change even when the photoreceptor is repeatedly used.

It further seeks to provide a photoreceptor containing an azo compound which can act effectively as the carrier generating material even when combined with a variety of carrier transporting materials, and a photoreceptor having sufficient sensitivity in practice even to a long wavelength light source such as a semiconductor laser.

Accordingly the present invention provides a photoreceptor comprising a support and a photosensitive layer which comprises an azo compound of formula [I].

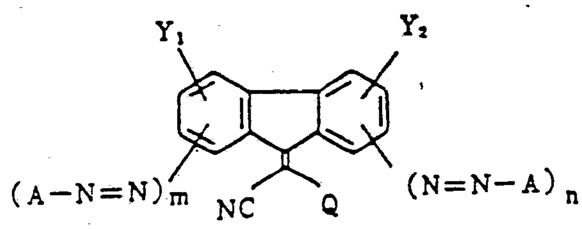 [I]

wherein

Q is a halogen atom, a hydrogen atom, an alkyl group, an alkoxy group, an alkylsulfonyl group, an aryl group, an acetylamido group,

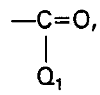

wherein $Q_1$ is an alkyl group, an alkoxy group, a phenyl group, an amino group, a hydroxy group or a hydrogen atom, or

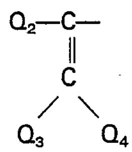

wherein $Q_2$, $Q_3$ and $Q_4$ independently are an alkyl group, an alkoxy group, a phenyl group, an acyl group, an ester group, a hydroxy group, a cyano group, a vinyl group, a halogen atom or a hydrogen atom, wherein any one or more of said alkyl group, alkoxy group, aryl group, amino group, acyl group, acetylamido group, alkylsulfonyl group, phenyl group and vinyl group may have a substituent;

$Y_1$ and $Y_2$ independently are a hydrogen atom, a halogen atom, a cyano group, a hydroxy group, an alkyl group or an alkoxy group;

*m* and *n* each independently represents an integer of from 0 to 2 with the proviso that *m* and *n* cannot be both 0;

each A independently represents a group of formula:

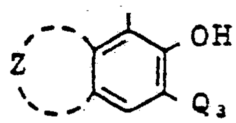

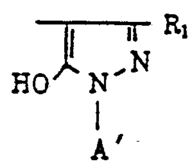

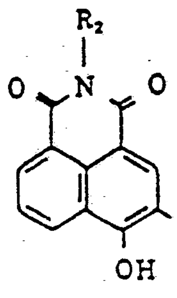

or

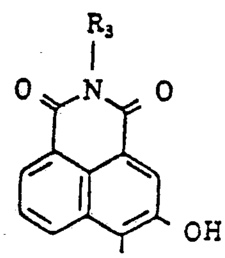

wherein Z is a group which, together with the carbons to which it is attached, forms a substituted or unsubstituted aromatic hydrocarbon ring or substituted or unsubstituted aromatic heterocyclic ring, $P_3$ is a substituted or unsubstituted carbamoyl group or a substituted or unsubstituted sulfamoyl group, $R_1$ is a hydrogen atom, a substituted or unsubstituted alkyl group, a substituted or unsubstituted amino group, a substituted or unsubstituted carbamoyl group, a carboxyl group or an ester group thereof or a cyano group, A' is a substituted or unsubstituted aryl group, and $R_2$ and $R_3$ independently are a substituted or unsubstituted alkyl group, a substituted or unsubstituted aralkyl group or a substituted or unsubstituted aryl group.

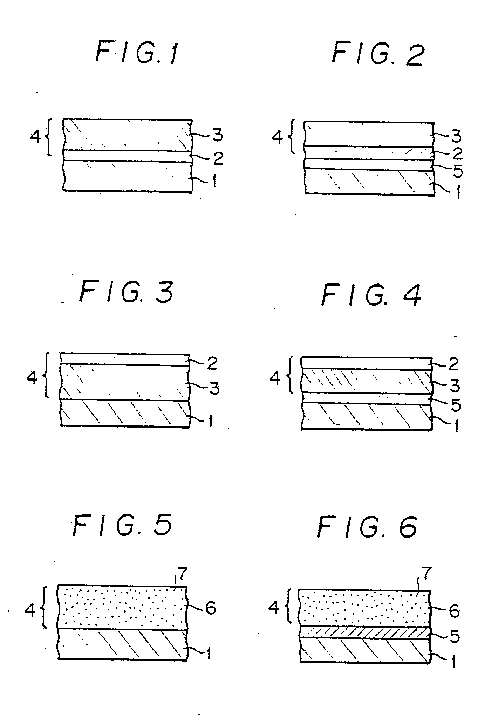

Figs. 1 through 6 show schematically sectional views of some examples of mechanical construction of photoreceptors of the invention.

In the above formula, $P_3$ is a preferably substituted or unsubstituted carbamoyl group of the formula:

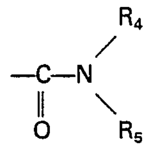

or a substituted or unsubstituted sulfamoyl group of the formula:

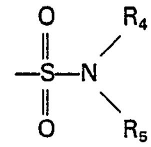

wherein

$R_4$ represents a hydrogen atom, a substituted or unsubstituted alkyl group having 1 to 4 carbon atoms, a substituted or unsubstituted aralkyl group or a substituted or unsubstituted phenyl group; $R_5$ represents a hydrogen atom, a substituted or unsubstituted alkyl group having 1 to 4 carbon atoms, a substituted or unsubstituted aromatic hydrocarbon group (e.g. a substituted or unsubstituted phenyl group, substituted or unsubstituted naphthyl group, or substituted or unsubstituted anthryl group), or a substituted or unsubstituted aromatic heterocyclic group (e.g. a substituted or unsubstituted carbazolyl group, or a substituted or unsubstituted dibenzofuryl group).

The substituents on these groups include, for example, a substituted or unsubstituted alkyl group having 1 to 4 carbon atoms (e.g. methyl, ethyl, isopropyl, t-butyl or trifluoromethyl), a substituted or unsubstituted aralkyl group (e.g. benzyl or phenethyl), a halogen atom (chlorine, bromine, fluorine or iodine), a substituted or unsubstituted alkoxy group having 1 to 4 carbon atoms (e.g. methoxy, ethoxy, isopropoxy, t-butoxy, or 2-chloroethoxy), a hydroxy group, a substituted or unsubstituted aryloxy group (e.g. p-chlorophenoxy or 1-naphthoxy), a acyloxy group (e.g. acetyloxy or p-cyanobenzoyloxy), a carboxyl group or an ester group thereof (e.g. ethoxycarbonyl or m-bromophenoxycarbonyl), a carbamoyl group (e.g. aminocarbonyl, t-butylaminocarbonyl or anilinocarbonyl), an acyl group (e.g. acetyl or o-nitrobenzoyl), a sulfo group , a sulfamoyl group (e.g. aminosulfonyl, t-butylaminosulfonyl or p-tolylaminosulfonyl), an amino group, an acylamino group (e.g. acetylamino or benzoylamino), a sulfonamido group (e.g. methanesulfonamido or p-toluensulfonamido), a cyano group or a nitro group. Preferred groups are a substituted or unsubstituted alkyl group having 1 to 4 carbon atoms (e.g. methyl, ethyl, isopropyl, n-butyl or trifluoromethyl), a halogen atom (chlorine, bromine, fluorine or iodine), a substituted or unsubstituted alkoxy group having 1 to 4 carbon atoms (e.g. methoxy, ethoxy, t-butoxy or 2-chloroethoxy), a cyano group and a nitro group.

Z is a group which, together with the carbons to which it is attached, forms a substituted or unsubstituted aromatic hydrocarbon ring or a substituted or unsubstituted aromatic heterocyclic ring, for example, a substituted or unsubstituted benzene ring, a substituted or unsubstituted naphthalene ring, a substituted or unsubstituted indole ring or a substituted or unsubstituted carbazole ring.

Examples of substituents for Z are those mentioned as the substituents for $R_4$ and $R_5$, but are preferably a halogen atom (chlorine, bromine, fluorine, or iodine), a sulfo group or a sulfamoyl group (e.g. aminosulfonyl) or p-tolylaminosulfonyl).

$R_1$ is preferably a hydrogen atom, a substituted or unsubstituted alkyl group having 1 to 4 carbon atoms (e.g. methyl, ethyl, isopropyl, t-butyl or trifluoromethyl) or a cyano group.

A' is preferably a substituted or unsubstituted phenyl group. Examples of substituents for A' are those as mentioned for $R_4$ and $R_5$, but are preferably a halogen atom (chlorine, bromine, fluorine or iodine), a substituted or unsubstituted alkyl group having 1 to 4 carbon atoms (e.g. methyl, ethyl, isopropyl, t-butyl or trifluoromethyl), or a substituted or unsubstituted alkoxy group having 1 to 4 carbon atoms (e.g. methoxy, ethoxy, isopropoxy, t-butoxy or 2-chloroethoxy).

$R_2$ and $R_3$ preferably each independently are a substituted or unsubstituted alkyl group having 1 to 4 carbon atoms (e.g. methyl, ethyl, isopropyl, t-butyl or trifluoromethyl) or a substituted or unsubstituted phenyl group (e.g. phenyl, p-methoxyphenyl or m-chlorophenyl).

The azo compounds of formula [I] include the compounds shown in Embodiments A through E as described in detail below.

*Embodiment A*

The azo compound may be of formula [IA]:

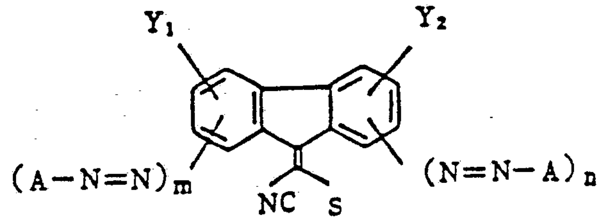

[IA]

wherein S is an alkyl group, or a substituted or unsubstituted benzene ring; and $Y_1$, $Y_2$, *n* and A are as defined in formula [I].

Preferred compounds of formula [IA] having good sensitivity and stability to heat and light are of formula [IA]—II:

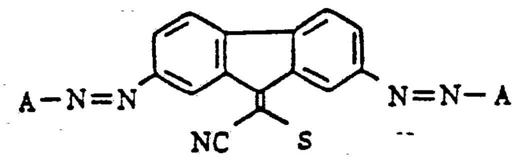

[IA]-II.

wherein A and S are as defined in formula [IA].

Specific examples of useful azo compounds of formula [IA] include, for example, those of formula:

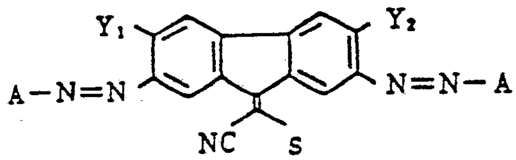

[IA]—III

wherein A, S, $Y_1$ and $Y_2$ are as defined in formula [IA], and are preferably:

| Compound No. | A | S | $Y_1$ | $Y_2$ |
|---|---|---|---|---|
| A—(1) | 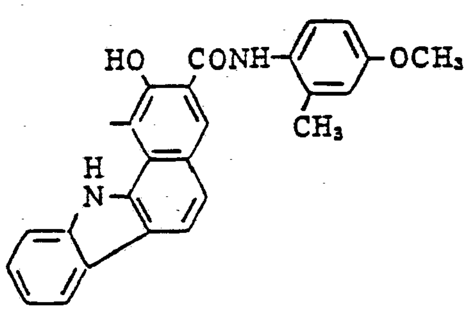 | 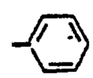 | H | H |

| | | | | |
|---|---|---|---|---|
| A—(2) | 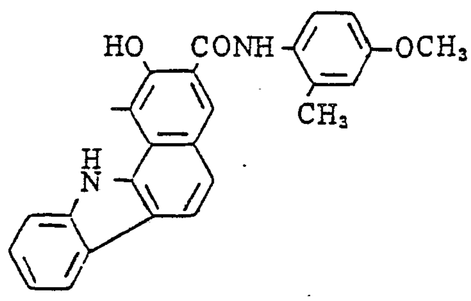 | 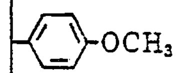 | H | H |
| A—(3) | 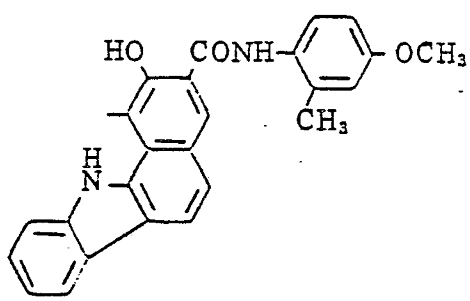 | 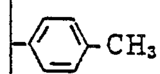 | H | H |
| A —(4) | 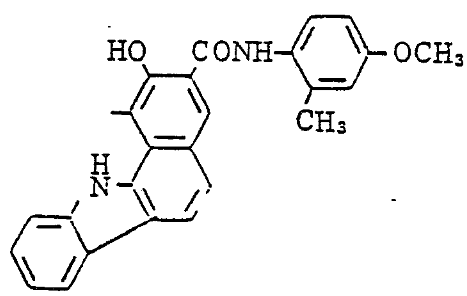 | 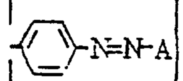 | H | H |
| A — (5) | 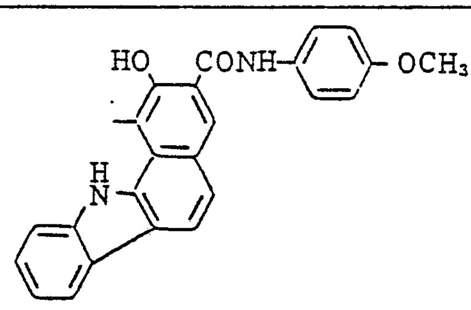 | 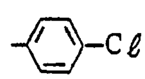 | H | H |

| | | | | |
|---|---|---|---|---|
| A —(6) | 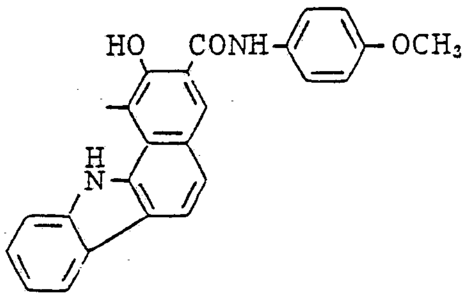 | $-OCH_3$ | H | H |
| A —(7) | 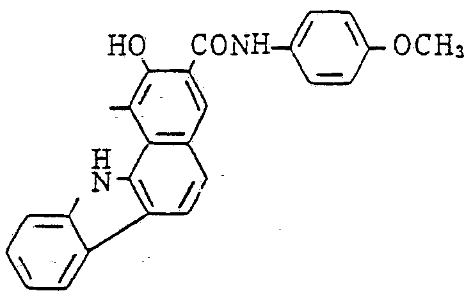 | $-CH_3$ | H | H |
| A —(8) | 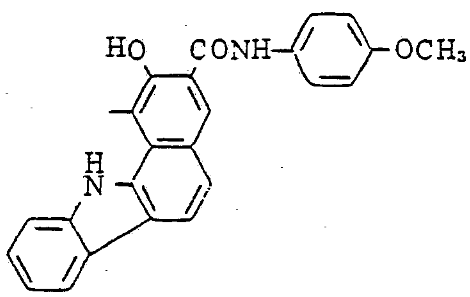 | $-C_3H_7$ | H | H |
| A —(9) | 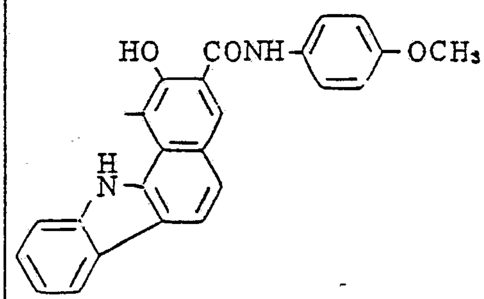 | 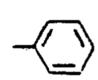 | H | H |

| | | | | |
|---|---|---|---|---|
| A − (10) | 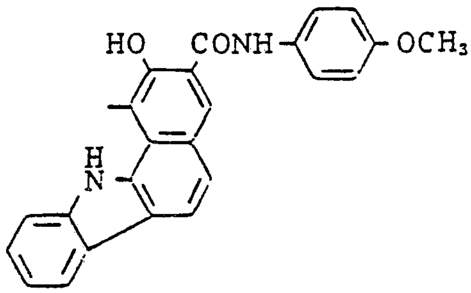 | $-OCH_3$ | H | H |
| A − (11) | 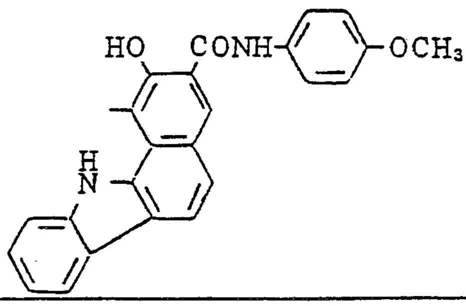 | $-C_3H_7$ | H | H |
| A − (12) | 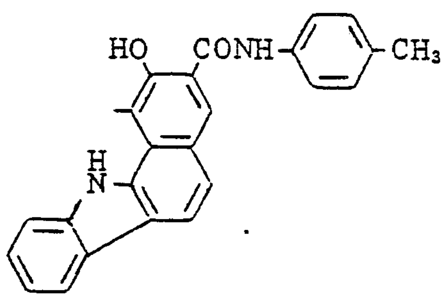 | 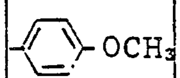 | H | H |
| A − (13) | 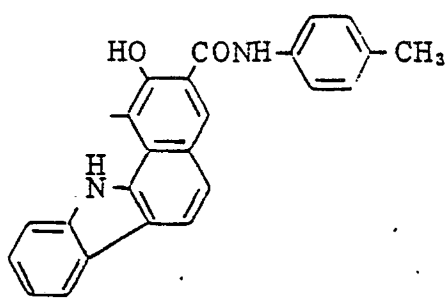 | $-C_2H_5$ | H | H |
| A − (14) | 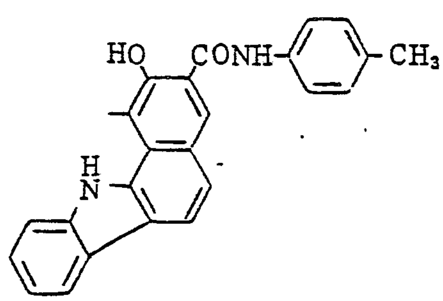 | $-OC_2H_5$ | H | H |

| | | | | |
|---|---|---|---|---|
| A－(15) | 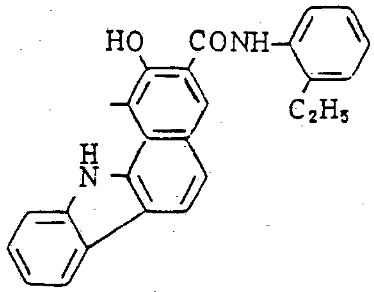 | 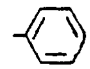 | H | H |
| A－(16) | 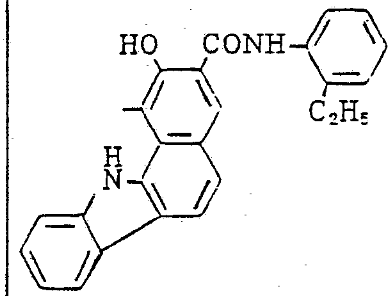 | $-C_3H_7$ | H | H |
| A－(17) | 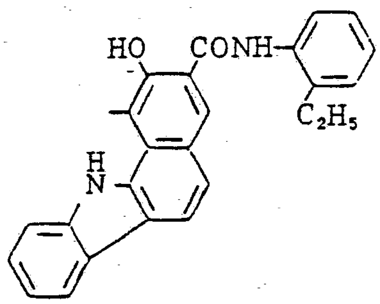 | $-OCH_3$ | H | H |
| A－(18) | 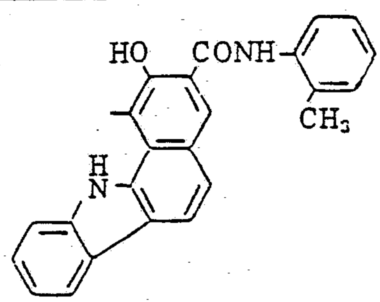 | 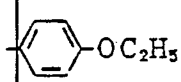 | H | H |
| A－(19) | 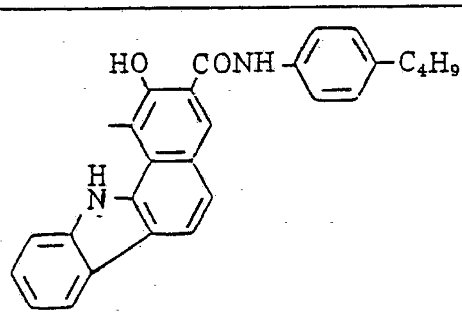 | $-C_3H_7$ | H | H |

| | | | | |
|---|---|---|---|---|
| A − (20) | 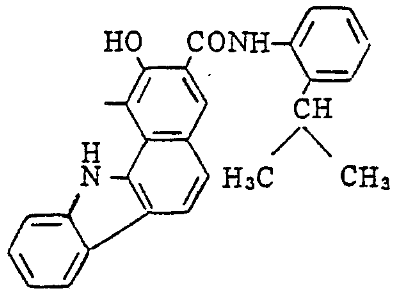 | $-C_2H_5$ | H | H |
| A − (21) | 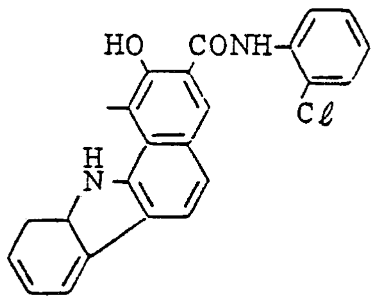 | 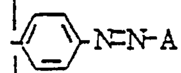 | Cℓ | Cℓ |
| A − (22) | 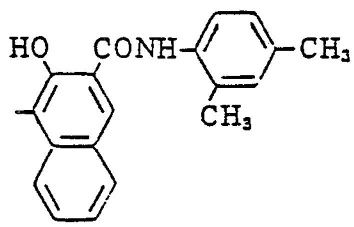 | 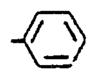 | H | H |
| A − (23) | 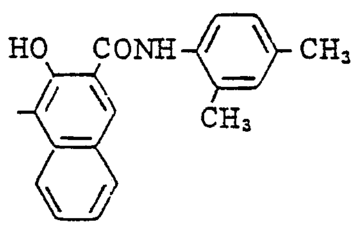 | $-C_3H_7$ | H | H |

| | | | | |
|---|---|---|---|---|
| A − (24) | 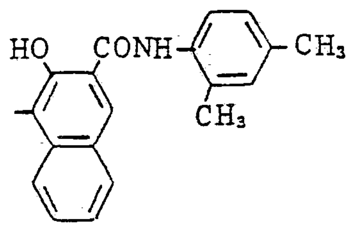 | $-OCH_3$ | H | H |
| A − (25) | 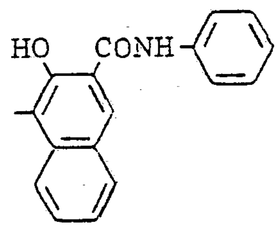 | 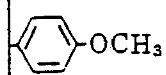 | H | H |
| A − (26) | 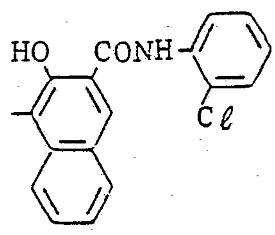 | 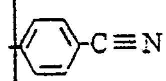 | H | H |
| A −(27) | 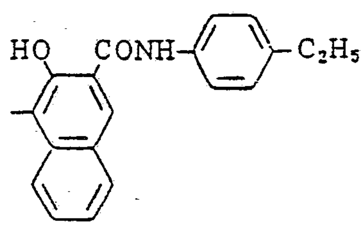 | $-CH_3$ | H | Cℓ |

| | | | | |
|---|---|---|---|---|
| A — (28) | 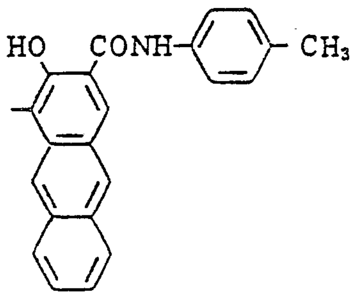 | 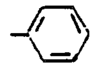 | Cℓ | Cℓ |
| A — (29) | 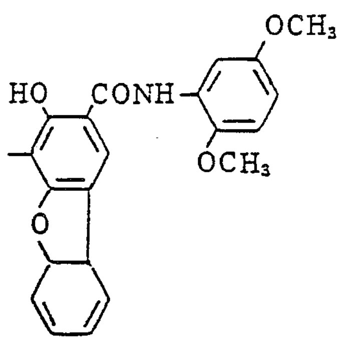 | 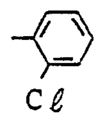 | H | H |
| A — (30) | 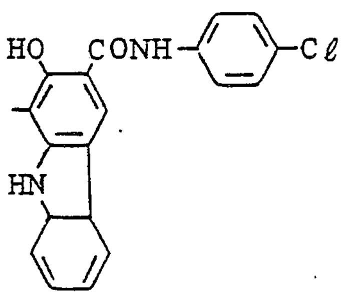 | $-OCH_3$ | H | H |
| A — (31) | 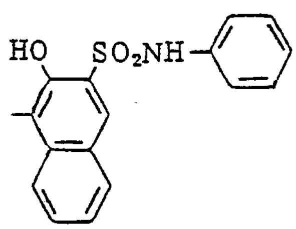 | 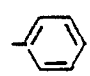 | H | H |

| | | | | |
|---|---|---|---|---|
| A — (32) | 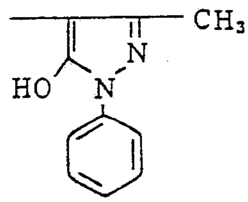 | 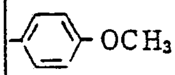 | H | H |
| A — (33) | 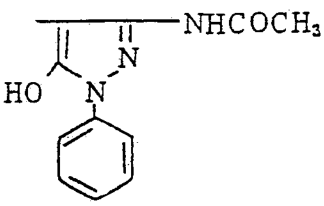 | $-C_3H_7$ | H | H |
| A — (34) | 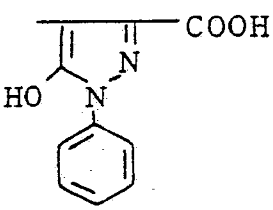 | 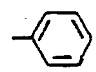 | H | H |
| A — (35) | 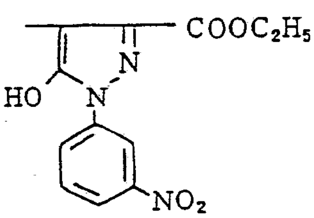 | 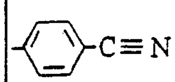 | CN | CN |

| | | | | |
|---|---|---|---|---|
| A — (36) | 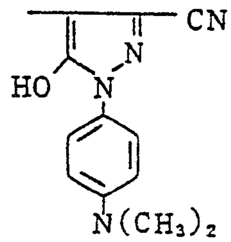 | 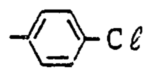 | H | H |
| A — (37) | 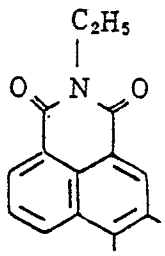 | $-C_2H_5$ | H | H |
| A — (38) | 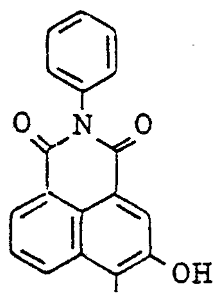 | $-C_3H_7$ | $CH_3$ | $CH_3$ |
| A — (39) | 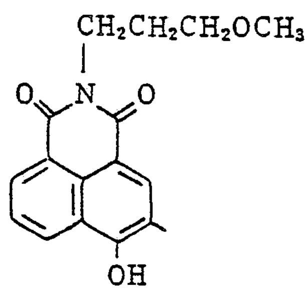 | 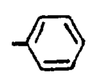 | H | H |

| | | | | |
|---|---|---|---|---|
| A — (40) | 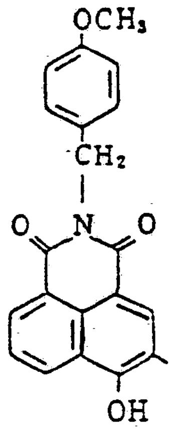 | 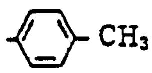 | H | H |

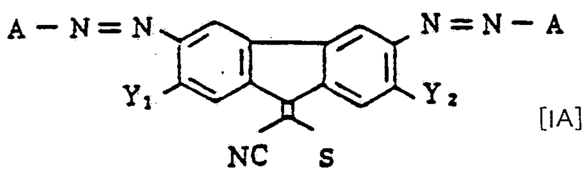

[IA] — IV

| Compound No. | A | S | $Y_1$ | $Y_2$ |
|---|---|---|---|---|
| A — (41) | 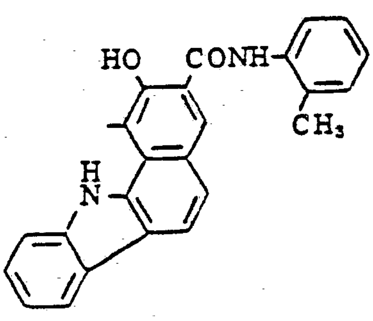 | 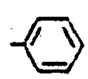 | H | H |

| | | | | |
|---|---|---|---|---|
| A — (42) | 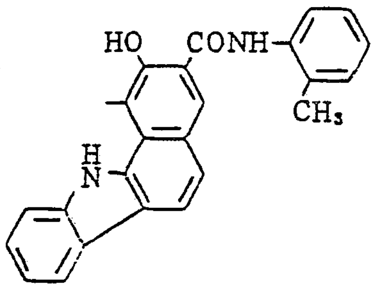 | 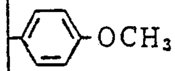 | H | H |
| A — (43) | 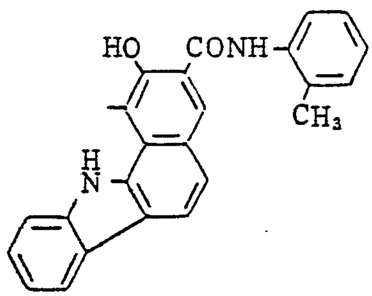 | 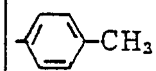 | H | H |
| A — (44) | 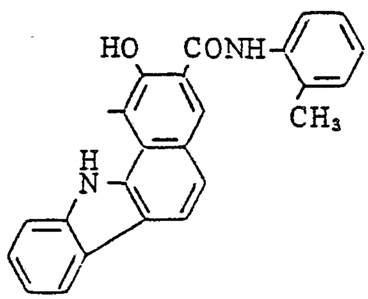 | 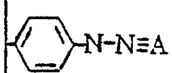 | H | H |
| A — (45) | 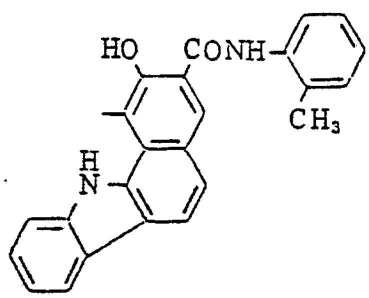 | 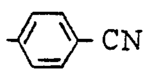 | H | H |

| | | | | |
|---|---|---|---|---|
| A − (46) | 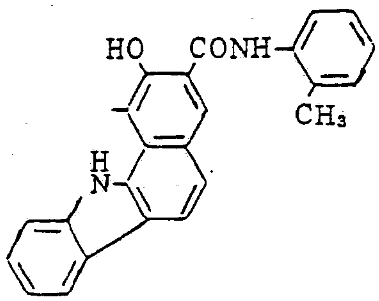 | 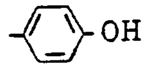 | H | H |
| A − (47) | 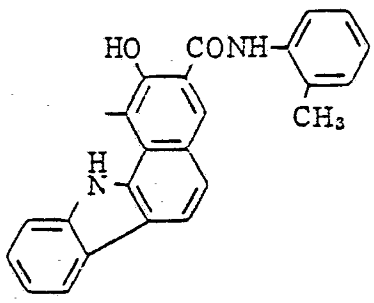 | 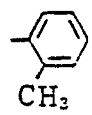 | H | H |
| A − (48) | 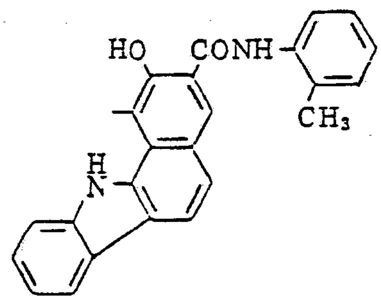 | 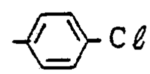 | H | H |
| A − (49) | 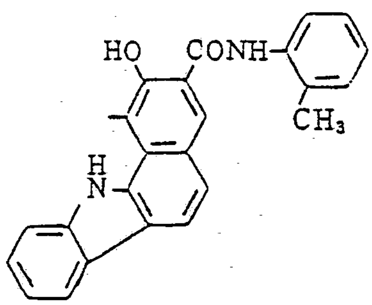 | 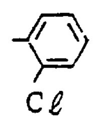 | H | H |

| | | | | |
|---|---|---|---|---|
| A — (50) | 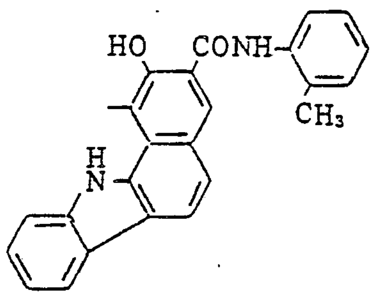 | 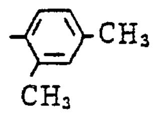 | H | H |
| A — (51) | 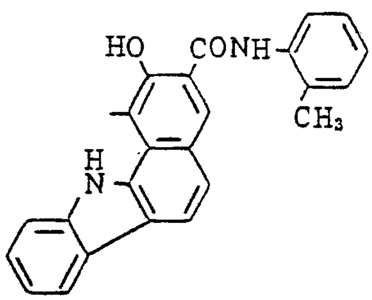 | 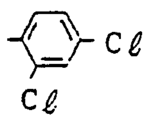 | Cℓ | Cℓ |
| A — (52) | 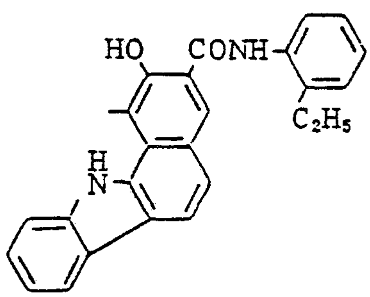 | $-CH_3$ | Br | CN |
| A — (53) | 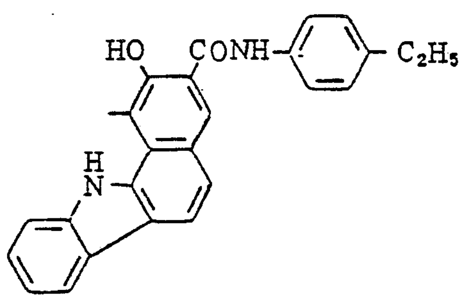 | $-C_2H_5$ | H | H |

| | | | | |
|---|---|---|---|---|
| A — (54) | 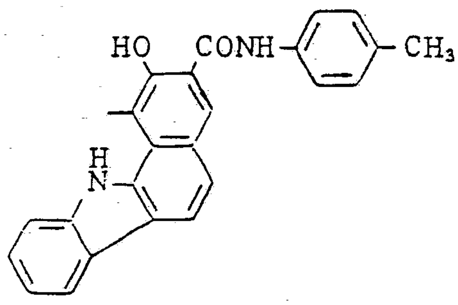 | $-C_3H_7$ | H | H |
| A — (55) | 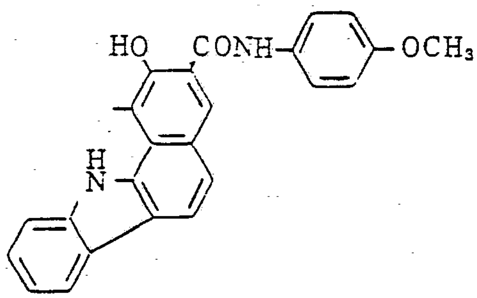 | 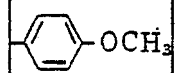 | H | H |
| A — (56) | 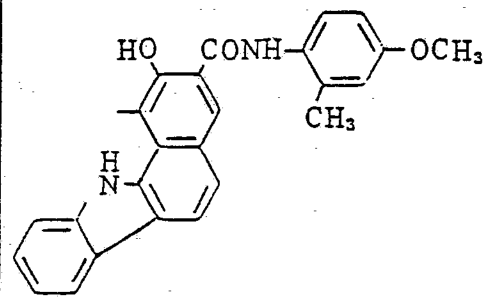 | 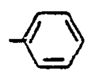 | H | H |
| A — (57) | 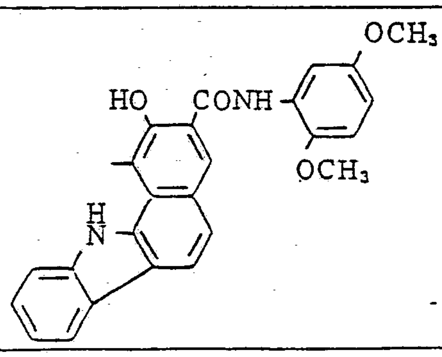 | 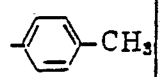 | H | H |

| | | | | |
|---|---|---|---|---|
| A − (58) | 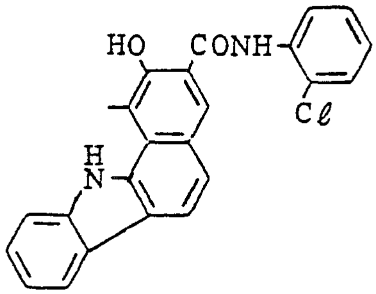 | $-C_3H_7$ | H | H |
| A − (59) | 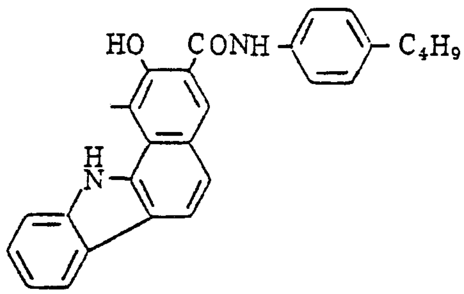 | $-OCH_3$ | H | H |
| A − (60) | 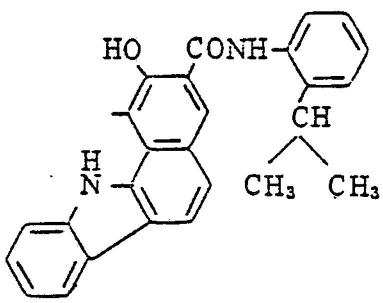 | $-CH_3$ | H | H |
| A − (61) | 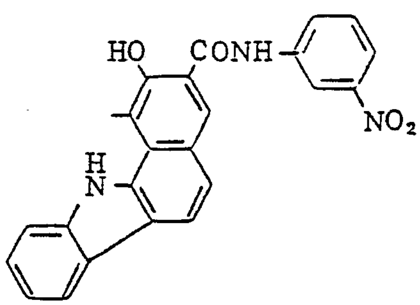 | 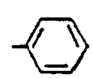 | CN | CN |

| | | | | |
|---|---|---|---|---|
| A — (62) | 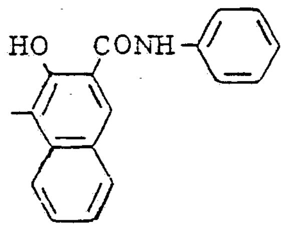 | 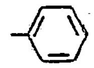 | H | H |
| A — (63) | 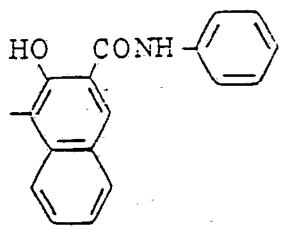 | $-CH_3$ | H | H |
| A — (64) | 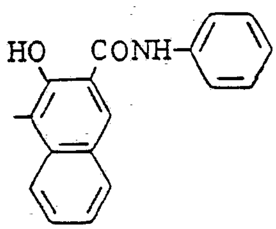 | $-C_3H_7$ | H | H |
| A — (65) | 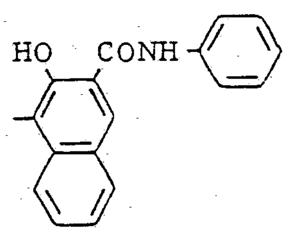 | $-OCH_3$ | H | H |

| | | | | |
|---|---|---|---|---|
| A — (66) | 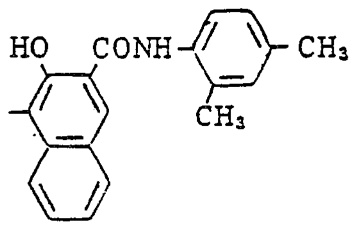 | 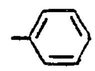 | H | H |
| A — (67) | 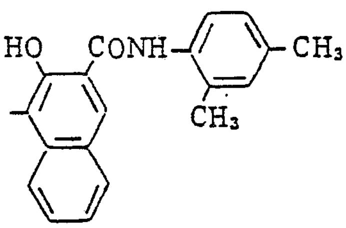 | $-CH_3$ | H | H |
| A — (68) | 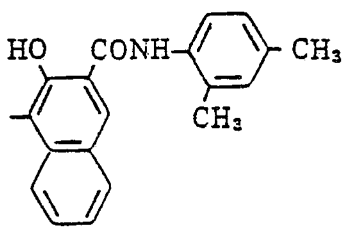 | $-C_3H_7$ | H | H |
| A — (69) | 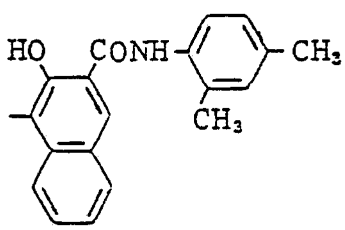 | $-OCH_3$ | H | H |

| | | | | |
|---|---|---|---|---|
| A − (70) | 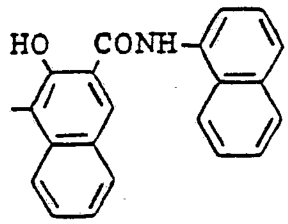 | 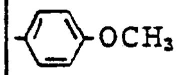 | H | H |
| A − (71) | 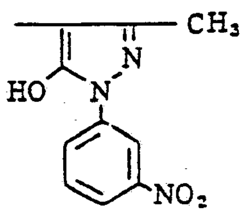 | 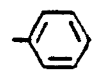 | H | H |

A − (72)

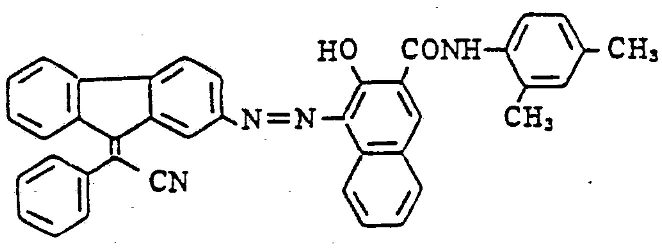

A − (72)′

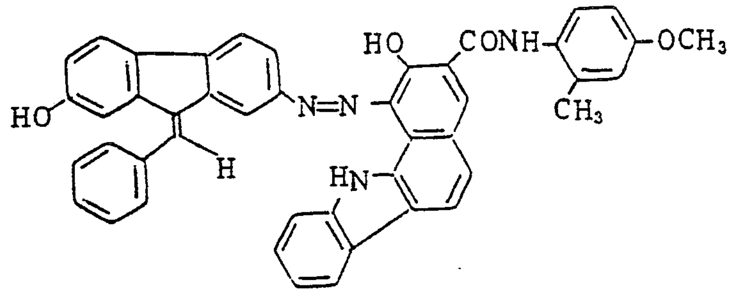

A − (72)″

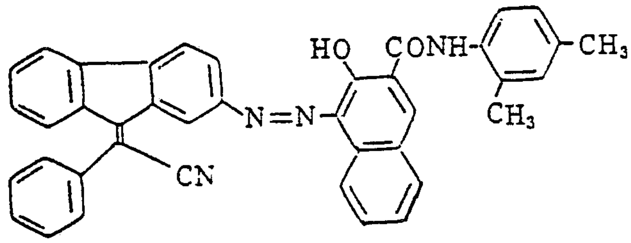

A − (73)

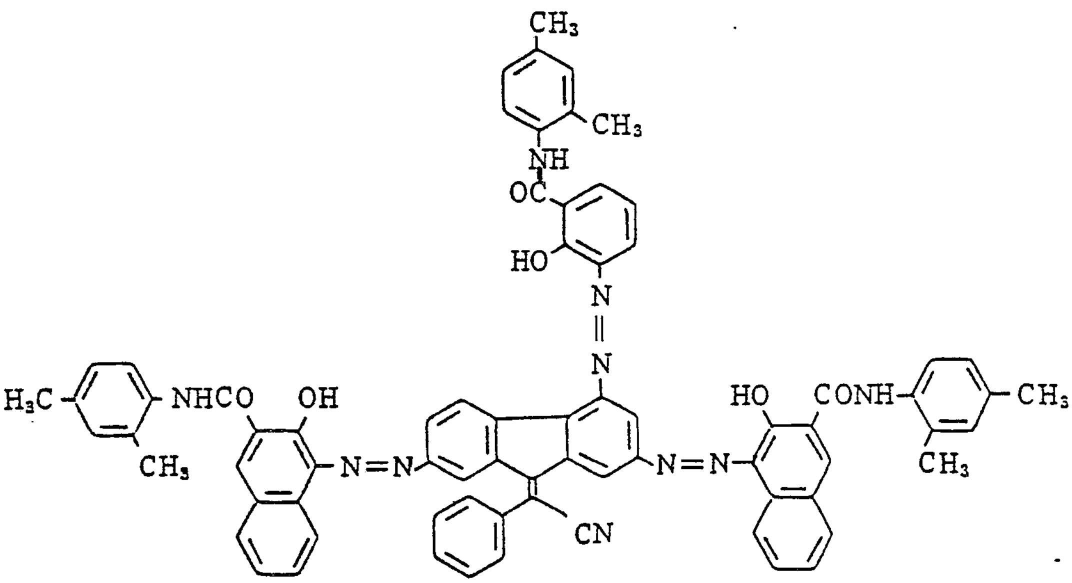

The azo compounds as described above can be synthesized easily according to a known method. A typical example is shown below.

Synthesis Example 1

[Synthesis of compound of formula A—(1)]

The synthesis route is schematically shown below:

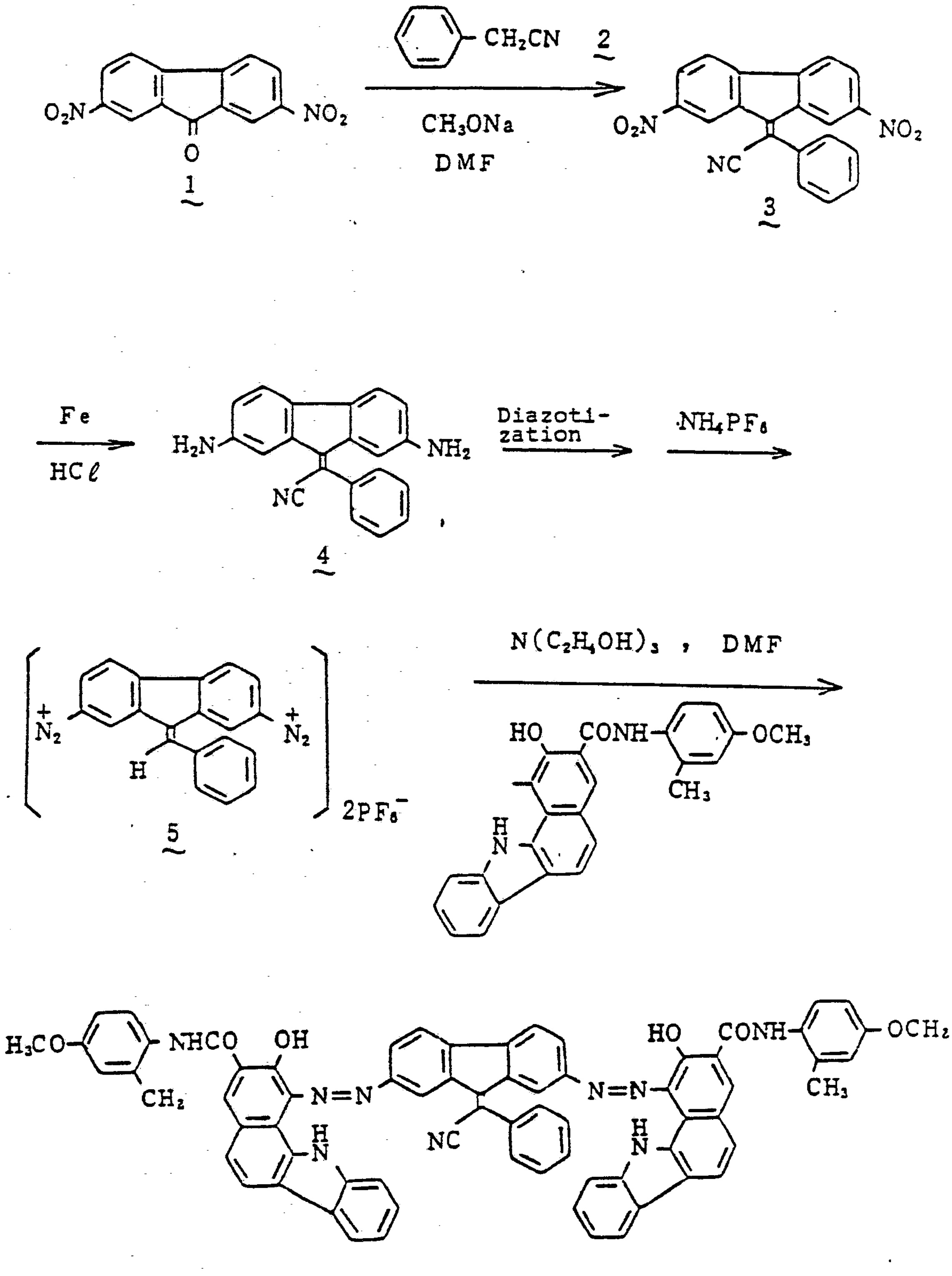


A — (1)

2,7-Dinitrofluorenone *1* (produced by Tokyo Kasei K.K.) was reacted with benzylcyanide *2* to produce a dinitro derivative *3*, which was then reduced with iron to form a diamino derivative *4*. The diamino derivative *4* (30.9 g, 0.1 mole) was dispersed by adding it to a mixture of 1 liter of conc. HCl and 1 liter of water and a solution of 13.8 g (0.2 mole) of sodium nitrite dissolved in 0.1 liter of water was added dropwise at 5°C under ice-cooling. After completion of the addition, the reaction mixture was filtered, and 1 liter of an aqueous 50% ammonium hexafluorophosphate solution was added to the filtrate. The resultant precipitate was recovered by filtration, washed with water and thoroughly dried. The salt obtained was dissolved in 1.5 liter of N,N-dimethylformamide (DMF) to provide a tetrazonium salt solution to be used in the subsequent reaction.

As the next step, 79.3 g (0.2 mole) of 2-hydroxy-3-(4-methoxy-2-methylphenylcarbamoyl)-benzo[a]-carbazole (Naphthol AS-SR, produced by Hoechst AG) and 60 g of triethanolamine were dissolved in 4 liters of N,N-dimethylformamide, and the tetrazonium salt solution as prepared above was added dropwise under ice-cooling to the resultant solution, followed further by stirring for 2 hours to allow the reaction to proceed. The crystals formed were recovered by filtration, and they were washed twice with 5 liters of N,N-dimethylformamide and twice with 5 liters of acetone, followed by drying, to obtain 37.1 g of the desired bisazo compound A—(1) (33%). From the analytical results of m.p. 300°C or higher, FD-MS spectrum which indicates a peak of $M^+$ at m/Z 1124, and the elemental analysis of C = 75.81%, N = 11.17%, H = 4.50% (Calcd. values, C = 75.85%, N= 11.21%, H = 4.39%), it was confirmed that the desired substance was synthesized.

*Embodiment B*

The compound may be of formula [IB]:

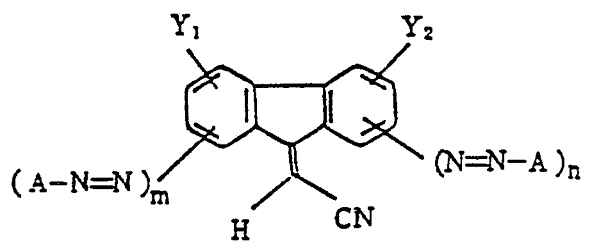

[IB]

wherein $Y_1$, $Y_2$, *m*, *n* and A are as defined in formula [I].

The detailed description for the preferred groups $Y_1$, $Y_2$ and A as given for embodiment [IA] are also applicable for this embodiment.

Preferred compounds having good sensitivity and stability to heat and light are of formula [IB]—II:

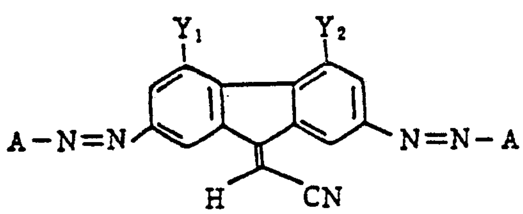

[IB]-II

wherein $Y_1$, $Y_2$ and A are as defined above.

Examples of useful azo compounds of formula [IB] include, for example, those of formula:

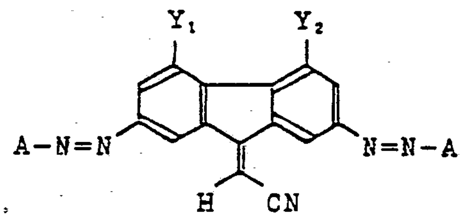

[IB]-II

| Compound No. | $Y_1$ | $Y_2$ | A |
|---|---|---|---|
| B – (1) | H | H | 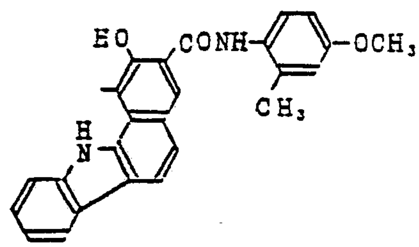 |
| B – (2) | H | H | 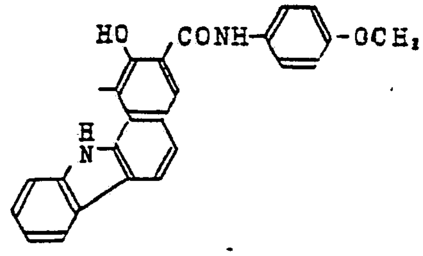 |

| | | | |
|---|---|---|---|
| B —(3) | H | H | 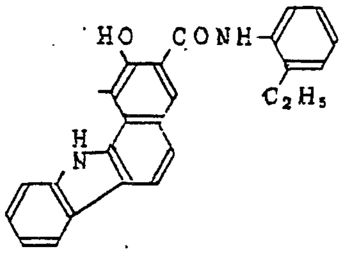 |
| B —(4) | H | H | 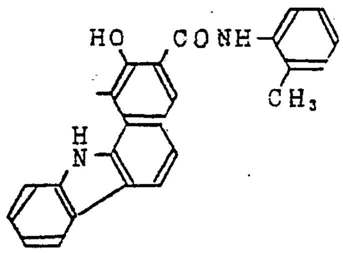 |
| B —(5) | H | H | 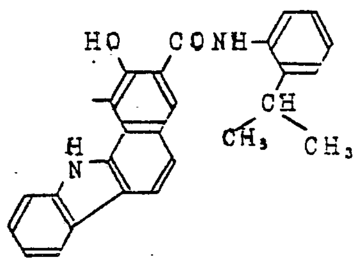 |
| B —(6) | H | H | 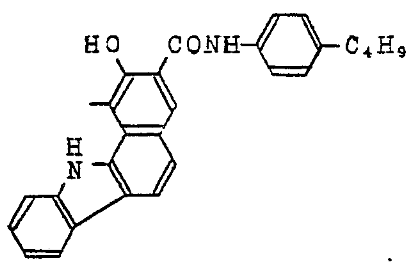 |
| B —(7) | H | H | 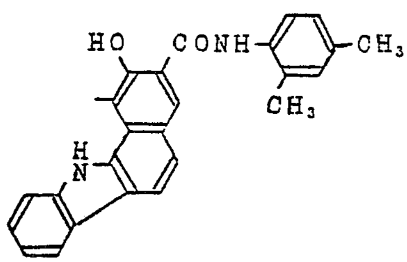 |

| | | | |
|---|---|---|---|
| B — (8) | H | H | 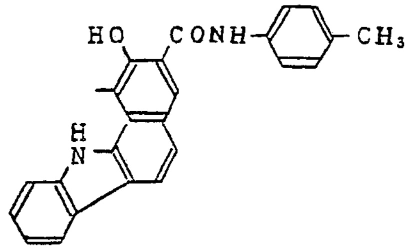 |
| B — (9) | H | H | 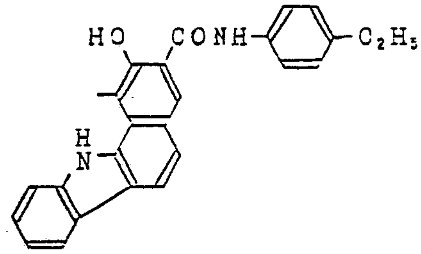 |
| B — (10) | H | H | 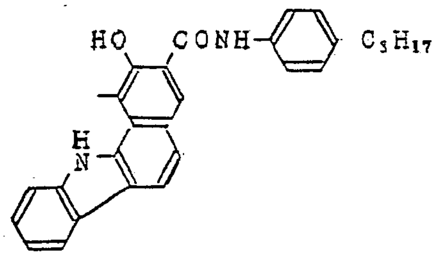 |
| B — (11) | H | H | 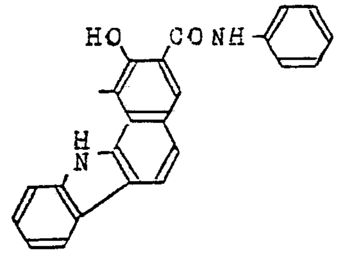 |
| B — (12) | H | H | 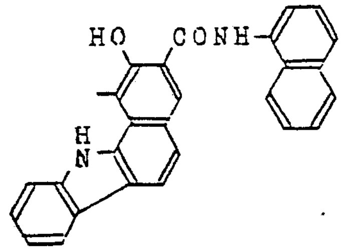 |

| | | | |
|---|---|---|---|
| B—(13) | H | H | 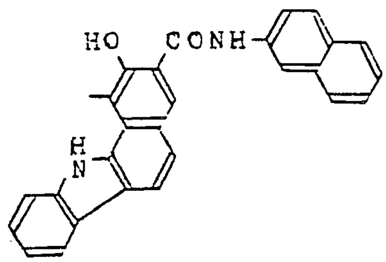 |
| 3—(14) | H | H | 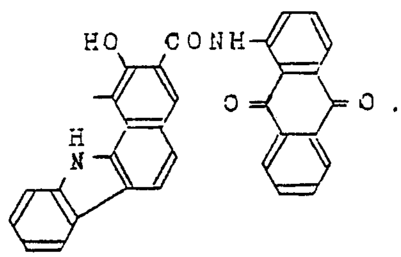 |
| B—(15) | H | H | 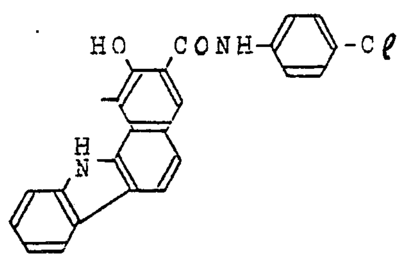 |
| B—(16) | H | H | 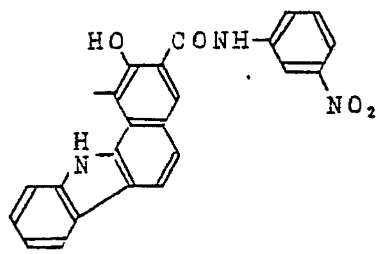 |
| B—(17) | H | H | 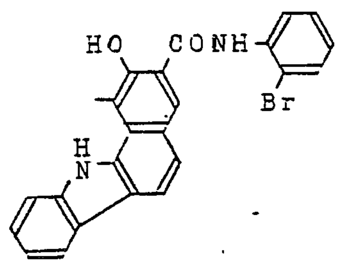 |

| | | | |
|---|---|---|---|
| B-(18) | H | H | 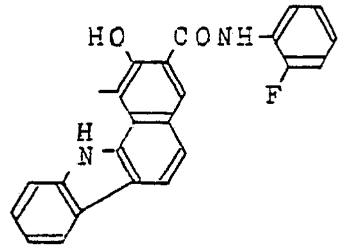 |
| B-(19) | H | H | 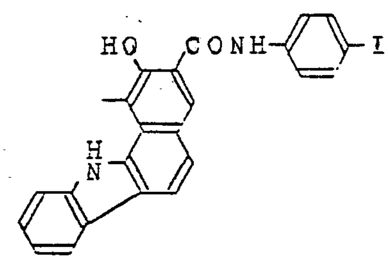 |
| B-(20) | H | H | 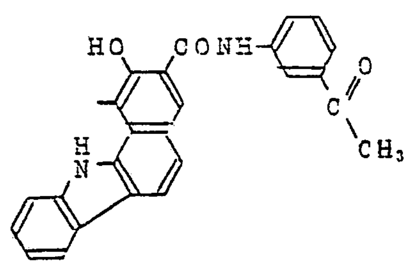 |
| B-(21) | H | H | 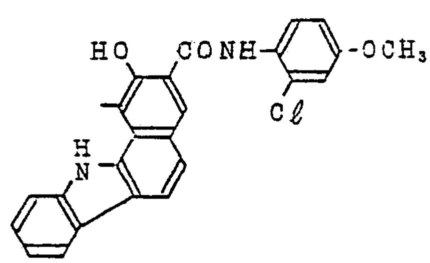 |
| B-(22) | H | H | 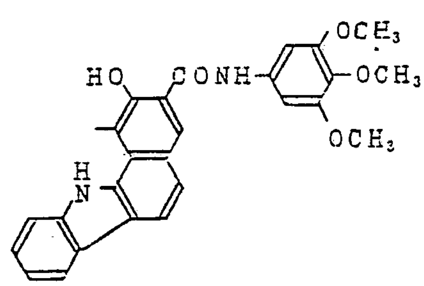 |

| | | | |
|---|---|---|---|
| B — (23) | H | $CH_3$ | 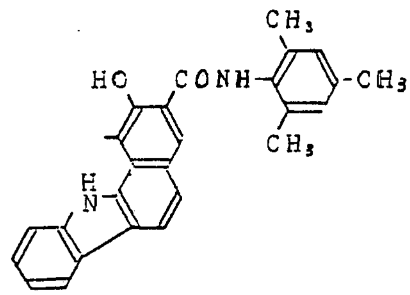 |
| B — (24) | $OCH_3$ | H | 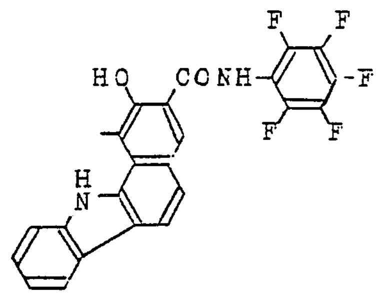 |
| B — (25) | H | Cℓ | 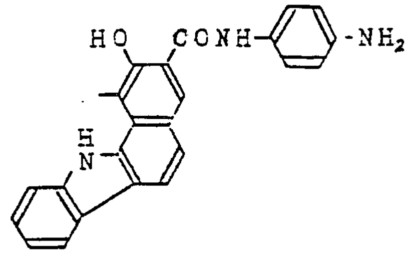 |
| B — (26) | CN | H | 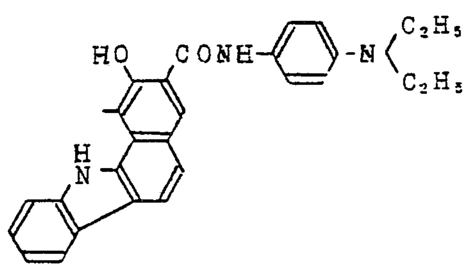 |
| B — (27) | H | H | 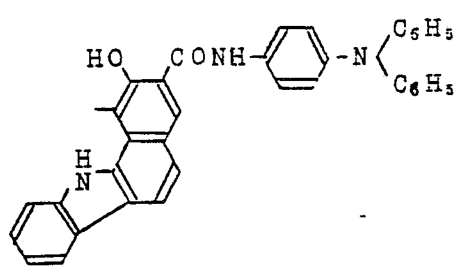 |

| | | | |
|---|---|---|---|
| B—(28) | H | H | 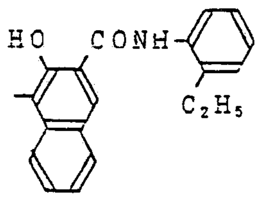 |
| B—(29) | H | H | 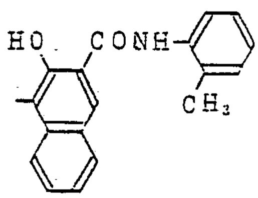 |
| B—(30) | H | H | 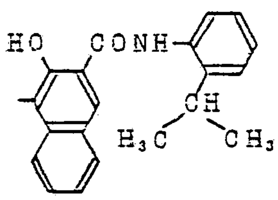 |
| B—(31) | H | H | 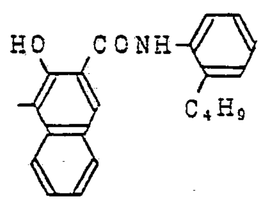 |
| B—(32) | H | H | 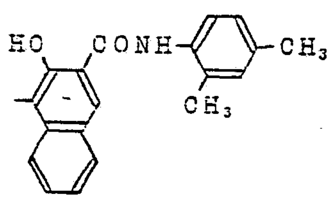 |
| B—(33) | H | H | 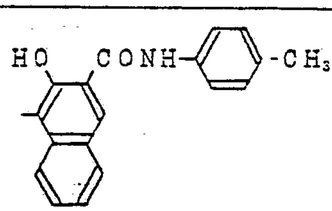 |

| | | | |
|---|---|---|---|
| B — (34) | H | H | 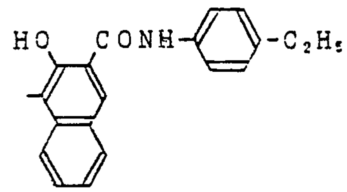 |
| B — (35) | H | H | 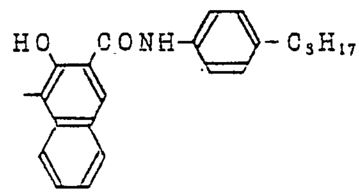 |
| B — (36) | H | H | 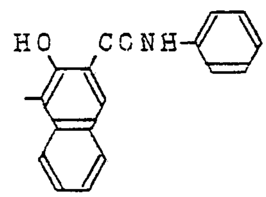 |
| B — (37) | H | H | 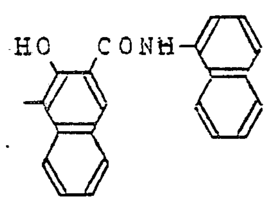 |
| B — (38) | H | H | 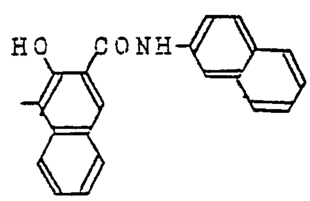 |
| B — (39) | H | H | 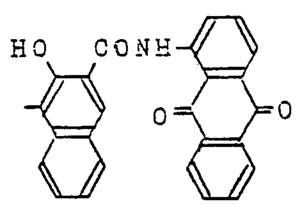 |

| | | | |
|---|---|---|---|
| B—(40) | H | H | 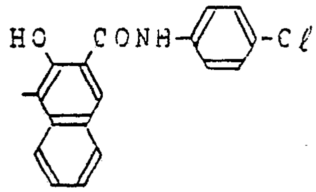 |
| B—(41) | H | H | 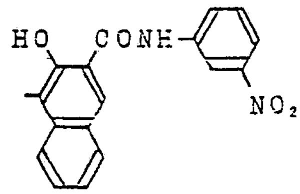 |
| B—(42) | H | H | 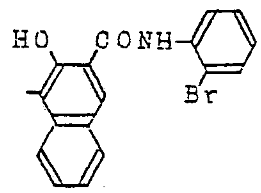 |
| B—(43) | H | H | 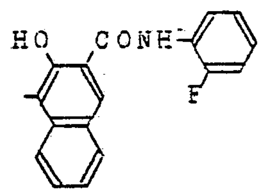 |
| B—(44) | H | H | 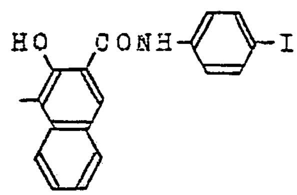 |
| B—(45) | H | H | 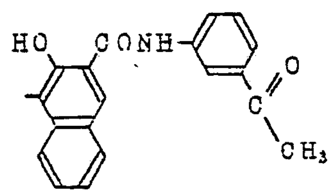 |
| B—(46) | H | H | 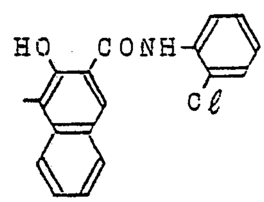 |

| | | | |
|---|---|---|---|
| B−(47) | H | H | 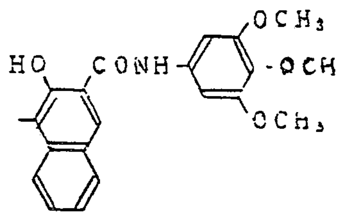 |
| B−(48) | $CH_3$ | H | 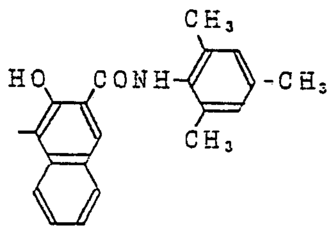 |
| B−(49) | H | $OCH_3$ | 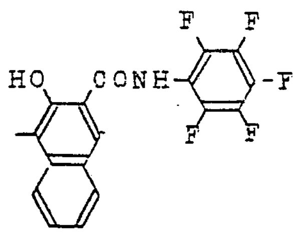 |
| B−(50) | Br | Br | 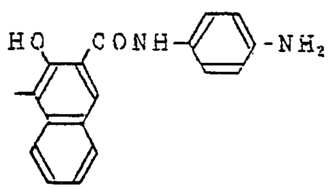 |
| B−(51) | CN | Cℓ | 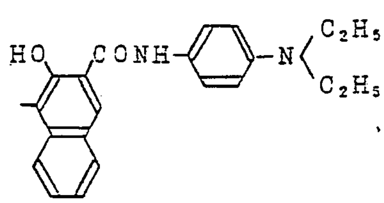 |
| B−(52) | OH | H | 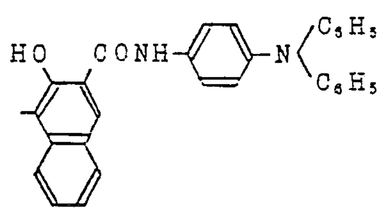 |

| | | | |
|---|---|---|---|
| B－(53) | H | H | 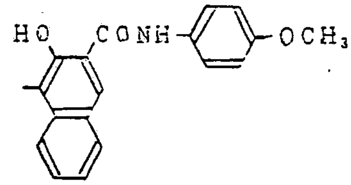 |
| B－(54) | H | H | 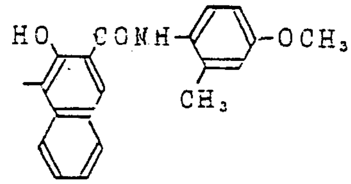 |
| B－(55) | H | H | 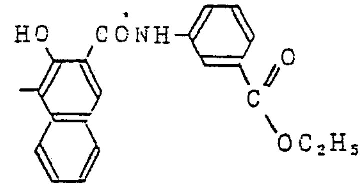 |
| B－(56) | H | H | 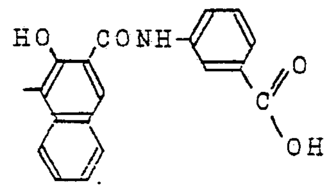 |
| B－(57) | H | H | 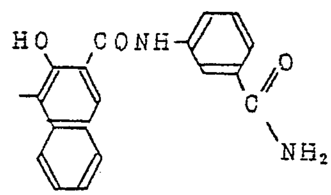 |
| B－(58) | H | H | 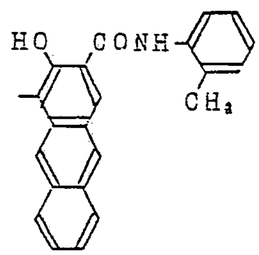 |

| | | | |
|---|---|---|---|
| B—(59) | H | H | 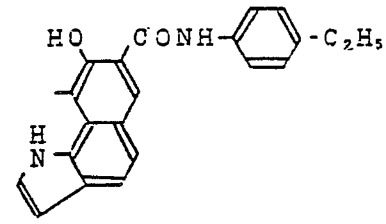 |
| B—(60) | H | H | 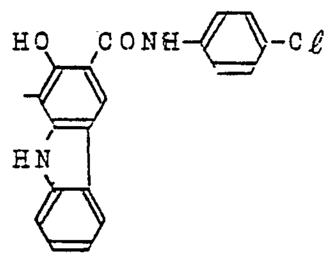 |
| B—(61) | H | H | 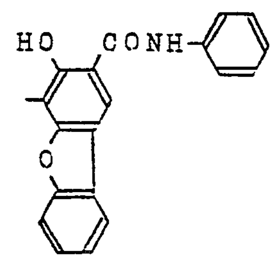 |
| B—(62) | H | H | 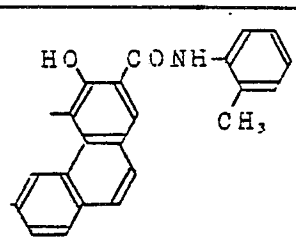 |
| B—(63) | H | H | 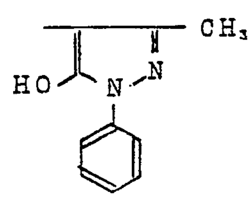 |
| B—(64) | H | H | 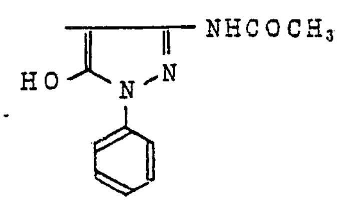 |

| | | | |
|---|---|---|---|
| B—(65) | Cℓ | Cℓ | 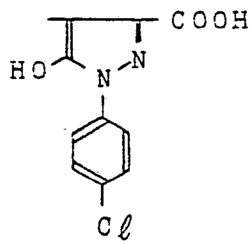 |
| B—(66) | CN | $CH_3$ | 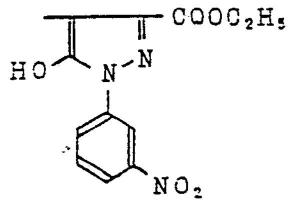 |
| B—(67) | OH | H | 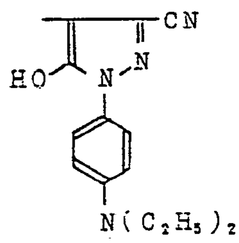 |
| B—(68) | H | H | 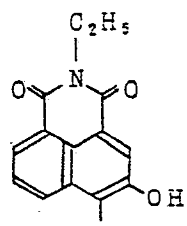 |
| B—(69) | H | H | 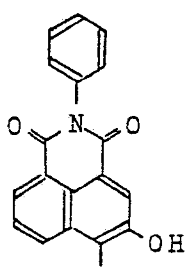 |

| | | | |
|---|---|---|---|
| B—(70) | H | H | 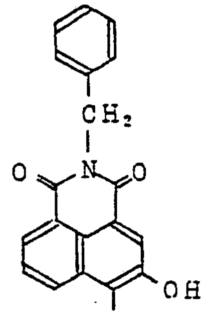 |
| B—(71) | H | H | 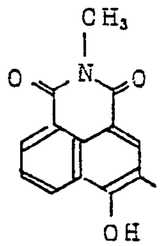 |
| B—(72) | H | H | 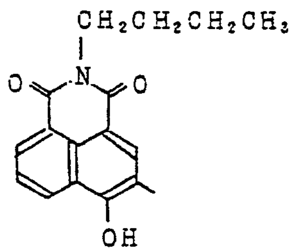 |
| B—(73) | H | H | 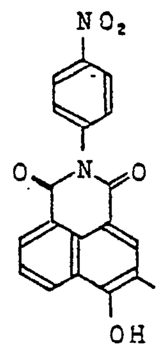 |

| | | | |
|---|---|---|---|
| B—(74) | H | H | 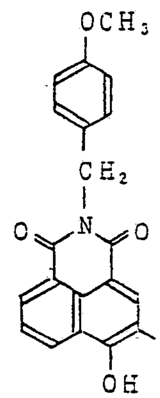 |
| B—(75) | H | H | 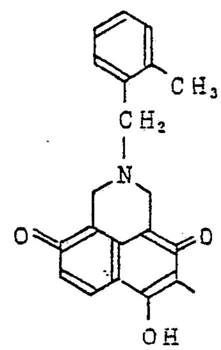 |
| B—(76) | H | H | 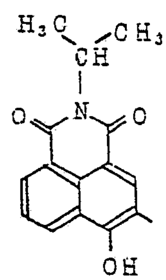 |
| B—(77) | H | H | 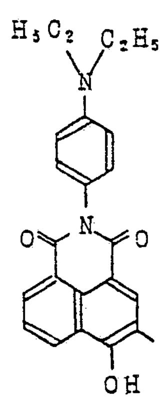 |

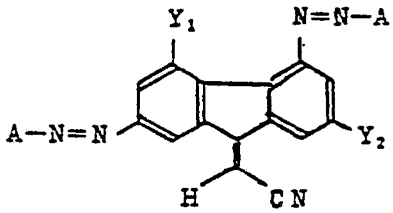

[IB]-III

| Compound No. | $Y_1$ | $Y_2$ | A |
|---|---|---|---|
| B-(78) | H | H | 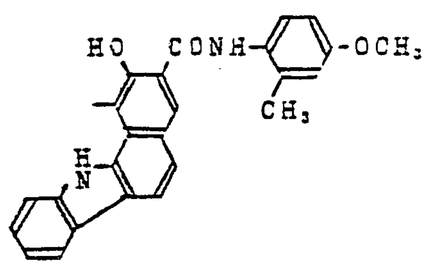 |
| B-(79) | H | H | 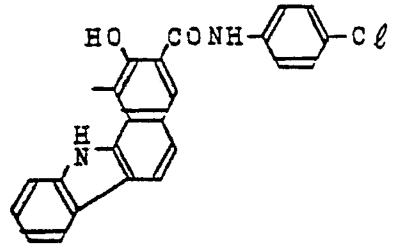 |
| B-(80) | H | H | 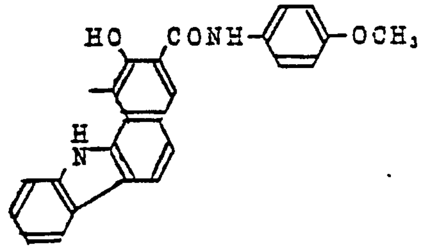 |
| B-(81) | H | H | 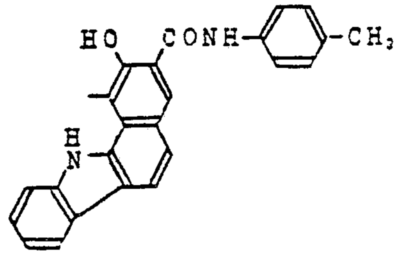 |

| | | | |
|---|---|---|---|
| B—(82) | $CH_3$ | H | 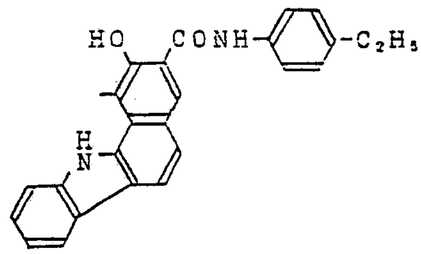 |
| B—(83) | OH | H | 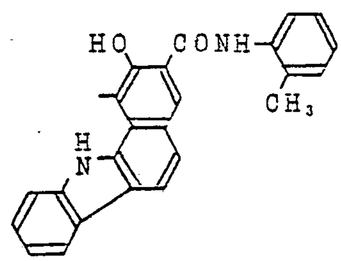 |
| B—(84) | H | H | 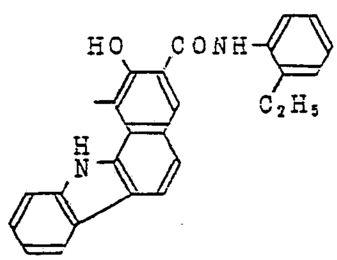 |
| B—(85) | H | H | 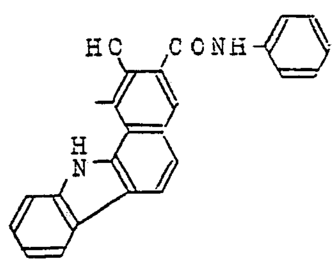 |
| B—(86) | H | H | 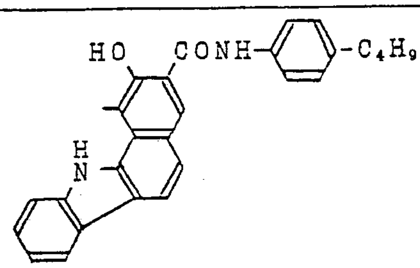 |

| | | | |
|---|---|---|---|
| B-(87) | H | H | 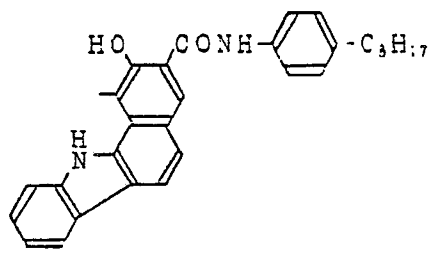 |
| B-(88) | H | H | 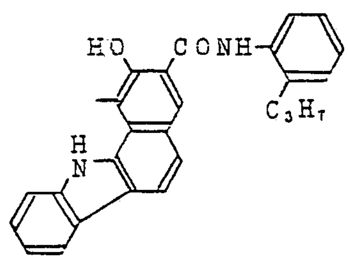 |
| B-(89) | H | CN | 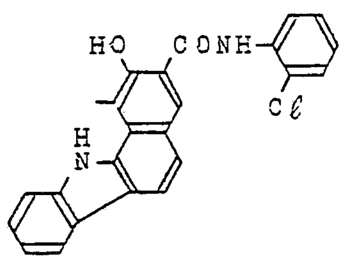 |
| B-(90) | $OCH_3$ | H | 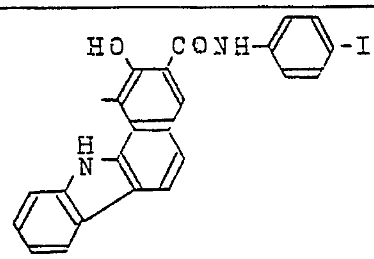 |
| B-(91) | H | H | 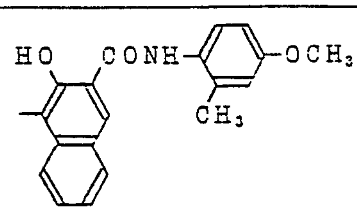 |
| B-(92) | H | H | 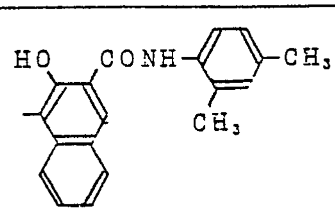 |

| | | | |
|---|---|---|---|
| B-(93) | H | H | 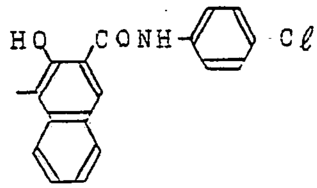 |
| B-(94) | H | H | 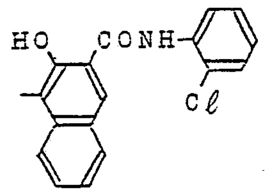 |
| B-(95) | H | H | 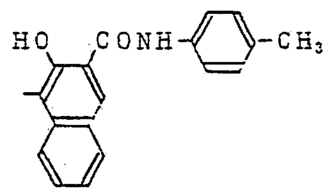 |
| B-(96) | H | H | 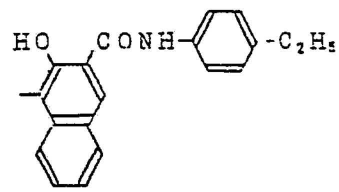 |
| B-(97) | H | H | 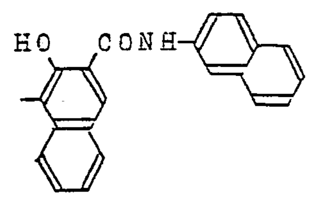 |
| B-(98) | H | H | 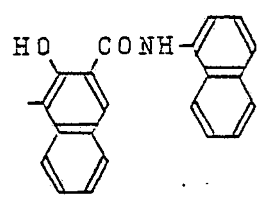 |
| B-(99) | $CH_3$ | H | 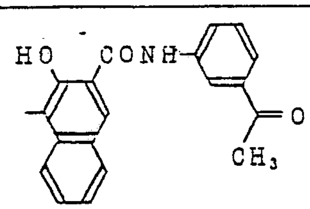 |

| | | | |
|---|---|---|---|
| B — (100) | OH | H | 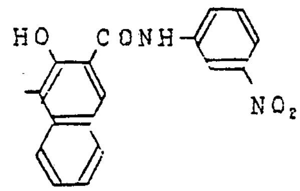 |
| B — (101) | H | H | 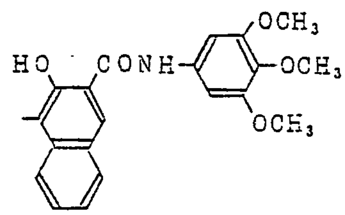 |
| B — (102) | H | $CH_3$ | 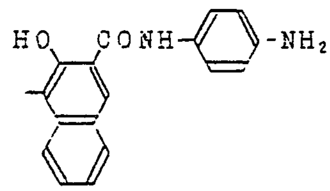 |
| B — (103) | H | H | 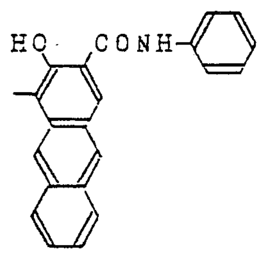 |
| B — (104) | H | H | 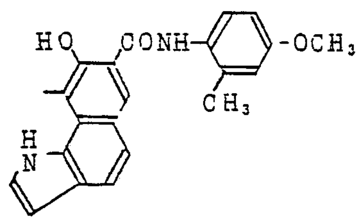 |
| B — (105) | H | H | 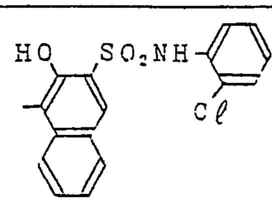 |

| | | | |
|---|---|---|---|
| B-(106) | H | H | 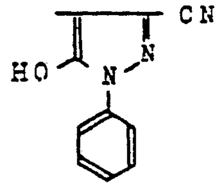 |
| B-(107) | H | H | 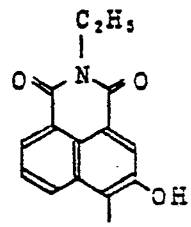 |
| B-(108) | H | H | 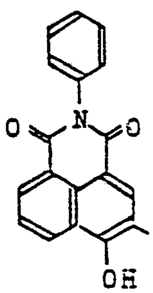 |

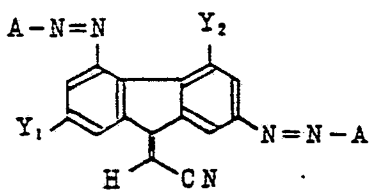

[I B]-IV

| Compound No. | $Y_1$ | $Y_2$ | A |
|---|---|---|---|
| B-(109) | H | H | 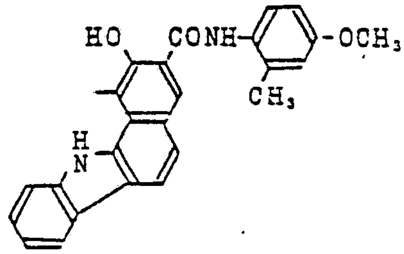 |

| | | | |
|---|---|---|---|
| B－(110) | H | H | 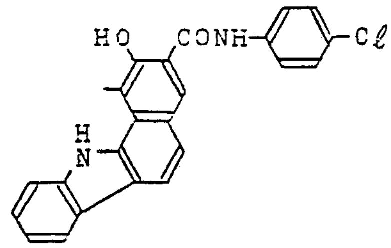 |
| B－(111) | H | H | 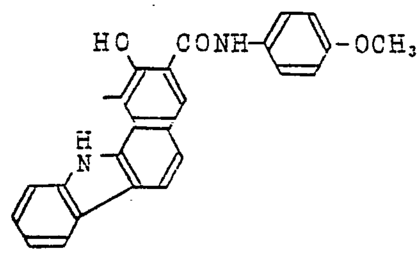 |
| B－(112) | $CH_3$ | H | 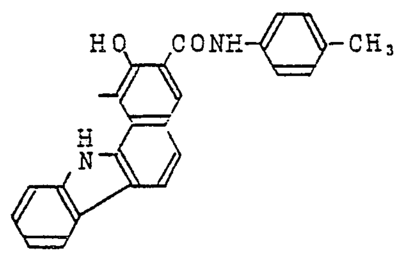 |
| B－(113) | $OCH_2$ | H | 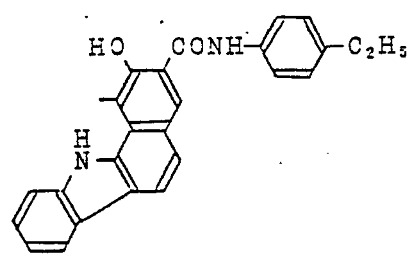 |
| B－(114) | $C_3H_7$ | H | 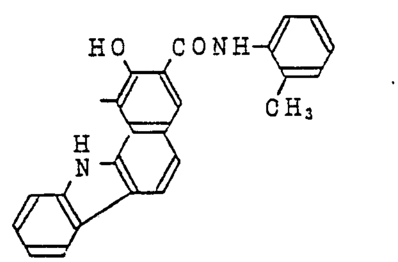 |

| | | | |
|---|---|---|---|
| B—(115) | CN | H | 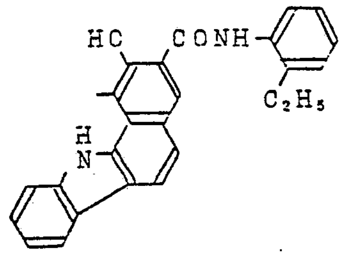 |
| B—(116) | Cℓ | H | 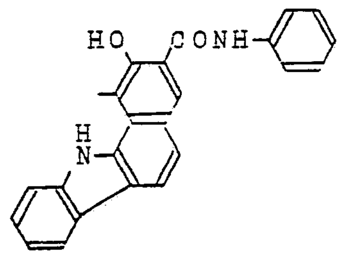 |
| B—(117) | Br | H | 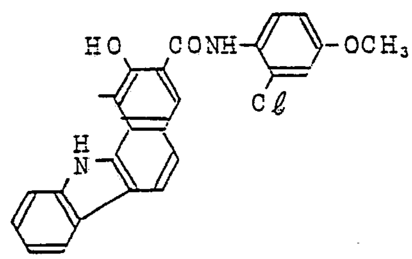 |
| B—(118) | I | H | 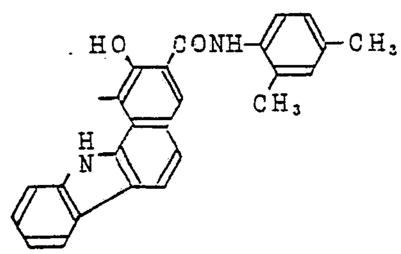 |
| B—(119) | OH | H | 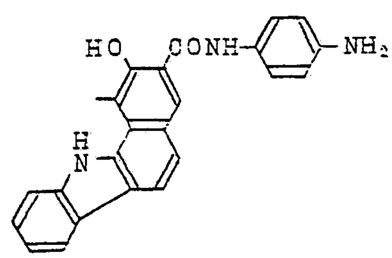 |

| | | | |
|---|---|---|---|
| B — (120) | H | $CH_3$ | 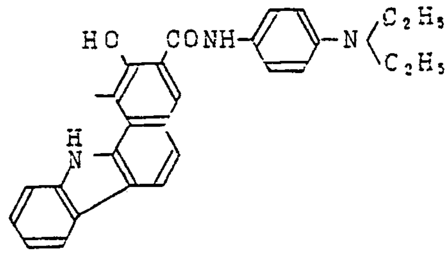 |
| B — (121) | H | H | 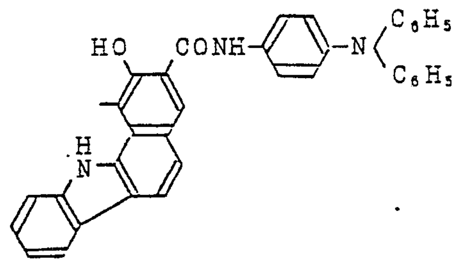 |
| B — (122) | H | H | 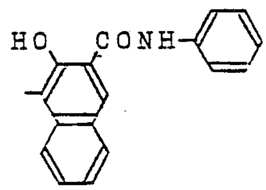 |
| B — (123) | H | H | 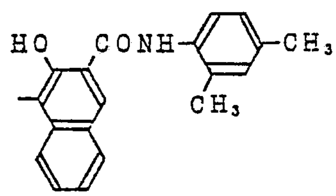 |
| B — (124) | H | H | 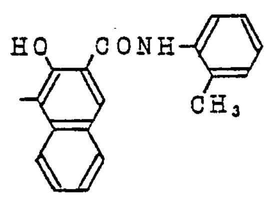 |
| B — (125) | H | H | 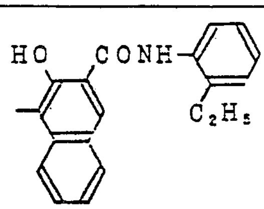 |

| | | | |
|---|---|---|---|
| B-(126) | $CH_3$ | H | 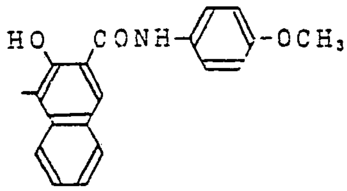 |
| B-(127) | Cl | H | 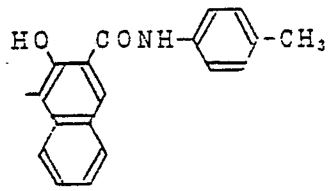 |
| B-(128) | $CH_3$ | H | 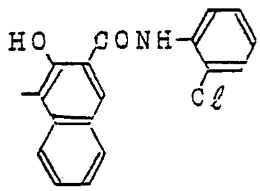 |
| B-(129) | $C_2H_5$ | H | 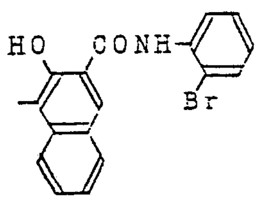 |
| B-(130) | $OCH_3$ | $OCH_3$ | 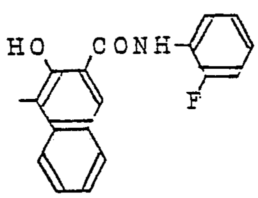 |
| B-(131) | CN | H | 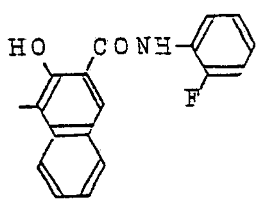 |
| B-(132) | Br | Br | 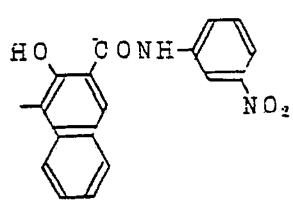 |

| | | | |
|---|---|---|---|
| B — (133) | OH | H | 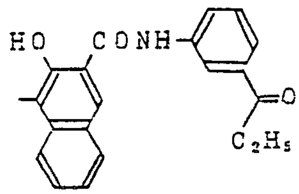 |
| B — (134) | H | H | 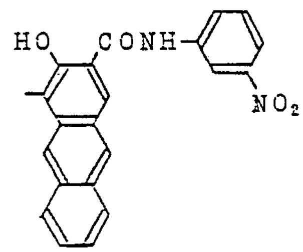 |
| B — (135) | $CH_3$ | H | 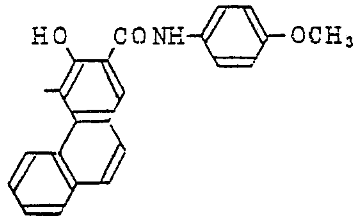 |
| B — (136) | $C_2H_5$ | H | 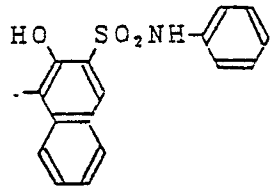 |
| B — (137) | Cℓ | H | 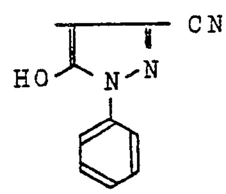 |
| B — (138) | Br | H | 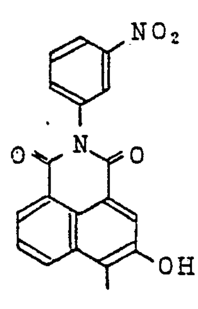 |

| | | | |
|---|---|---|---|
| B—(139) | OH | H | 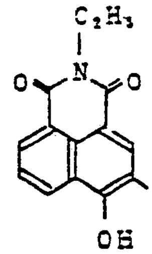 |

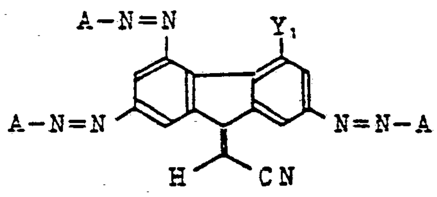

[IB]-V

| Compound No. | $Y_1$ | A |
|---|---|---|
| B—(140) | H | 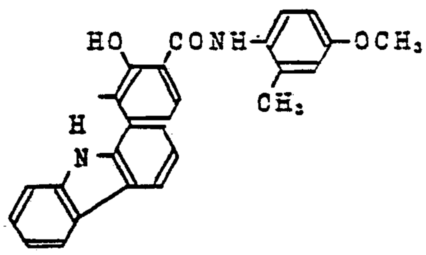 |
| B—(141) | H | 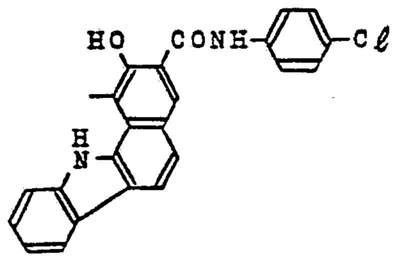 |

| | | |
|---|---|---|
| B—(142) | H | 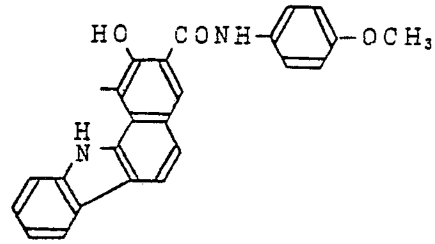 |
| B—(143) | H | 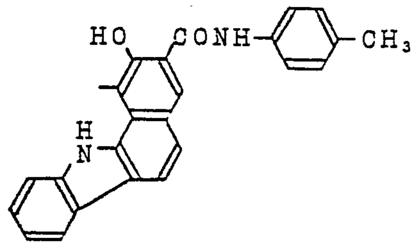 |
| B—(144) | H | 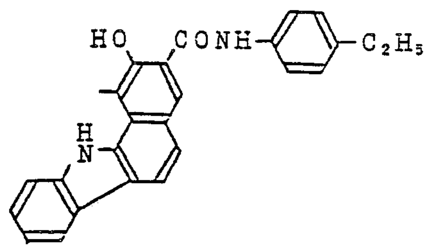 |
| B—(145) | H | 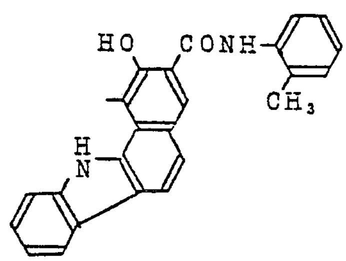 |
| B—(146) | H | 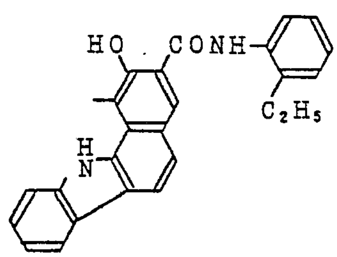 |

| | | |
|---|---|---|
| B—(147) | H | 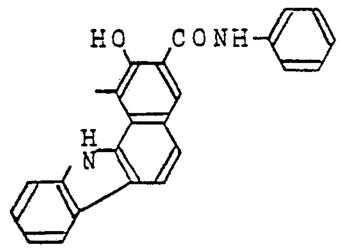 |
| B—(148) | H | 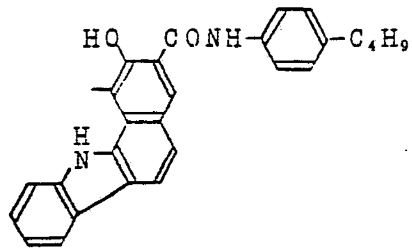 |
| B—(149) | H | 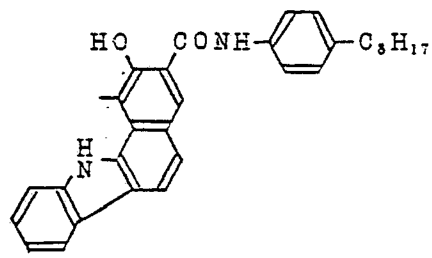 |
| B—(150) | H | 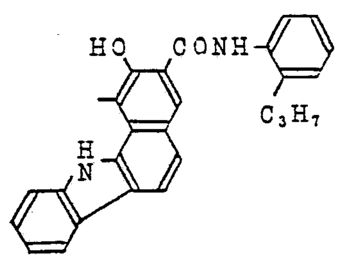 |
| B—(151) | H | 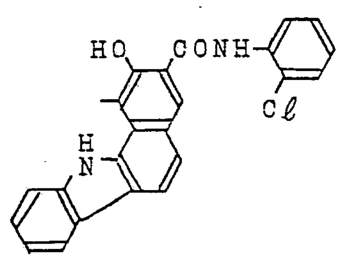 |

| | | |
|---|---|---|
| B-(152) | H | 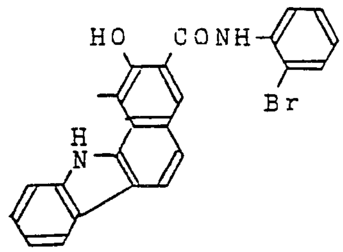 |
| B-(153) | H | 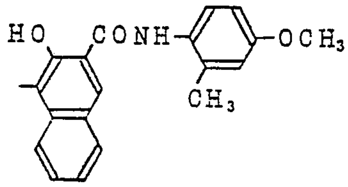 |
| B-(154) | H | 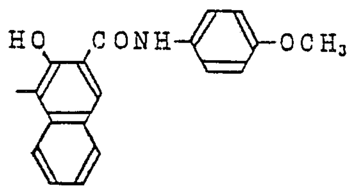 |
| B-(155) | H | 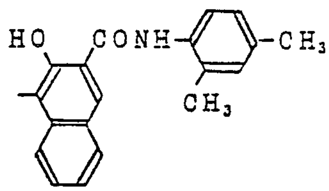 |
| B-(156) | H | 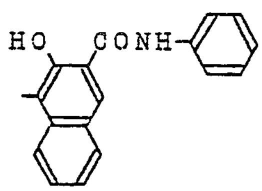 |
| B-(157) | H | 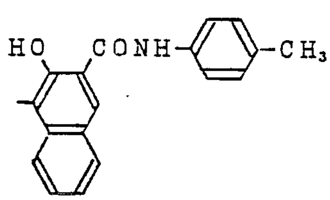 |

| | | |
|---|---|---|
| B-(158) | $CH_3$ | 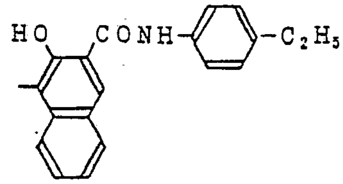 |
| B-(159) | H | 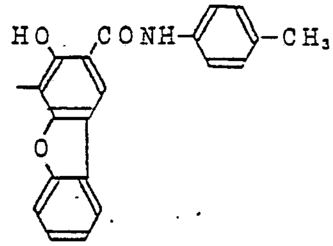 |
| B-(160) | H | 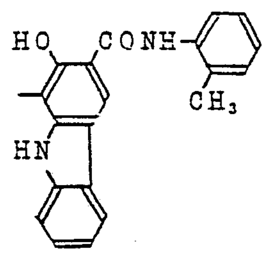 |
| B-(161) | H | 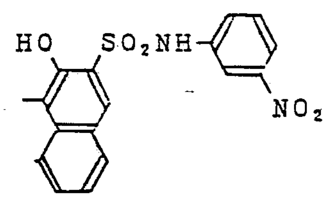 |
| B-(162) | H | 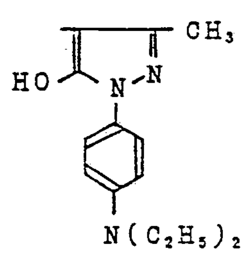 |

| | | |
|---|---|---|
| B—(163) | OH | 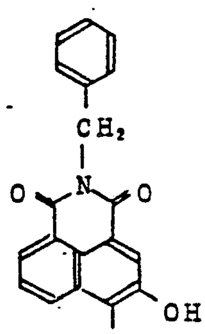 |
| B—(164) | H | 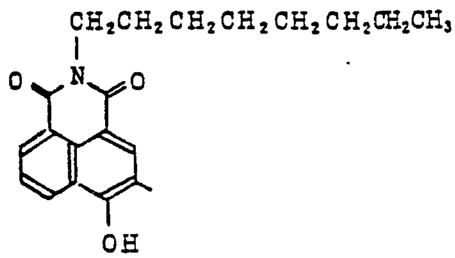 |

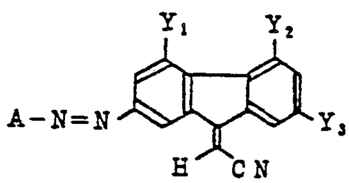

[B]-vi

| Compound No. | $Y_1$ | $Y_2$ | $Y_3$ | |
|---|---|---|---|---|
| B—(165) | H | H | H | 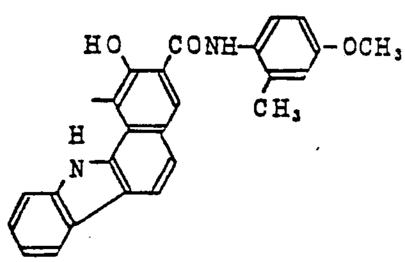 |

| | | | | |
|---|---|---|---|---|
| B－(166) | H | H | H | 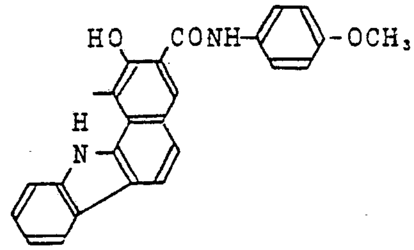 |
| B－(167) | H | H | H | 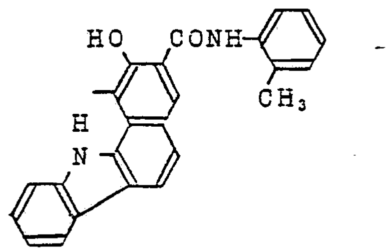 |
| B－(168) | H | H | H | 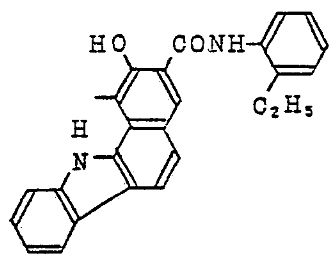 |
| B－(169) | H | $CH_3$ | H | 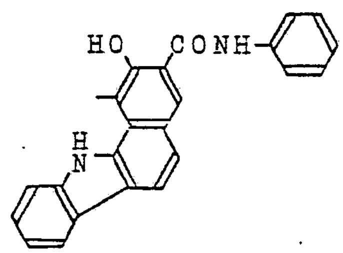 |
| B－(170) | H | H | Cℓ | 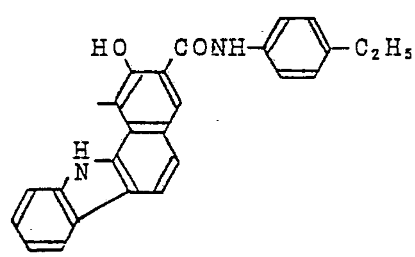 |

| | | | | |
|---|---|---|---|---|
| B — (171) | H | H | Br | 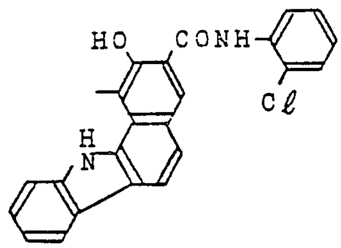 |
| B — (172) | H | OH | H | 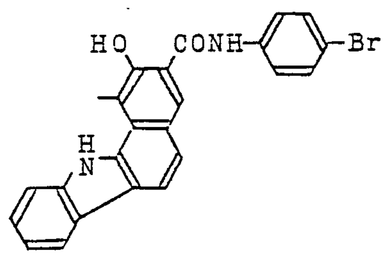 |
| B — (173) | H | H | H | 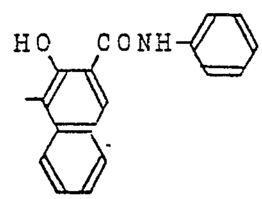 |
| B — (174) | H | H | H | 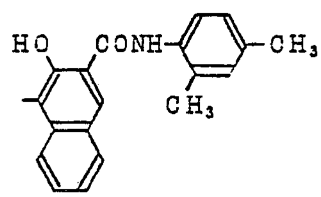 |
| B — (175) | H | H | H | 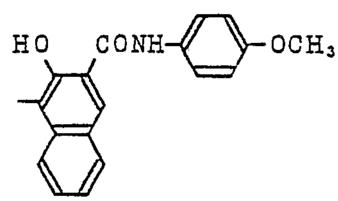 |
| B — (176) | H | H | H | 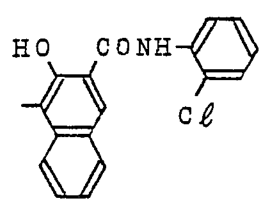 |

| | | | | |
|---|---|---|---|---|
| B — (177) | H | H | H | 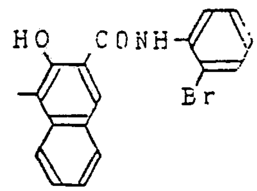 |
| B — (178) | H | H | H | 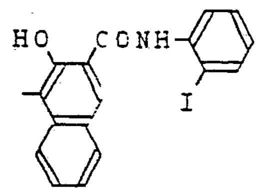 |
| B — (179) | H | H | H | 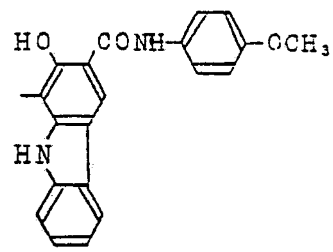 |
| B — (180) | H | H | Cℓ | 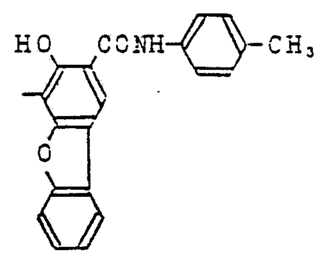 |
| B — (181) | H | H | Br | 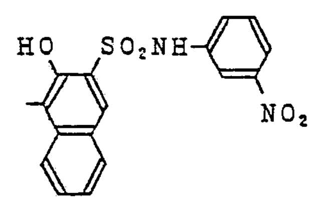 |
| B — (182) | H | $CH_3$ | H | 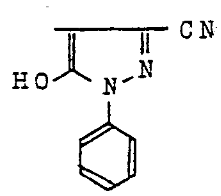 |

| | | | | |
|---|---|---|---|---|
| B—(183) | H | H | H | 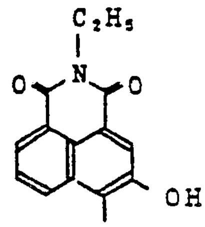 |
| B—(184) | H | H | H | 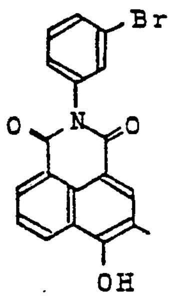 |

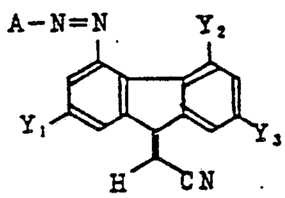

[IB]-VIII

| Compound No. | $Y_1$ | $Y_2$ | $Y_3$ | A |
|---|---|---|---|---|
| B—(185) | H | H | H | 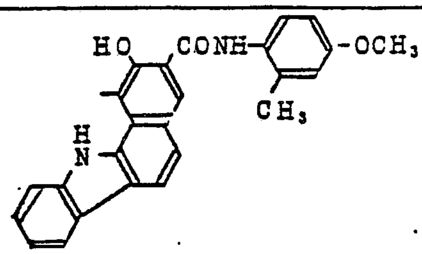 |
| B—(186) | H | H | H | 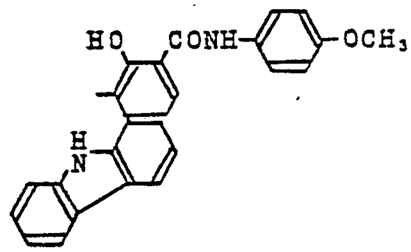 |

| | | | | |
|---|---|---|---|---|
| B-(187) | H | H | H | 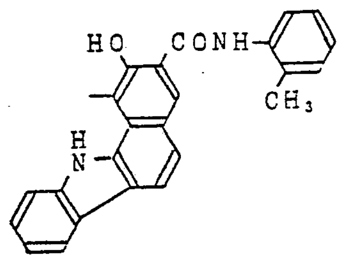 |
| B-(188) | H | H | H | 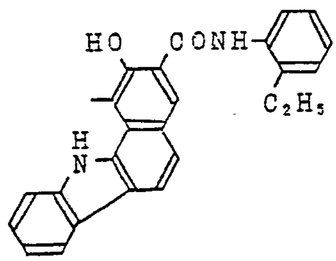 |
| B-(189) | H | H | $CH_3$ | 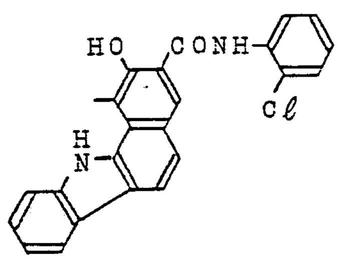 |
| B-(190) | H | H | H | 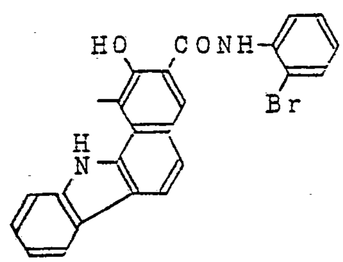 |
| B-(191) | H | H | H | 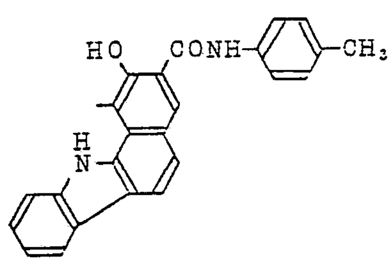 |

| | | | | |
|---|---|---|---|---|
| B—(192) | H | H | H | 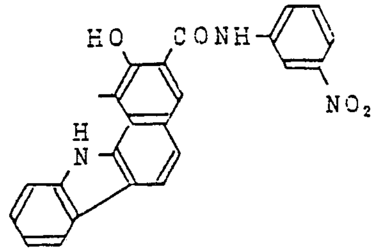 |
| B—(193) | H | H | H | 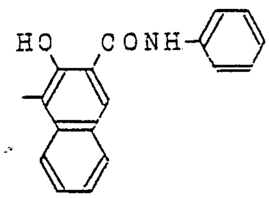 |
| B—(194) | H | H | H | 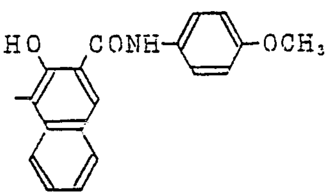 |
| B—(195) | H | H | H | 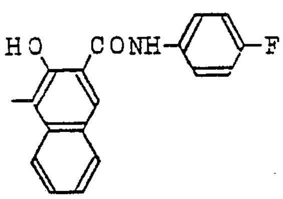 |
| B—(196) | H | H | Cℓ | 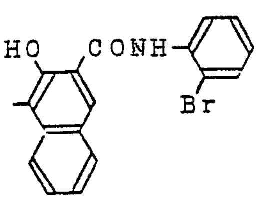 |
| B—(197) | H | H | H | 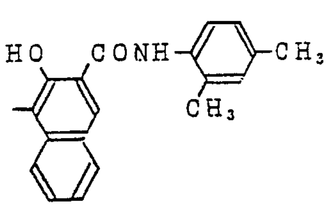 |

| | | | | |
|---|---|---|---|---|
| B—(198) | H | H | H | 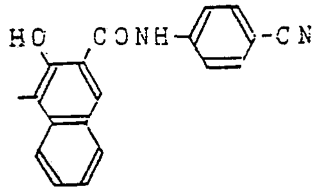 |
| B—(199) | H | H | H | 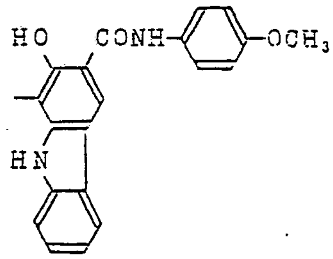 |
| B—(200) | H | H | H | 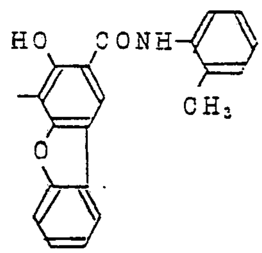 |
| B—(201) | H | H | $CH_3$ | 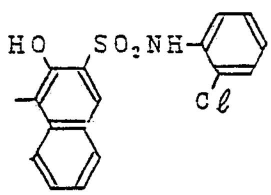 |
| B—(202) | H | OH | H | 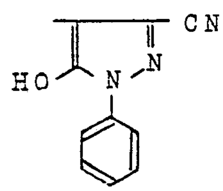 |
| B—(203) | Cℓ | H | H | 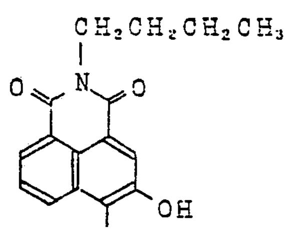 |

| | | | | |
|---|---|---|---|---|
| B-(204) | Cℓ | Cℓ | Cℓ | 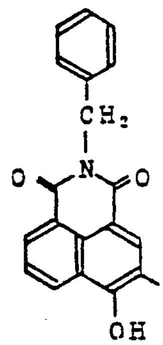 |

B-(205)

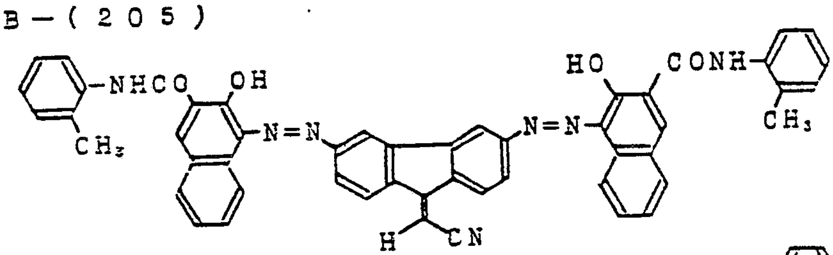

B-(206)

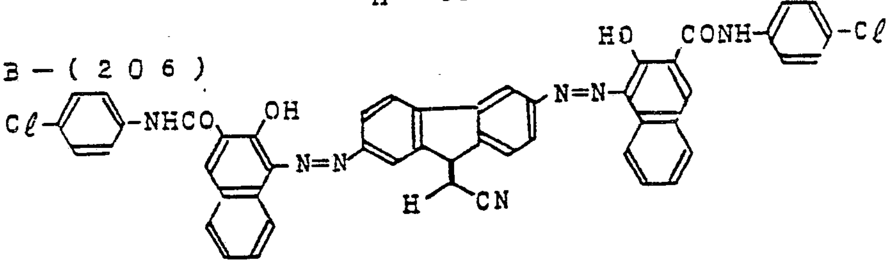

B-(207)

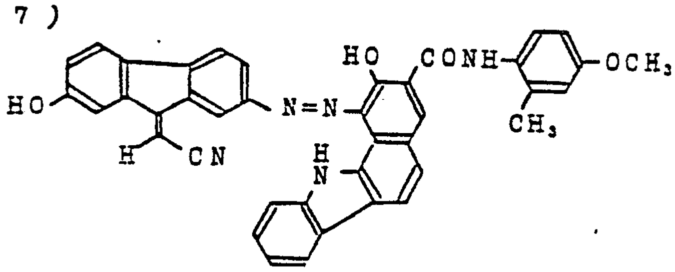

The azo compounds described above can be synthesized easily according to a known method. A typical example is shown below.

Synthesis Example 2

[Synthesis of compound of formula B—(1)]

The synthesis route is schematically shown below:

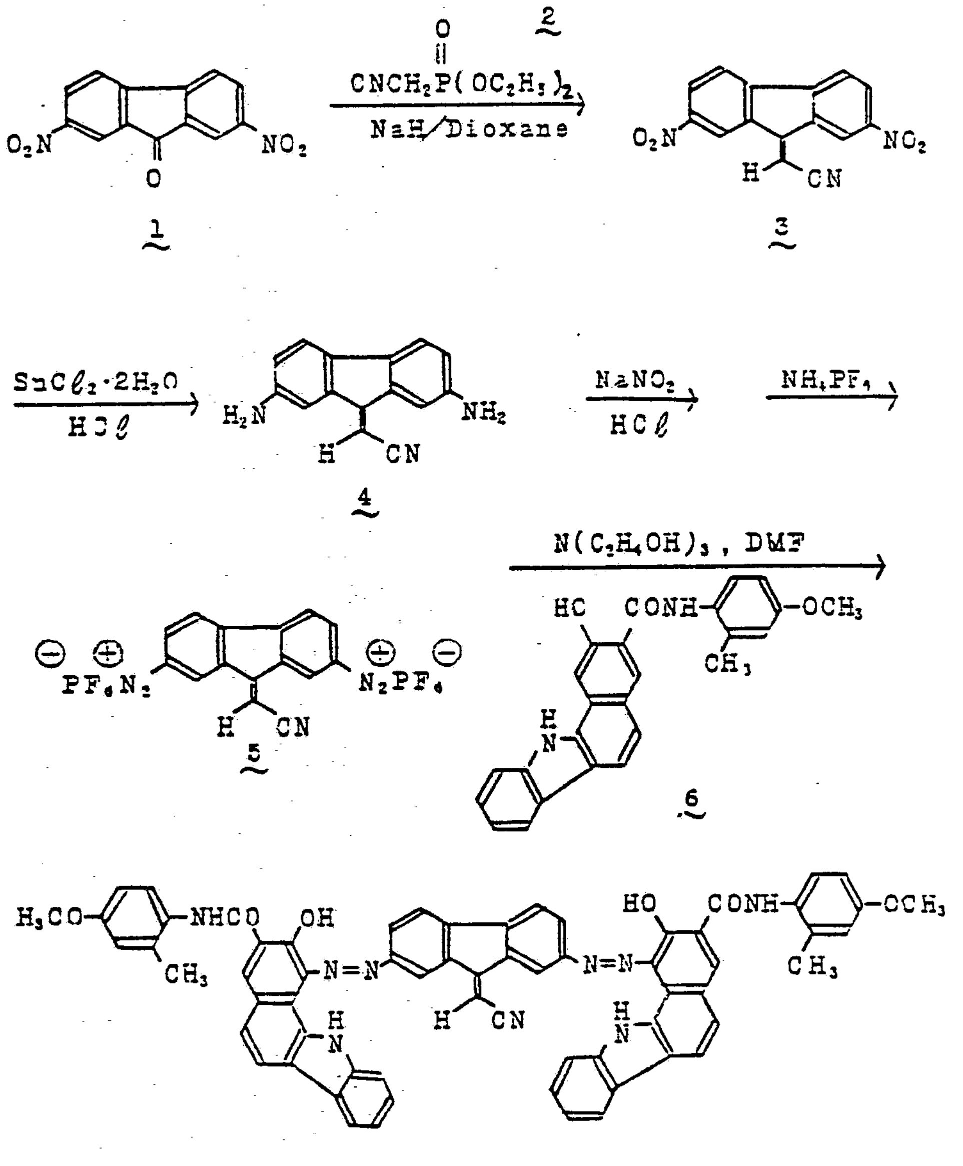


B —(1)

2,7-Dinitrofluorenone *1* (produced by Tokyo Kasei K.K.) was reacted with a phosphonate derivative *2* (Journal of American Chemical Society, *83*, 1733 (1961)) to prepare a dinitro derivative *3*, which was then reduced with stannous chloride to form a diamino derivative *4* (Journal of Chemical Society, 870 (1954)). The diamino derivative *4* (23.3 g, 0.1 mole) was dispersed by adding it to a mixture of 1 liter of conc. HCl and 1 liter of water and a solution of 13.8 g (0.2 mole) of sodium nitrite dissolved in 0.1 liter of water was added dropwise at 5°C under ice-cooling. After completion of the addition, the reaction mixture was filtered, and 1 liter of an aqueous 50 % ammonium hexafluorophosphate solution was added to the filtrate. The resultant precipitate was recovered by filtration, washed with water and thoroughly dried. The salt obtained was dissolved in 1.5 liters of N,N-dimethylformamide (DMF) to provide a tetrazonium salt solution to be used in the subsequent reaction.

As the next step, 79.3 g (0.2 mole) of 2-hydroxy-3-(4-methoxy-2-methylphenylcarbamoyl)-benzo[a]-carbazole (Naphthol AS-SR, produced by Hoechst AG) and 60 g of triethanolamine were dissolved in 4 liters

of N,N-dimethylformamide, and the tetrazonium salt solution as prepared above was added dropwise under ice-cooling to the resultant solution, followed further by stirring for 2 hours to carry out the reaction. The crystals formed were recovered by filtration, and they were washed twice with 5 liters of N,N-dimethylformamide and twice with 5 liters of acetone, followed by drying, to obtain 70.3 g of the desired bisazo compound B—(1) (67%). From the analytical results of m.p. 300°C or higher, FD-MS spectrum which indicates a peak of $M^+$ at m/Z 1047, and the elemental analysis of C = 74.27%, N = 11.95%, H = 4.52% (Calcd. values, C = 74.8%, N = 12.03%, H = 4.33%), it was confirmed that the desired substance was synthesized.

*Embodiment C*

The compound may be of formula [IC]:

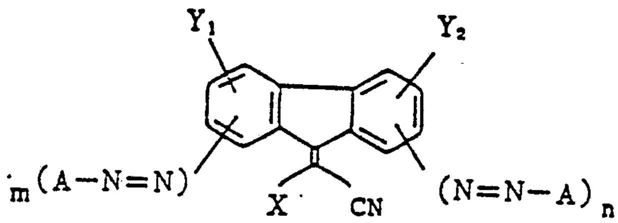

[IC]

wherein X is a halogen atom; and $Y_1$, $Y_2$, *m*, *n* and A are as defined in the formula [I].

In formula [IC], X preferably represents fluorine, chlorine, bromine or iodine, and the other symbols preferably are as defined for the preferred groups in formula [IA].

Preferred compounds having good sensitivity and stability to heat and light are of formula [IC]—II:

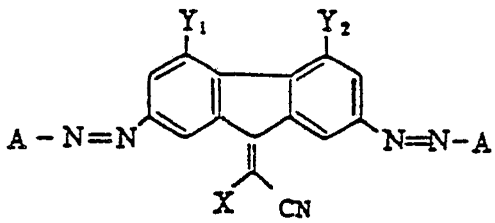

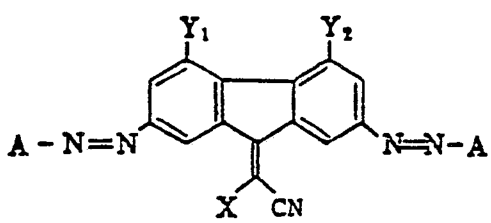

[IC]-II

wherein X, $Y_1$, $Y_2$ and A are the same as defined in the above formula [IC].

Specific examples of useful azo compounds represented by the above formula [IC] may include, for example, those having the following formula:

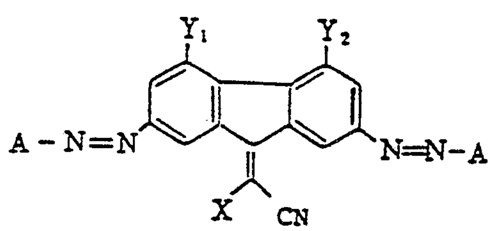

[IC]-III

| Compound No. | A | X | $Y_1$ | $Y_2$ |
|---|---|---|---|---|
| C-(1) | 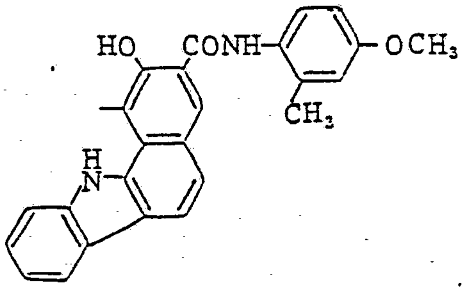 | Cl | H | H |
| C-(2) | 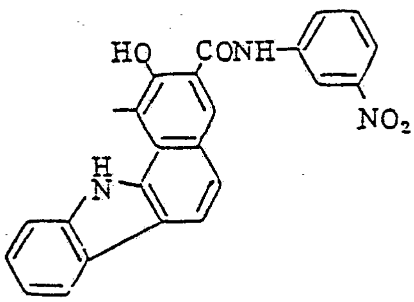 | Cl | H | H |
| C-(3) | 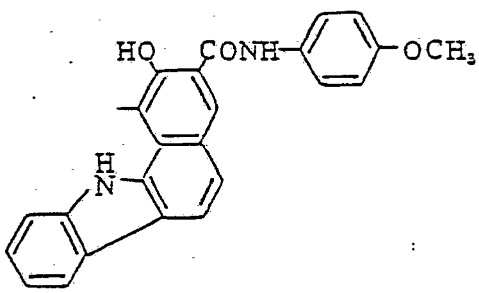 | Cl | H | H |
| C-(4) | 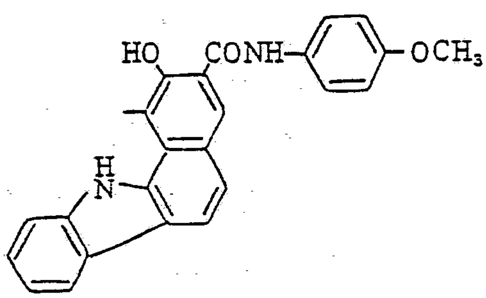 | I | H | H |

| | | | | |
|---|---|---|---|---|
| C-(5) | 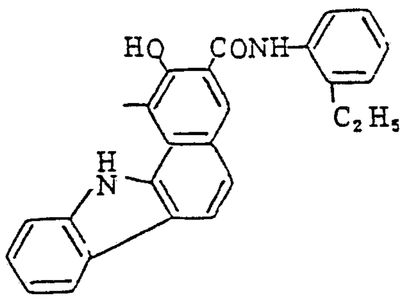 | Cℓ | H | H |
| C-(6) | 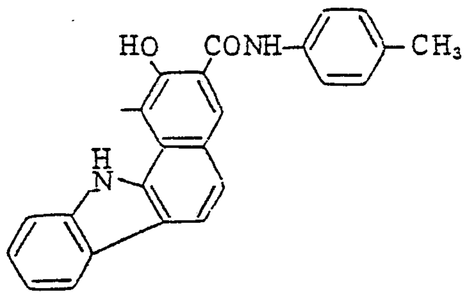 | Cℓ | H | H |
| C-(7) | 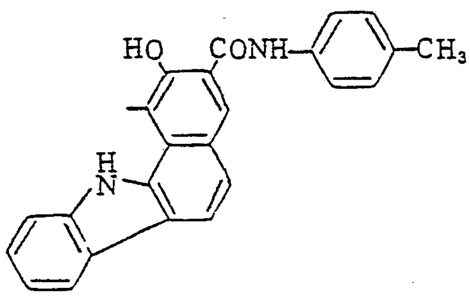 | Br | H | H |
| C-(8) | 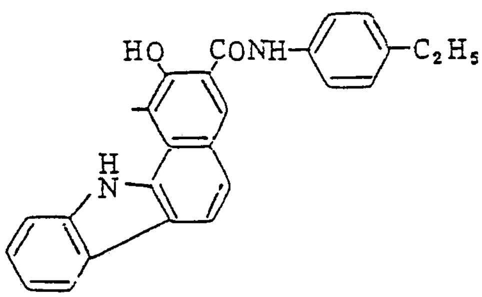 | Cℓ | H | H |

| | | | | |
|---|---|---|---|---|
| c-(9) | 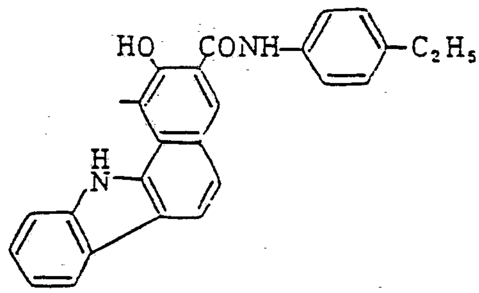 | Br | H | H |
| c-(10) | 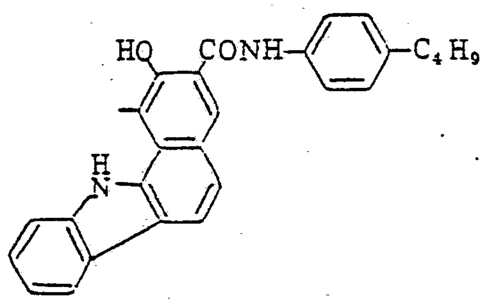 | Cℓ | H | H |
| c-(11) | 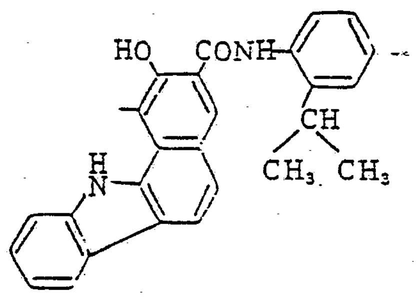 | Cℓ | H | H |
| c-(12) | 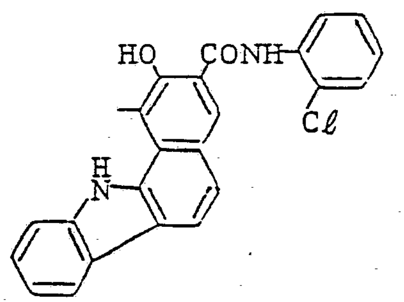 | Cℓ | H | H |
| c-(13) | 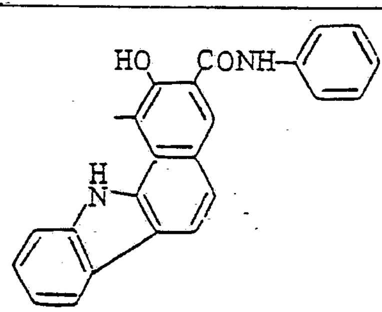 | Br | H | H |

| | | | | |
|---|---|---|---|---|
| C-(14) | 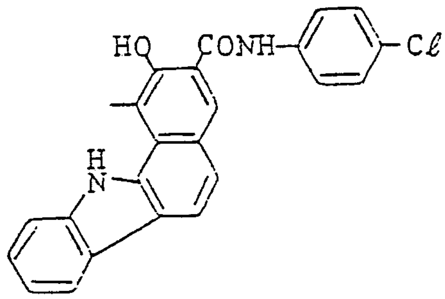 | Br | H | H |
| C-(15) | 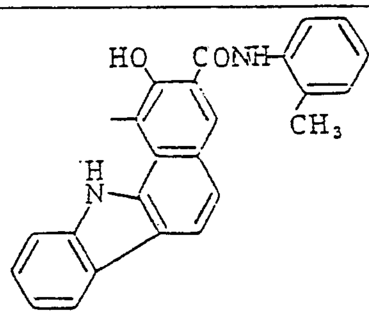 | Cℓ | H | H |
| C-(16) | 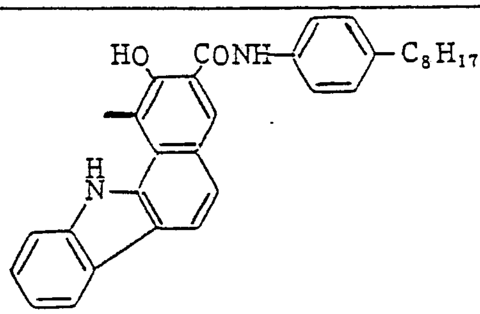 | Cℓ | H | H |
| C-(17) | 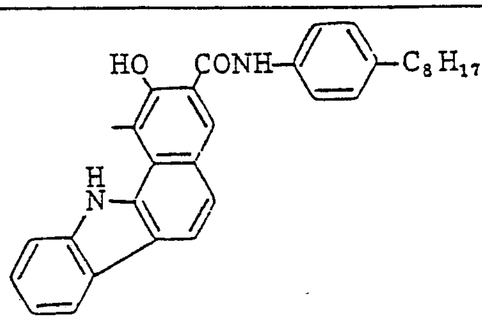 | Cℓ | H | $CH_3$ |
| C-(18) | 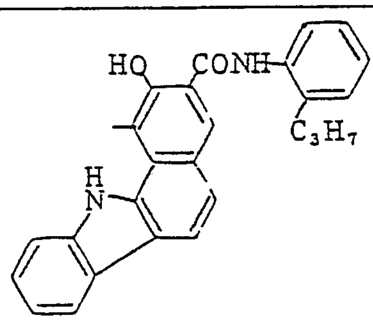 | Cℓ | H | H |

| | | | | |
|---|---|---|---|---|
| C-(19) | 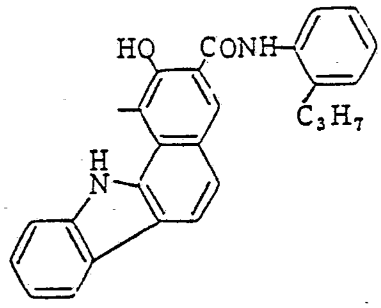 | Br | H | H |
| C-(20) | 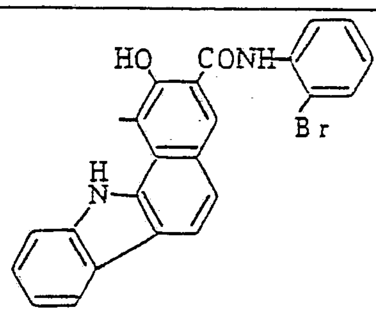 | Cℓ | H | H |
| C-(21) | 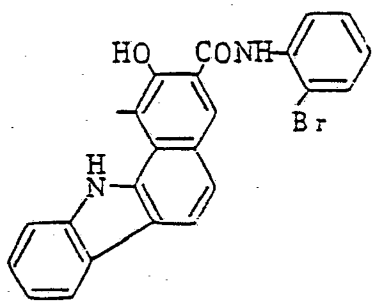 | Br | H | H |
| C-(22) | 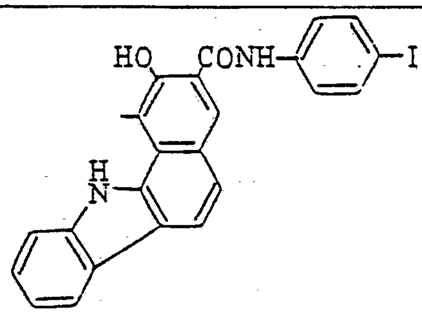 | Cℓ | H | H |
| C-(23) | 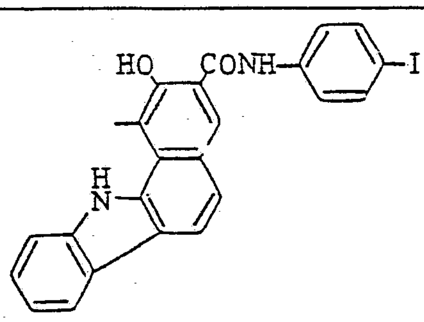 | Br | H | H |

| | | | | |
|---|---|---|---|---|
| C-(24) | 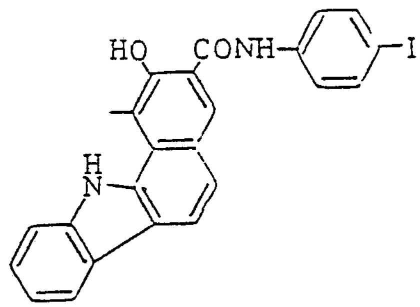 | I | H | H |
| C-(25) | 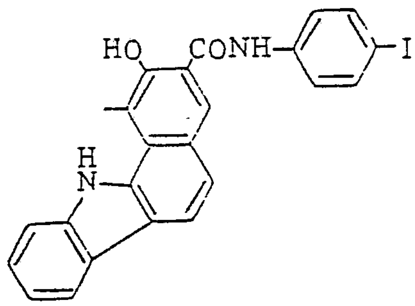 | F | H | H |
| C-(26) | 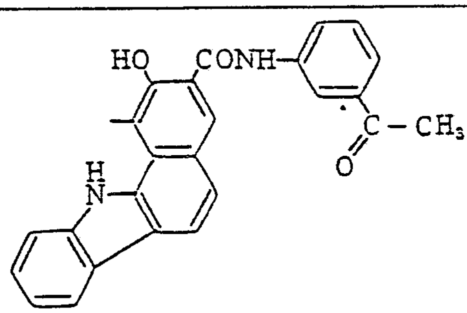 | Br | H | H |
| C-(27) | 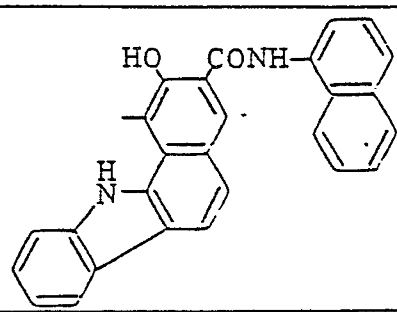 | Cℓ | H | H |
| C-(28) | 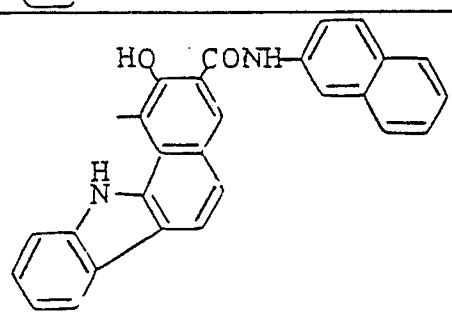 | Br | CN | CN |

| | | | | |
|---|---|---|---|---|
| C-(29) | 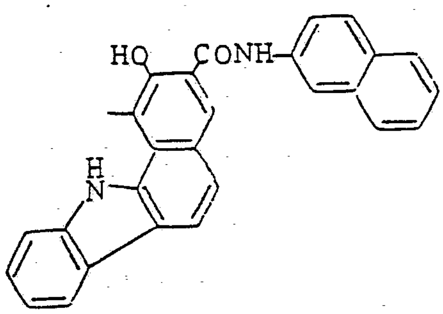 | Br | H | H |
| C-(30) | 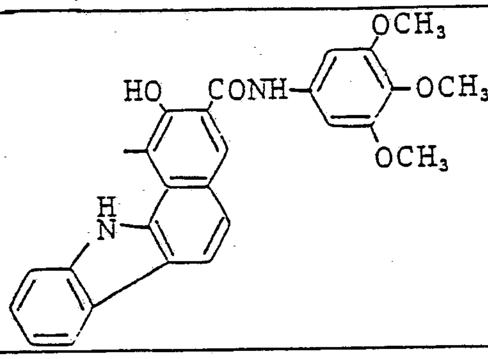 | Cℓ | H | H |
| C-(31) | 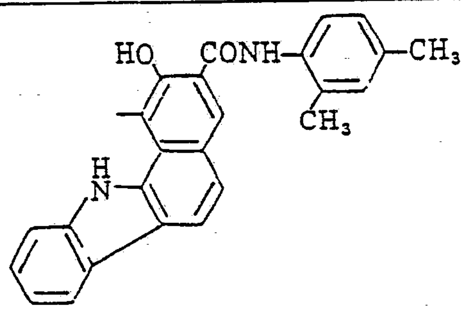 | Br | H | H |
| C-(32) | 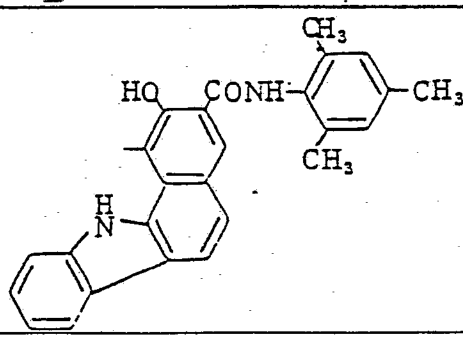 | Br | H | H |

| | | | | |
|---|---|---|---|---|
| C-(33) | 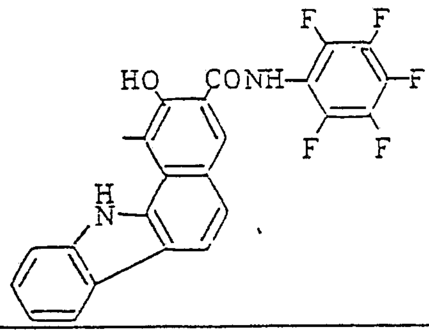 | Cℓ | H | H |
| C-(34) | 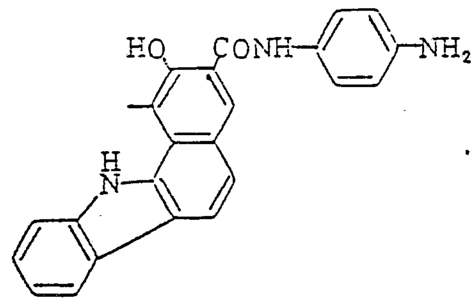 | Cℓ | H | H |
| C-(35) | 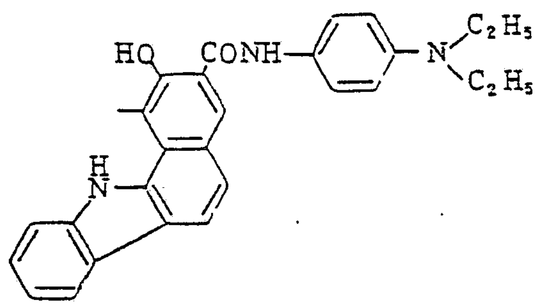 | Cℓ | Cℓ | Cℓ |
| C-(36) | 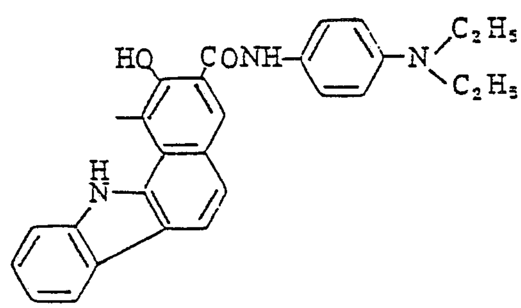 | Br | Br | Br |

| | | | | |
|---|---|---|---|---|
| C-(37) | 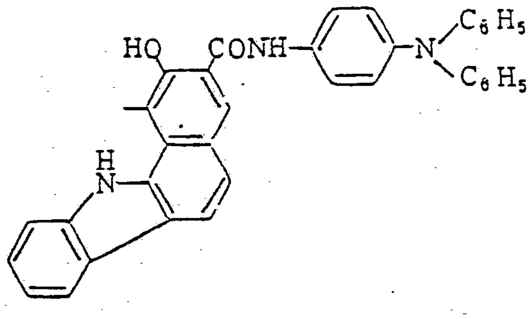 | Cℓ | H | H |
| C-(38) | 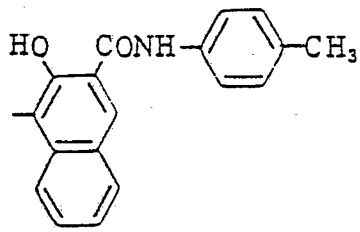 | Cℓ | Br | Br |
| C-(39) | 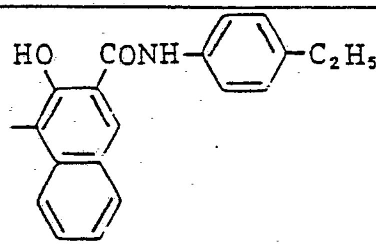 | Cℓ | H | H |
| C-(40) | 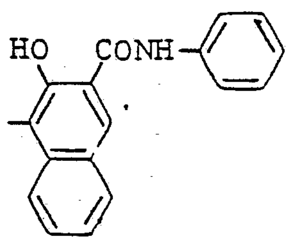 | Cℓ | H | H |

| | | | | |
|---|---|---|---|---|
| C-(41) | 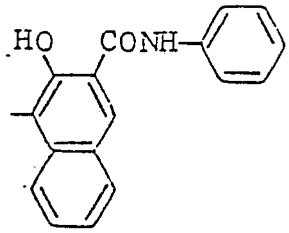 | Br | H | H |
| C-(42) | 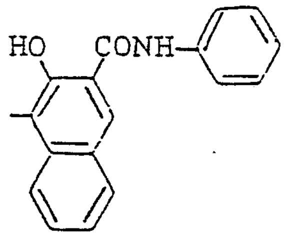 | I | H | H |
| C-(43) | 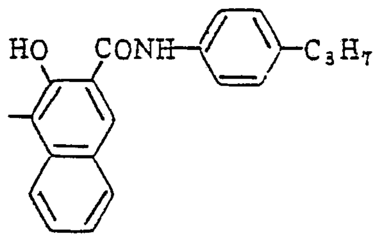 | Cℓ | H | H |
| C-(44) | 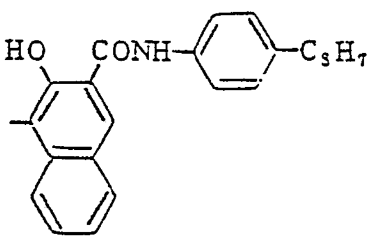 | Br | H | H |

| | | | | |
|---|---|---|---|---|
| C-(45) | 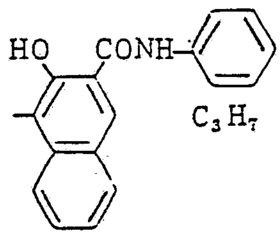 | Cℓ | H | H |
| C-(46) | 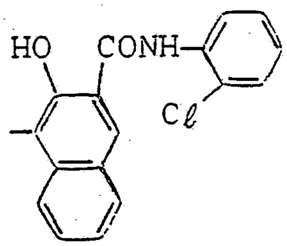 | Cℓ | H | H |
| C-(47) | 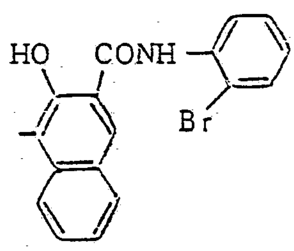 | Cℓ | H | H |
| C-(48) | 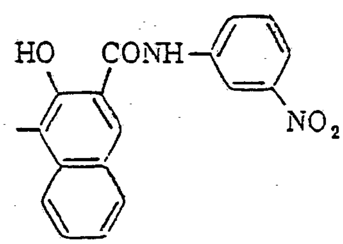 | Cℓ | H | H |

| | | | | |
|---|---|---|---|---|
| C-(49) | 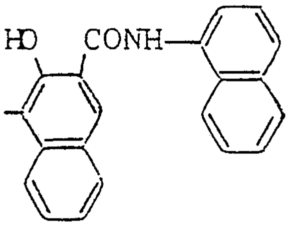 | Cℓ | H | H |
| C-(50) | 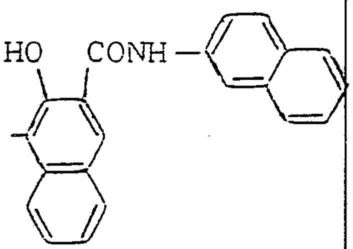 | Cℓ | H | H |
| C-(51) | 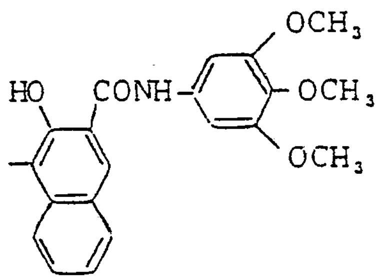 | Cℓ | H | H |
| C-(52) | 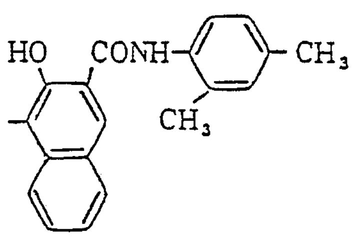 | Cℓ | H | H |

| | | | | |
|---|---|---|---|---|
| c-(53) | 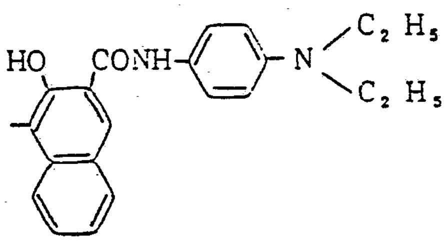 | Cℓ | H | H |
| c-(54) | 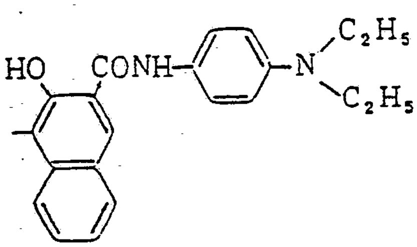 | Br | H | H |
| c-(55) | 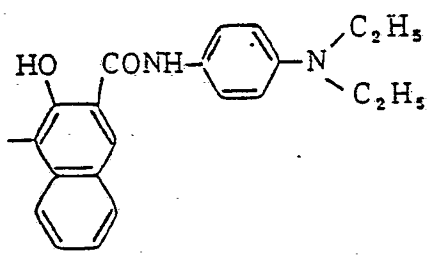 | F | H | H |
| c-(56) | 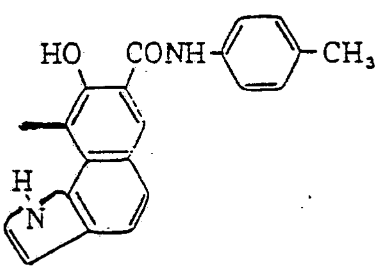 | Cℓ | H | H |

| | | | | |
|---|---|---|---|---|
| C-(57) | 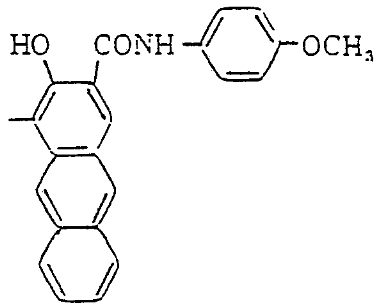 | Cℓ | H | H |
| C-(58) | 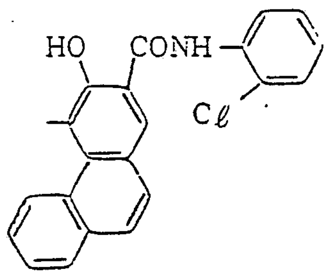 | Cℓ | H | H |
| C-(59) | 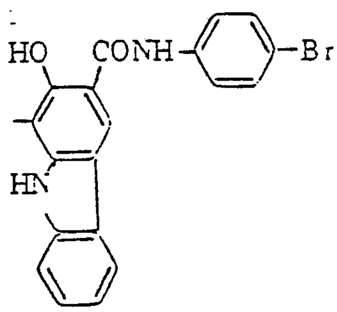 | Cℓ | H | H |
| C-(60) | 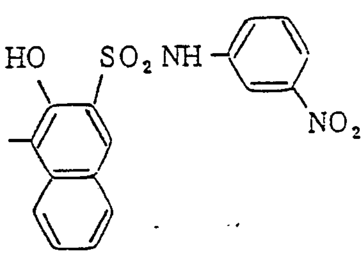 | Br | H | H |

| | | | | |
|---|---|---|---|---|
| C-(61) | 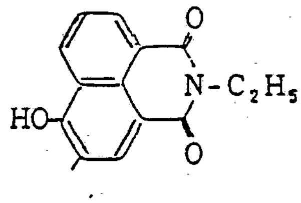 | Cℓ | H | H |
| C-( 62 ) | 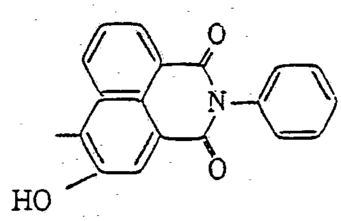 | Cℓ | H | H |
| C-(63 ) | 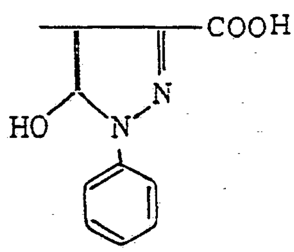 | Cℓ | H | H |

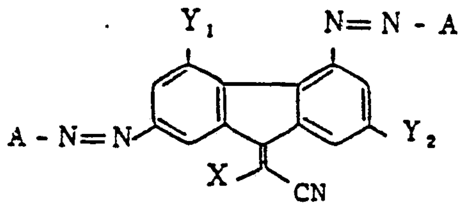

[Ic]-III

| Compound No. | A | X | $Y_1$ | $Y_2$ |
|---|---|---|---|---|
| C-(64) | 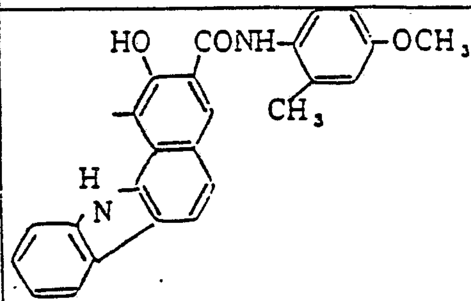 | Cℓ | H | H |
| C-(65) | 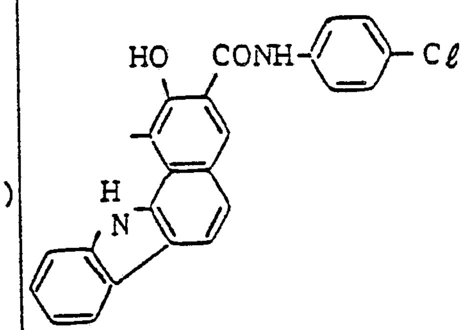 | Br | H | H |
| C-(66) | 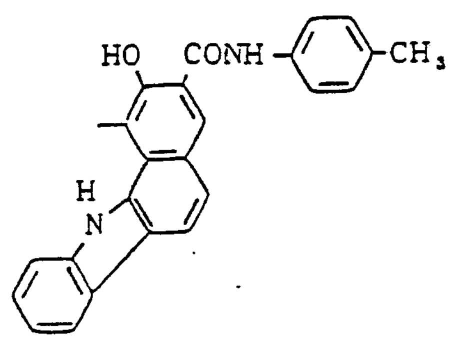 | Cℓ | H | H |

| | | | | |
|---|---|---|---|---|
| C-(67) | 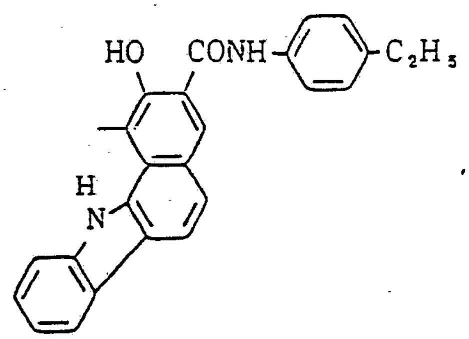 | Cℓ | H | H |
| C-(68) | 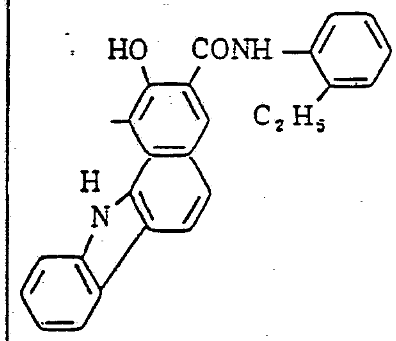 | Cℓ | H | H |
| C-(69) | 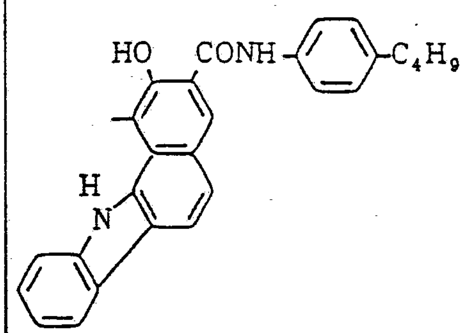 | Br | H | $CH_3$ |

| | | | | |
|---|---|---|---|---|
| C-(70) | 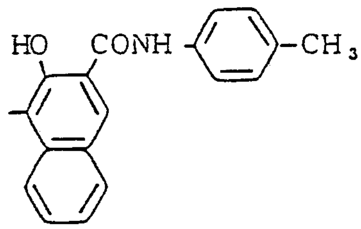 | Cℓ | H | H |
| C-(71) | 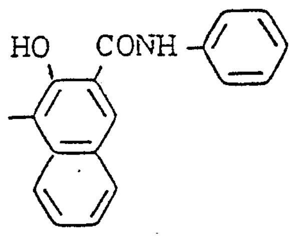 | Br | H | H |
| C-(72) | 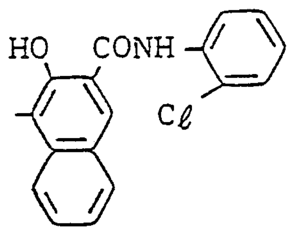 | Cℓ | H | H |
| C-(73) | 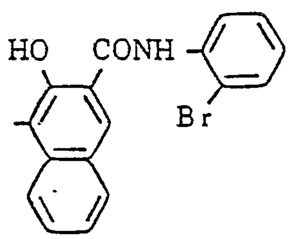 | Br | H | H |
| C-(74) | 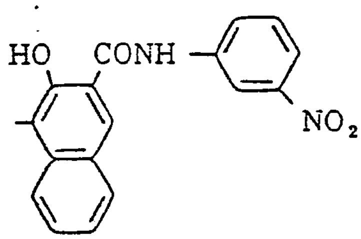 | Br | $CH_3$ | $CH_3$ |

| | | | | |
|---|---|---|---|---|
| c-(75) | 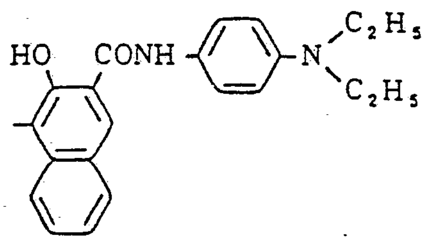 | F | 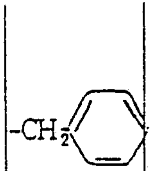 | H |
| c-(76) | 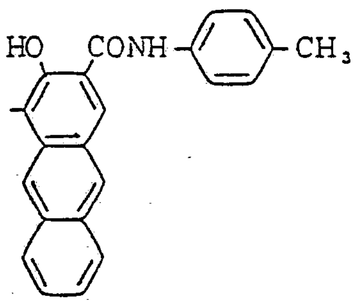 | Cℓ | H | H |
| c-(77) | 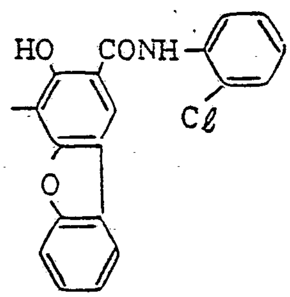 | Cℓ | H | H |
| c-(78) | 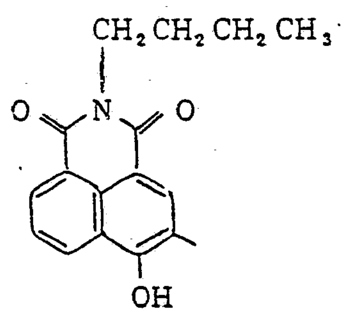 | Br | H | H |

C-( 79 )

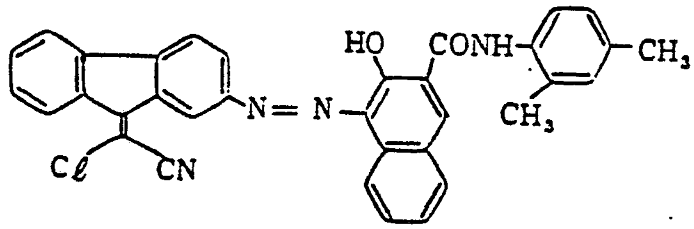

C-( 80 )

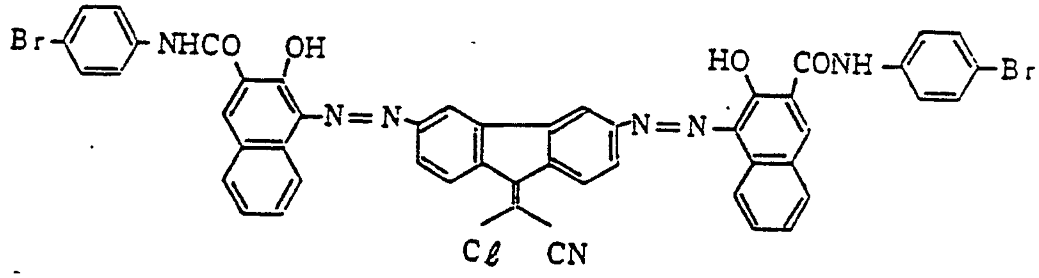

The azo compounds described above can be synthesized easily according to a known method. A typical example is shown below.

Synthesis Example 3

[Synthesis of compound of formula C—(1)]

The synthesis route is schematically shown below:

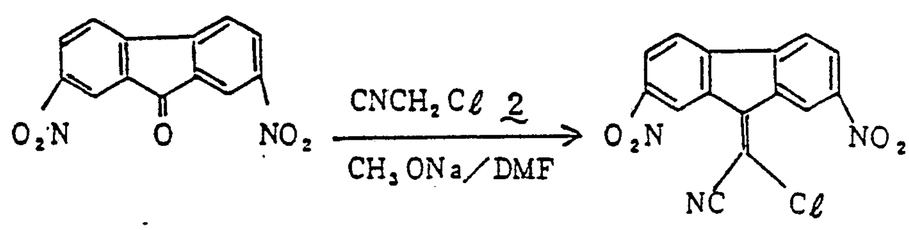


1 3

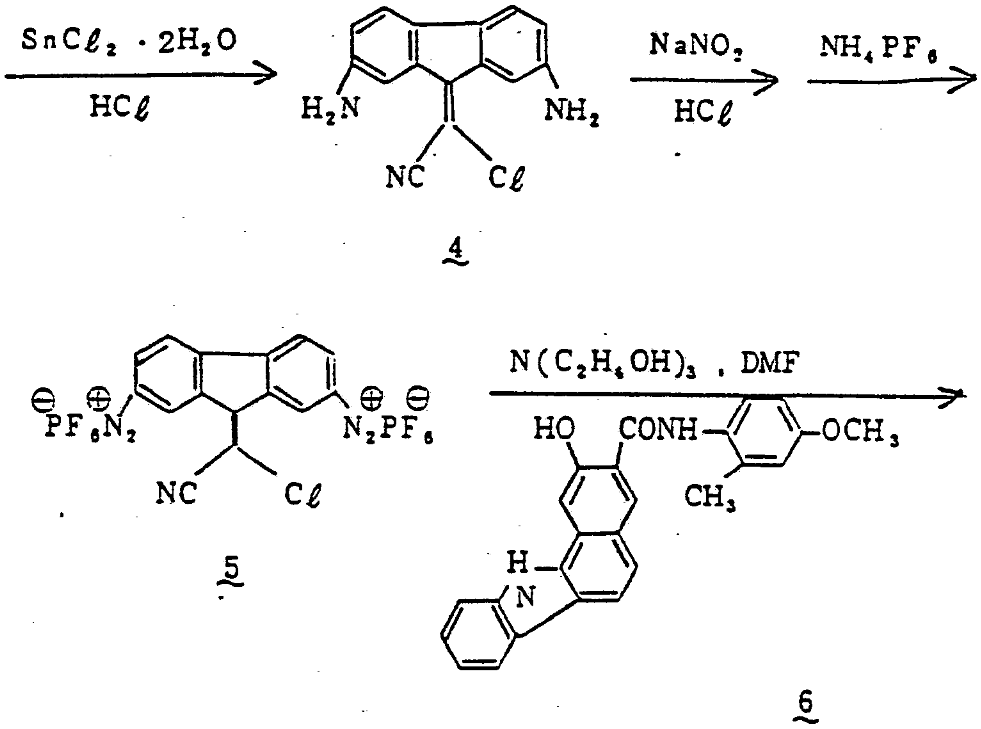


4

5

6

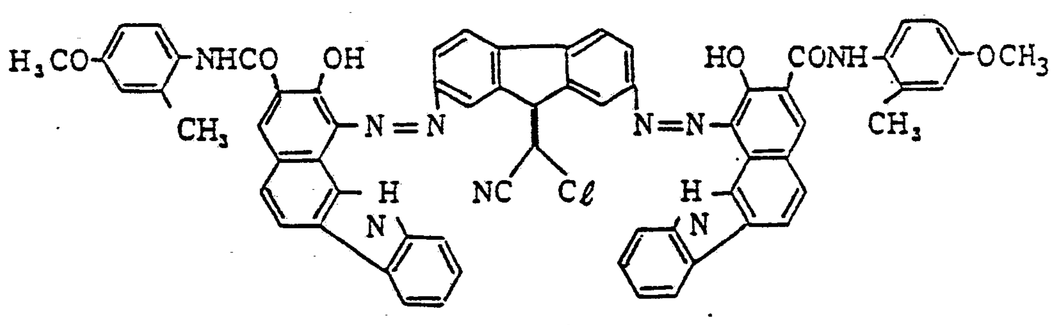

C-(1).

2,7-Dinitrofluorenone *1* (produced by Tokyo Kasei K.K.) was reacted with benzyl cyanide *2* to produce a dinitro derivative *3*, which was then reduced with stannous chloride to form a diamino derivative *4* (Journal of Chemical Society, 870 (1954)). The diamino derivative *4* (267.7 g, 0.1 mole) was dispersed by adding it to a mixture of 1 liter of conc. HCl and 1 liter of water and a solution of 13.8 g (0.2 mole) of sodium nitrite dissolved in 1 liter of water was added dropwise at 5°C under ice-cooling. After completion of the addition, the reaction mixture was filtered, and 1 liter of an aqueous 50 % ammonium hexafluorophosphate solution was added to the filtrate. The resultant precipitate was recovered by filtration, washed with water and thoroughly dried. The salt obtained was dissolved in 1.5 liters of N,N-dimethylformamide (DMF) to provide a tetrazonium salt solution to be used in the subsequent reaction.

As the next step, 79.3 g (0.2 mole) of 2-hydroxy-3-(4-methoxy-2-methylphenylcarbamoyl)-benzo[a]-carbazole (Naphthol AS-SR, produced by Hoechst AG) and 60 g of triethanolamine were dissolved in 4 liters of N,N-dimethylformamide, and the tetrazonium salt solution as prepared above was added dropwise under ice-cooling to the resultant solution, followed further by stirring for 2 hours to carry out the reaction. The crystals formed were recovered by filtration, and they were washed twice with 5 liters of N,N-dimethylformamide and twice with 5 liters of acetone, followed by drying, to obtain 81.2 g of the desired bisazo compound C—(1) (75%). From the analytical results of m.p. 300°C or higher, FD-MS spectrum which indicates a peak of $M^+$ at m/Z 1081, and the elemental analysis of C = 72.00%, N = 11.55%, H = 4.15% (Calcd. values, C = 72.11%, N = 11.65%, H = 4.10%), it was confirmed that the desired substance was synthesized.

*Embodiment D*

The compound may be of formula [ID]:

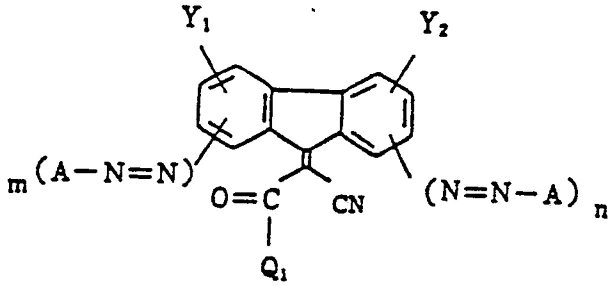

[ID]

wherein $Q_1$, $Y_1$, $Y_2$, *m*, *n* and A are as defined in formula [I].

In the above formula $Q_1$ represents, for example, an alkyl group (having desirably 1 to 5 carbon atoms), an unsubstituted or substituted phenyl group, a hydrogen atom, an amino group, an alkylamino group, a phenylamino group or a hydroxyl group.

Preferable compounds having good sensitivity and stability to heat and light are of formula [ID]—II:

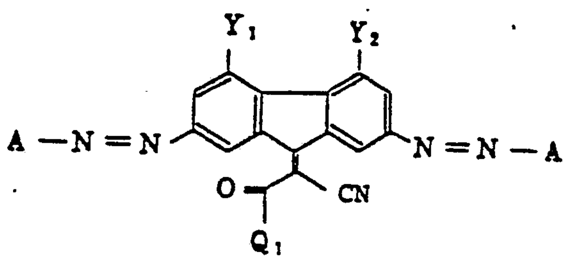

[ID]-II

wherein $Q_1$, W, $Y_1$, $Y_2$ and A are as defined in formula [IC].

Specific examples of useful azo compounds of formula [ID] include, for example, those of formula:

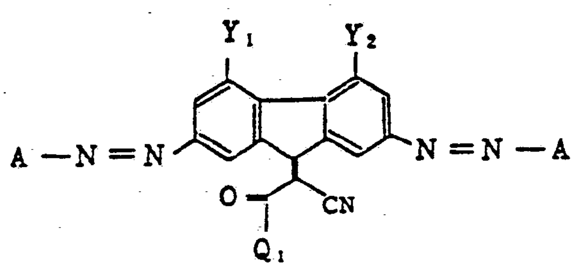

[式- III

| Compound No. | A | $Q_1$ | $Y_1$ | $Y_2$ |
|---|---|---|---|---|
| D - (1) | 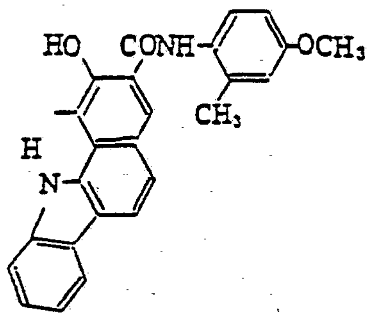 | $CH_3$ | H | H |
| D - (2) | 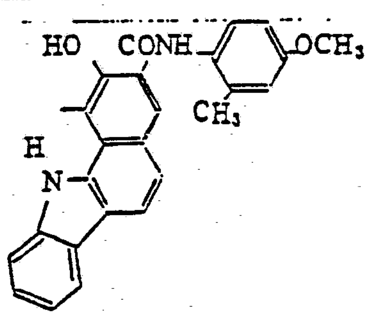 | $CH_3$ | H | H |
| D - (3) | 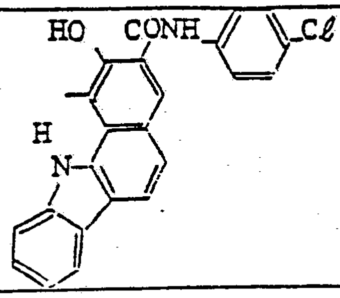 | $CH_3$ | H | H |

| | | | | |
|---|---|---|---|---|
| D - (4) | 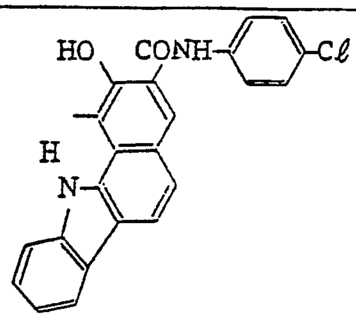 | 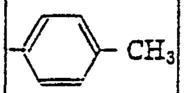 | H | H |
| D - (5) | 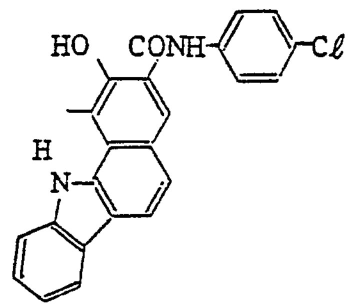 | 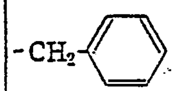 | H | H |
| D - (6) | 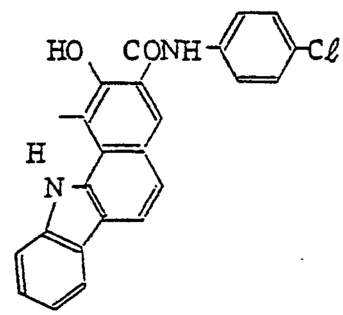 | $C_2H_5$ | H | H |
| D - (7) | 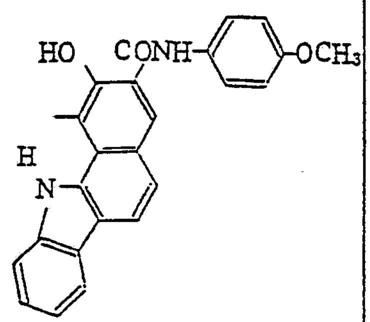 | $CH_3$ | H | H |

| | | | | |
|---|---|---|---|---|
| D - (8) | 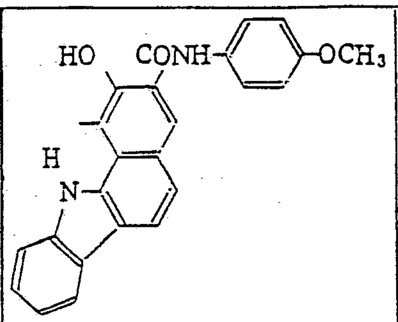 | $C_2H_5$ | H | H |
| D - (9) | 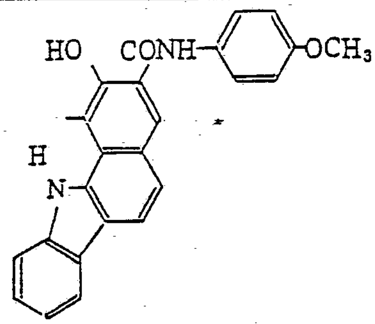 | $-OCH_3$ | H | H |
| D - (10) | 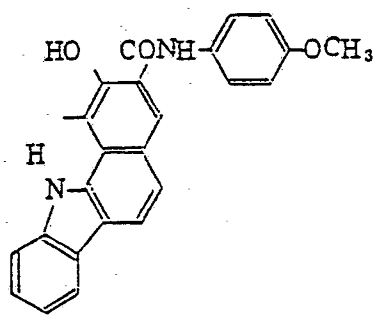 | H | H | H |
| D - (11) | 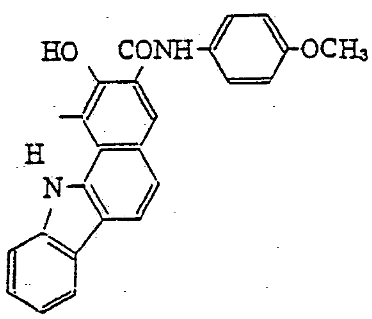 | 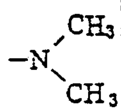 | H | H |

| | | | | |
|---|---|---|---|---|
| D - (12) | 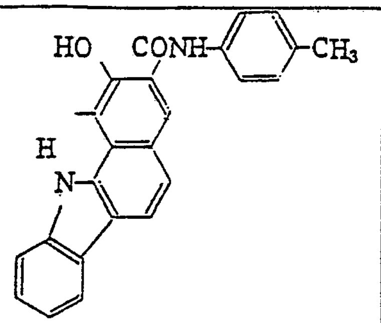 | $CH_3$ | H | H |
| D - (13) | 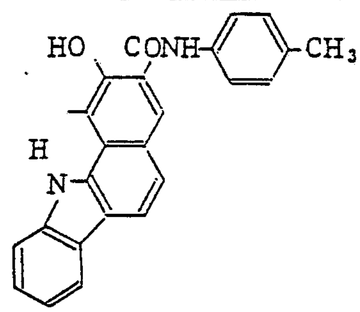 | 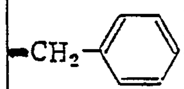 | H | H |
| D - (14) | 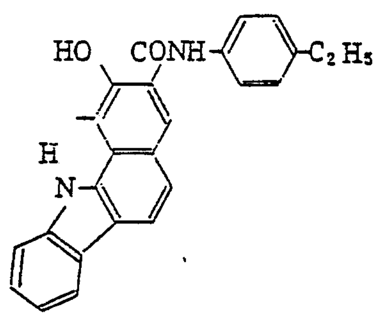 | $CH_3$ | H | H |
| D - (15) | 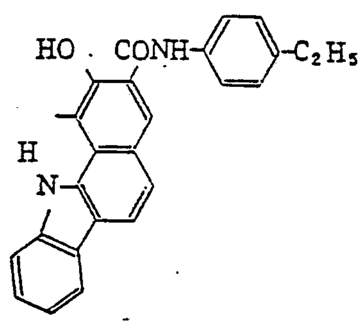 | 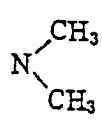 | H | H |

| | | | | |
|---|---|---|---|---|
| D - (16) | 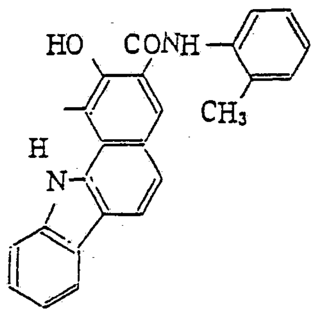 | 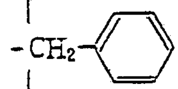 | H | H |
| D - (17) | 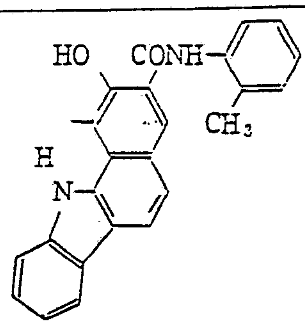 | 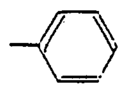 | H | H |
| D - (18) | 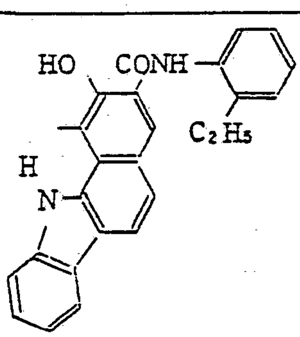 | $C_3H_7$ | H | H |
| D - (19) | 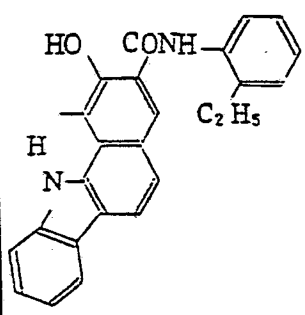 | 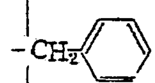 | H | H |

| | | | | |
|---|---|---|---|---|
| D - (20) | 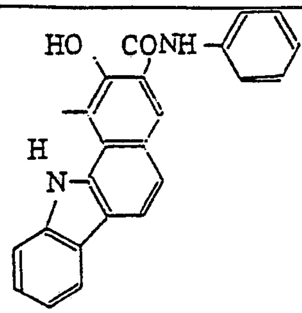 | 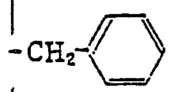 | H | H |
| D - (21) | 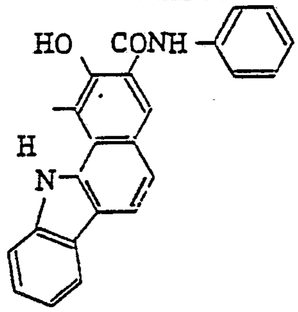 | 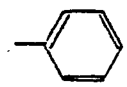 | H | H |
| D - (22) | 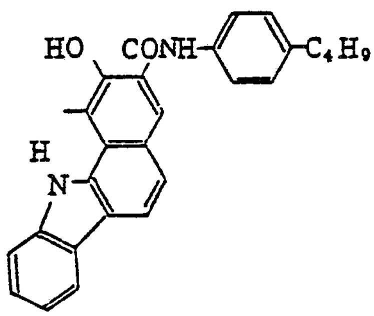 | $CH_2-OCH_3$ | H | H |
| D - (23) | 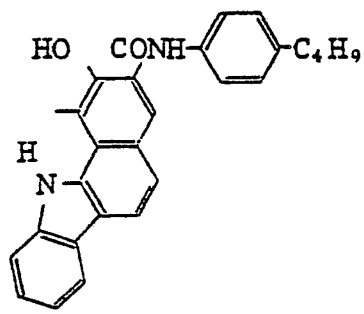 | H | H | H |

| | | | | |
|---|---|---|---|---|
| D - (24) | 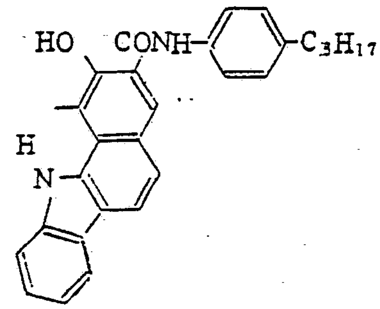 | $CH_3$ | H | H |
| D - (25) | 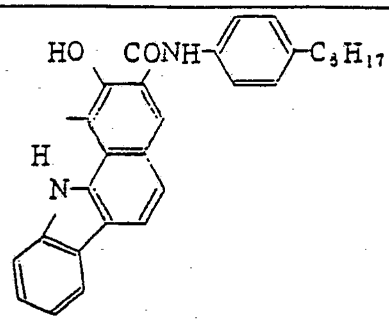 | $C_2H_5$ | H | H |
| D - (26) | 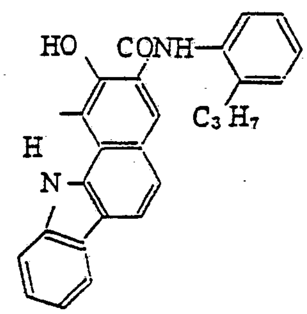 | $CH_3$ | H | H |
| D - (27) | 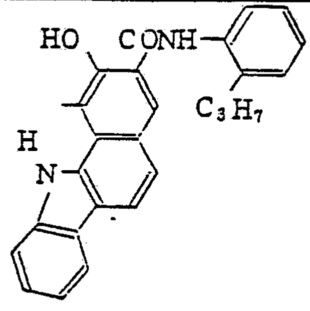 | $C_2H_5$ | H | H |

| | | | | |
|---|---|---|---|---|
| D - (28) | 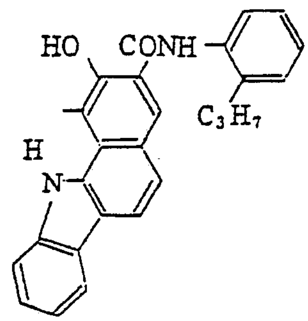 | H | $-OCH_3$ | $CH_3$ |
| D - (29) | 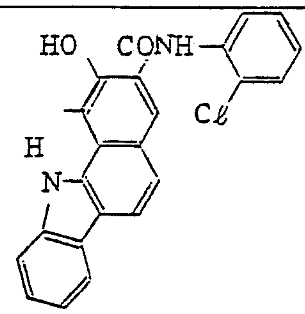 | $CH_3$ | H | H |
| D - (30) | 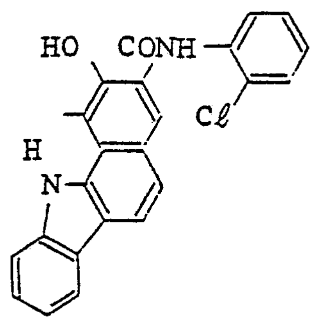 | $C_2H_5$ | H | H |
| D - (31) | 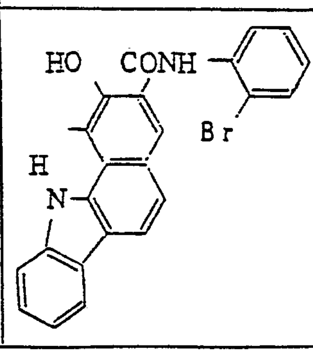 | H | H | H |

| | | | | |
|---|---|---|---|---|
| D - (32) | 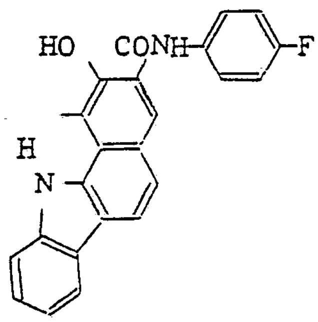 | $CH_3$ | H | H |
| D - (33) | 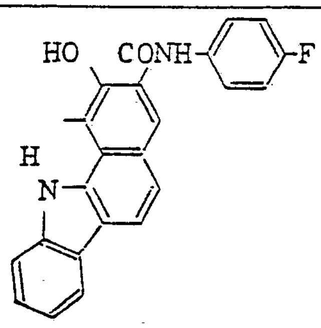 | $C_2H_5$ | H | H |
| D - (34) | 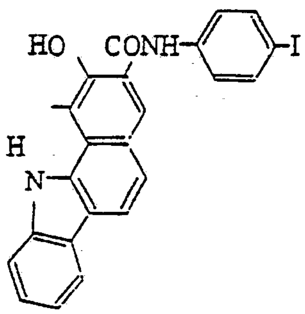 | H | H | H |
| D - (35) | 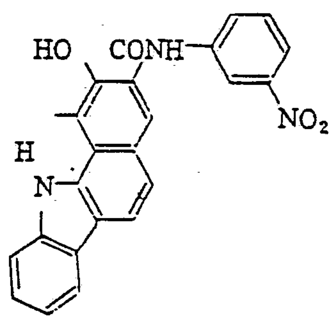 | $C_2H_5$ | H | H |

| | | | | |
|---|---|---|---|---|
| D - (36) | 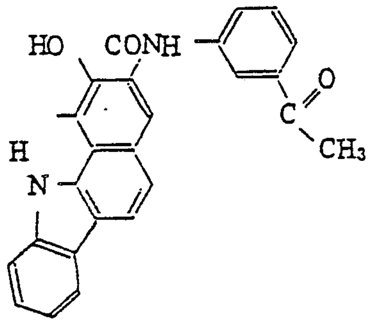 | $CH_3$ | H | H |
| D - (37) | 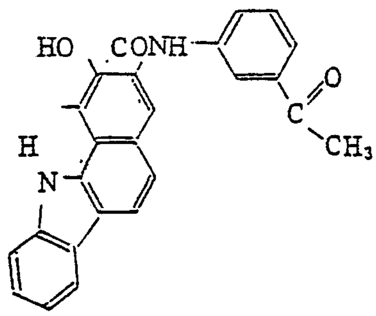 | OH | H | H |
| D - (38) | 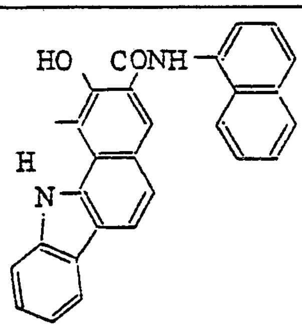 | $CH_3$ | H | H |
| D - (39) | 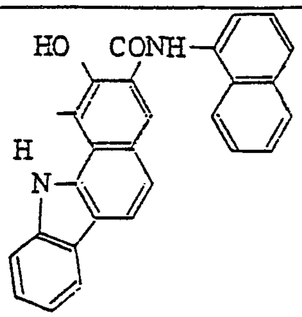 | $C_2H_5$ | H | H |

| | | | | |
|---|---|---|---|---|
| D - (40) | 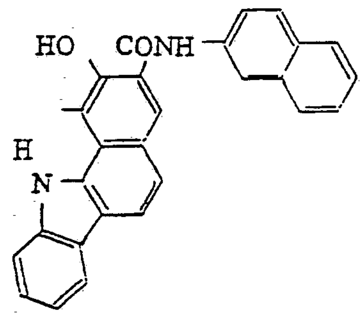 | $CH_3$ | Cℓ | Cℓ |
| D - (41) | 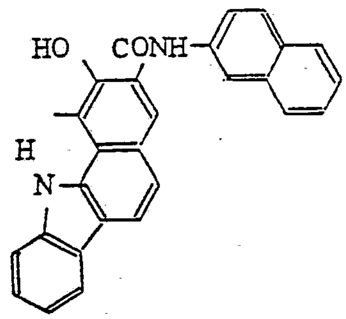 | OH | H | H |
| D - (42) | 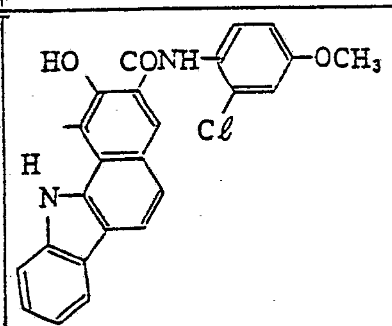 | $CH_3$ | H | H |
| D - (43) | 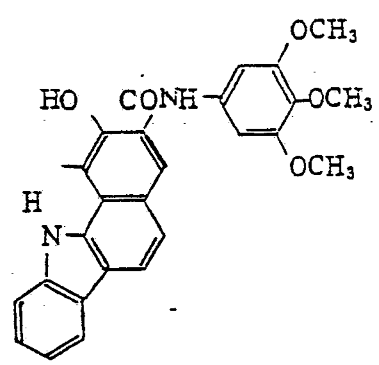 | $CH_3$ | H | H |

| | | | | |
|---|---|---|---|---|
| D - (44) | 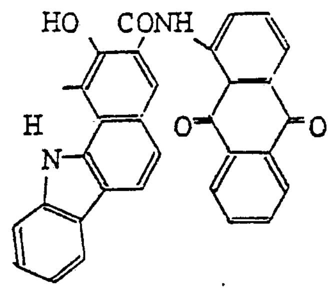 | $C_2H_5$ | H | H |
| D - (45) | 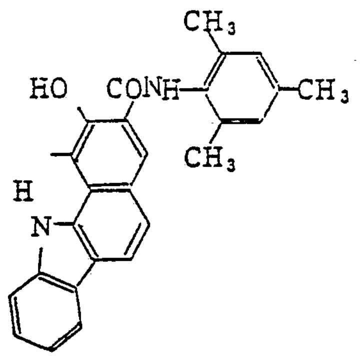 | $CH_3$ | H | H |
| D - (46) | 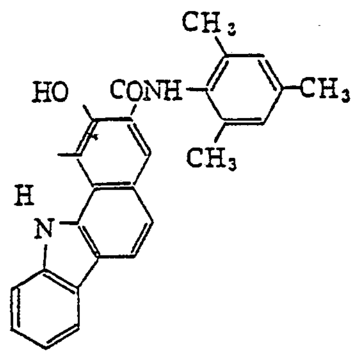 | OH | H | H |
| D - (47) | 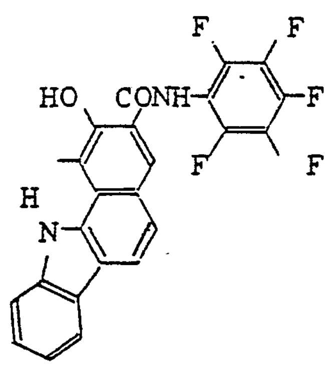 | $CH_3$ | H | H |

| | | | | |
|---|---|---|---|---|
| D - (48) | 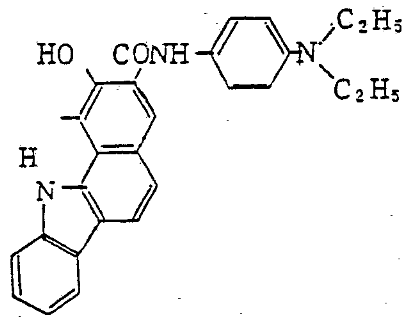 | $CH_3$ | H | H |
| D - (49) | 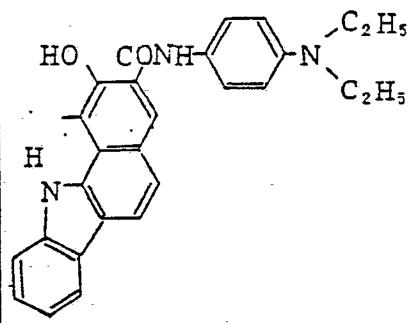 | $C_2H_5$ | OH | H |
| D - (50) | 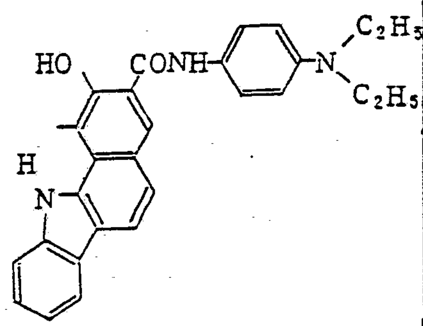 | 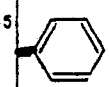 | H | H |
| D - (51) | 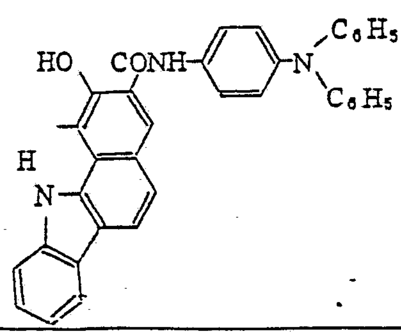 | $C_2H_5$ | H | H |

| | | | | |
|---|---|---|---|---|
| D - (52) | 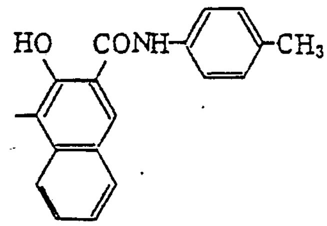 | $CH_3$ | H | H |
| D - (53) | 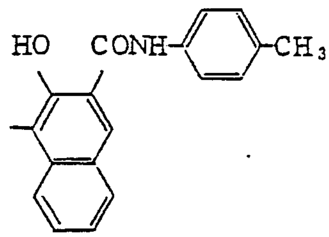 | $C_2H_5$ | H | H |
| D - (54) | 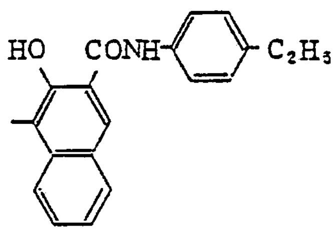 | $C_2H_5$ | H | H |
| D - (55) | 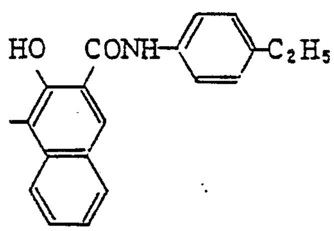 | $CH_3$ | H | H |
| D - (56) | 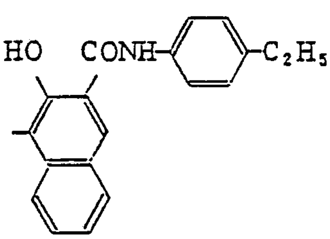 | 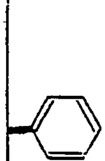 | H | H |

| | | | | |
|---|---|---|---|---|
| D - (57) | 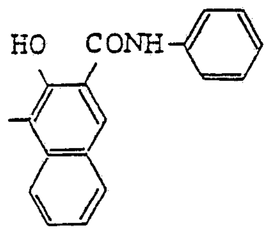 | $CH_3$ | H | H |
| D - (58) | 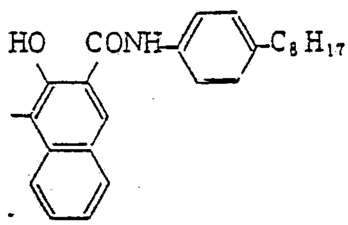 | $CH_3$ | $OCH_2$ | H |
| D - (59) | 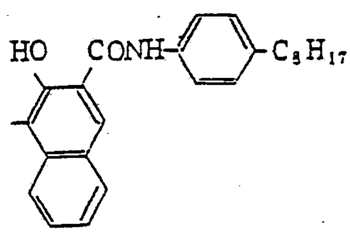 | $N(CH_3)_2$ | H | H |
| D - (60) | 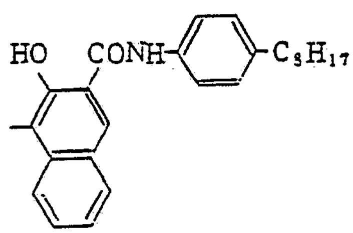 | $NH_2$ | H | H |
| D - (61) | 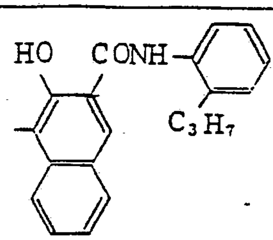 | $CH_3$ | H | H |

| | | | | |
|---|---|---|---|---|
| D - (62) | 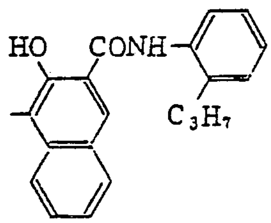 | 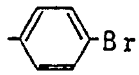 | H | H |
| D - (63) | 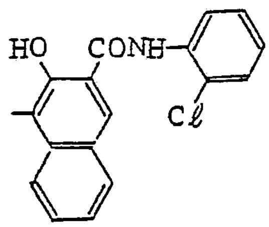 | $CH_3$ | H | H |
| D - (64) | 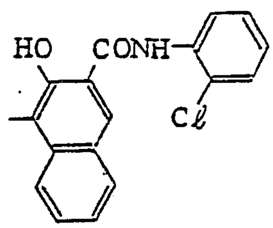 | $C_2H_5$ | H | H |
| D - (65) | 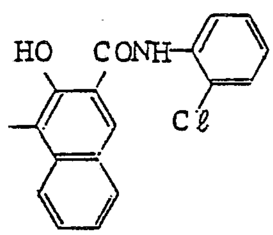 | OH | H | H |
| D - (66) | 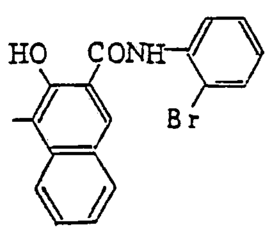 | $CH_3$ | H | H |

| | | | | |
|---|---|---|---|---|
| D - (67) | 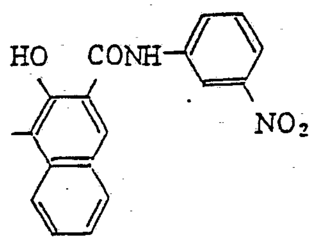 | $CH_3$ | H | H |
| D - (68) | 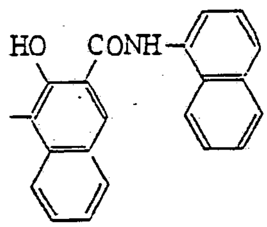 | $CH_3$ | H | H |
| D - (69) | 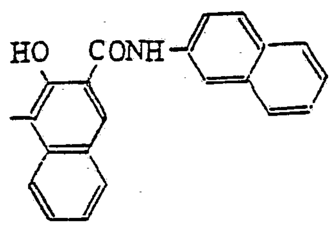 | $C_2H_5$ | H | H |
| D - (70) | 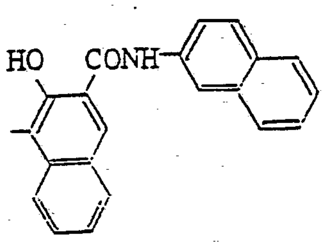 | $C_2H_5$ | H | H |
| D - (71) | 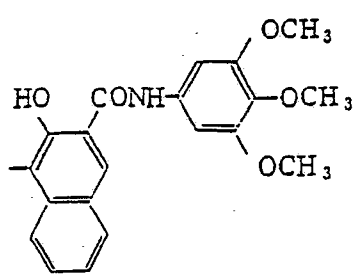 | $C_2H_5$ | H | H |

| | | | | |
|---|---|---|---|---|
| D - (72) | 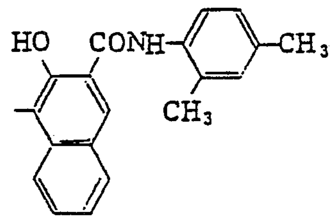 | $C_2H_5$ | H | H |
| D - (73) | 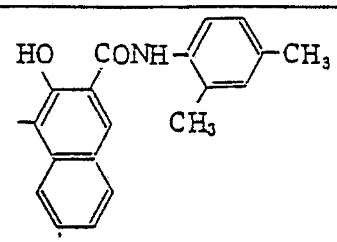 | $-N(CH_3)_2$ | H | H |
| D - (74) | 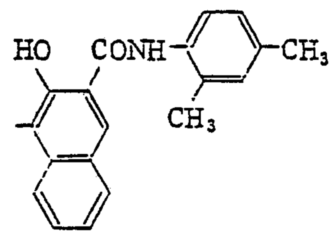 | $-OCH_3$ | H | H |
| D - (75) | 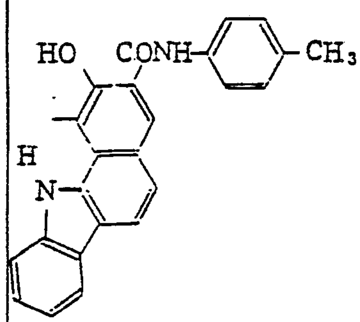 | $CH_3$ | H | H |
| D - (76) | 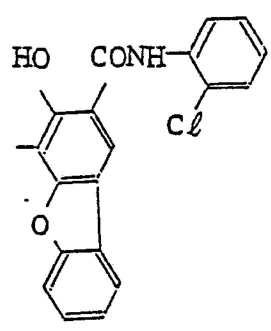 | H | H | H |

| | | | | | |
|---|---|---|---|---|---|
| D - (77) | 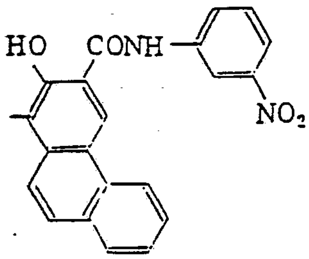 | OH | H | H |
| D - (78) | 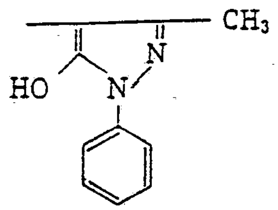 | $CH_3$ | H | H |
| D - (79) | 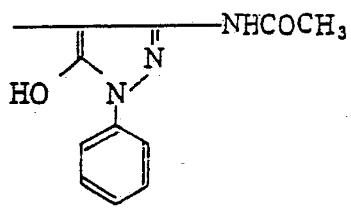 | $CH_3$ | H | H |
| D - (80) | 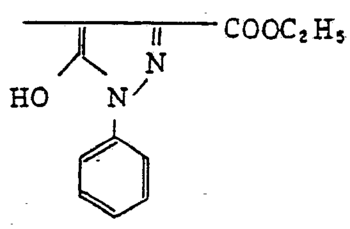 | $OCH_3$ | Cℓ | H |
| D - (81) | 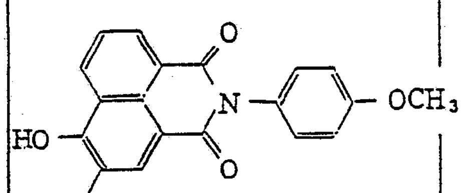 | $C_2H_5$ | H | Br |

| | | | | |
|---|---|---|---|---|
| D - (82) | 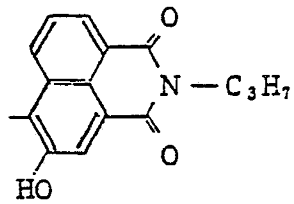 | $CH_3$ | H | H |
| D - (83) | 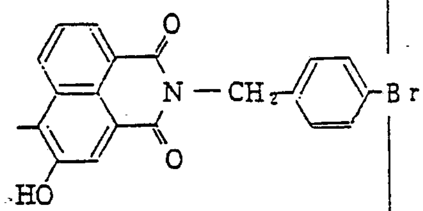 | H | H | $CH_3$ |

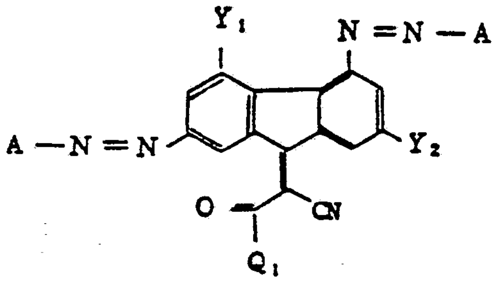

[I D]-IV

| Compound No. | A | Q1 | Y1 | Y2 |
|---|---|---|---|---|
| D - (84) | 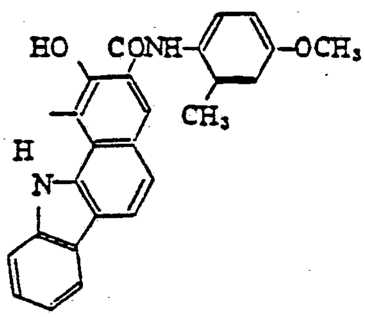 | $CH_3$ | H | H |
| D - (85) | 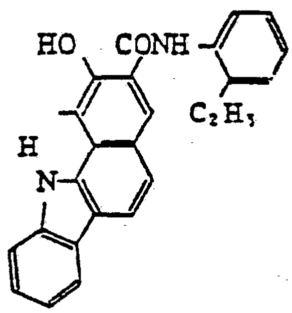 | 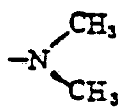 | H | H |
| D - (86) | 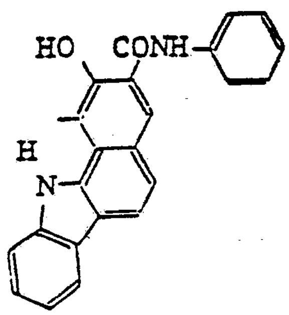 | $-C_2H_5$ | H | H |

| | | | | |
|---|---|---|---|---|
| D - (87) | 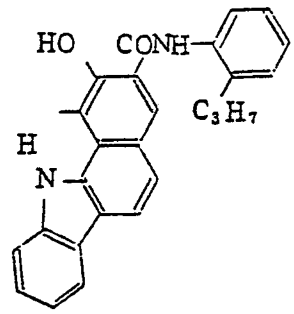 | $-C_2H_5$ | H | H |
| D - (88) | 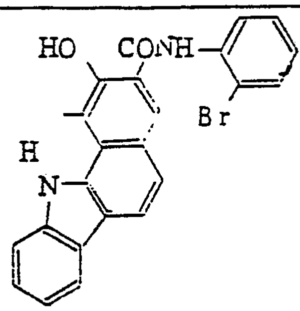 | $-OCH_3$ | H | H |
| D - (89) | 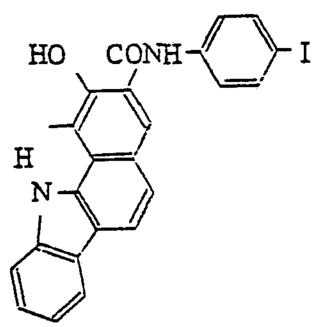 | 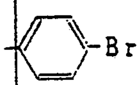 | H | H |
| D - (90) | 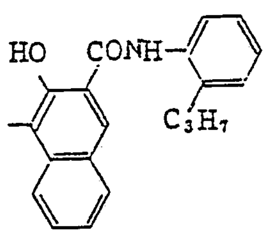 | $OCH_3$ | H | H |
| D - (91) | 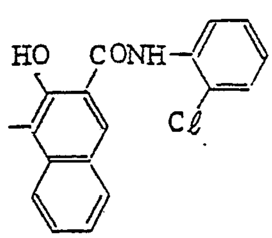 | $CH_3$ | H | H |

| | | | | |
|---|---|---|---|---|
| D - (92) | 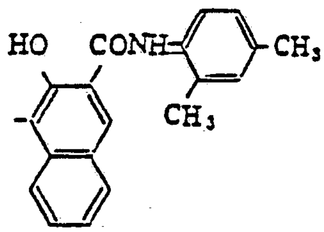 | 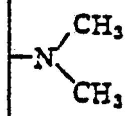 | H | H |
| D - (93) | 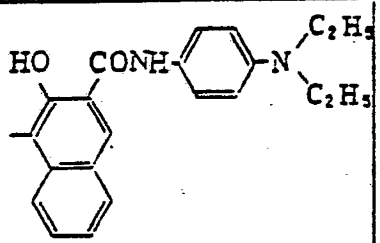 | $CH_3$ | H | H |

D - (94)

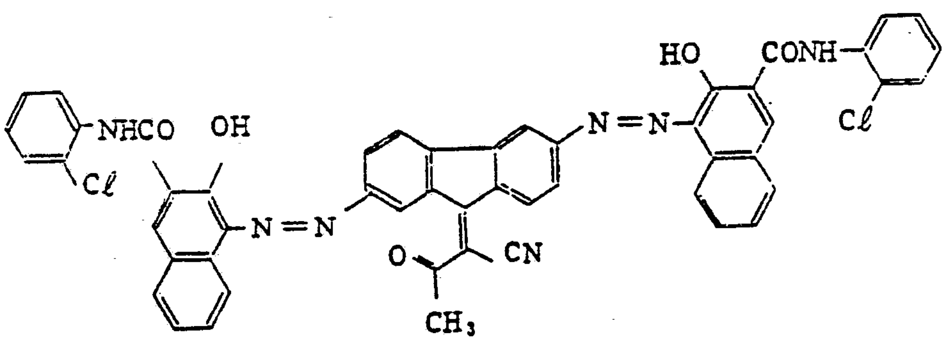

The azo compounds described above can be synthesized easily according to a known method. A typical example is shown below.

Synthesis Example 4

[Synthesis of compound of formula D—(1)]

The synthesis route is schematically shown below:

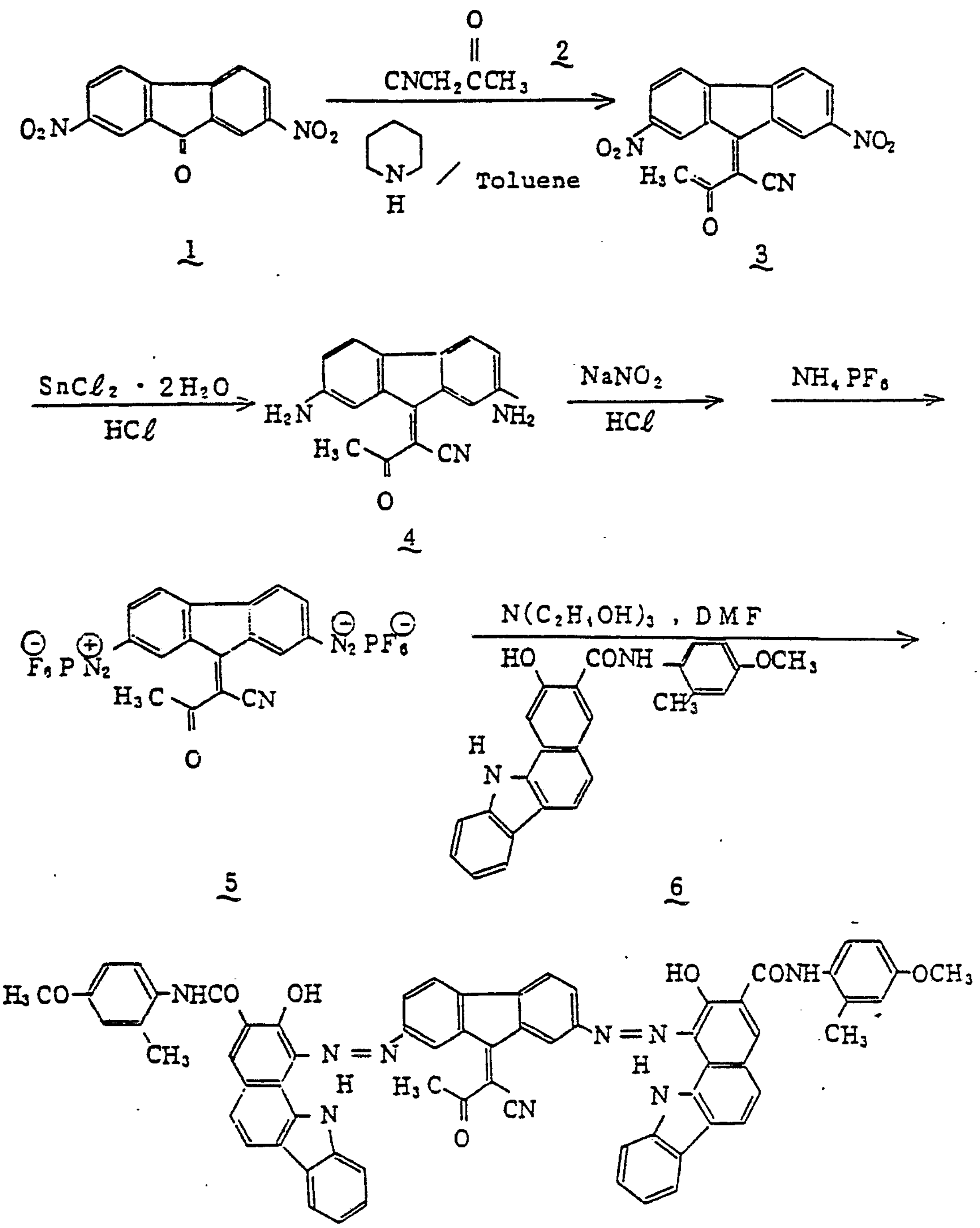

1 2 3 4 5 6

D - (1)

2,7-Dinitrofluorenone *1* (produced by Tokyo Kasei K.K.) was reacted with cyanoacetone *2* to produce a dinitro derivative *3*, which was then reduced with stannous chloride to form a diamino derivative *4* (Journal of Chemical Society, 870 (1954)). The diamino derivative *4* (27.5 g, 0.1 mole) was dispersed by adding it to a mixture of 1 liter of conc. HCl and 1 liter of water and a solution of 13.8 g (0.2 mole) of sodium nitrite dissolved in 1 liter of water was added dropwise at 5°C under ice-cooling. After completion of the addition, the reaction mixture was filtered, and 1 liter of an aqueous 50% ammonium hexafluorophosphate solution was added to the filtrate. The resultant precipitate was recovered by filtration, washed with water and thoroughly dried. The salt obtained was dissolved in 1.5 liters of N,N-dimethylformamide (DMF) to provide a tetrazonium salt solution to be used in the subsequent reaction.

As the next step, 79.3 g (0.2 mole) of 2-hydroxy-3-(4-methoxy-2-methylphenylcarbamoyl)-benzo[a]-carbazole (Naphthol AS-SR, produced by Hoechst AG) and 60 g of triethanolamine were dissolved in 4 liters of N,N-dimethylformamide, and the tetrazonium salt solution as prepared above was added dropwise under ice-cooling to the resultant solution, followed further by stirring for 2 hours to carry out the reaction. The crystals formed were recovered by filtration, and they were washed twice with 5 liters of N,N-dimethylformamide and twice with 5 liters of acetone, followed by drying, to obtain 68.7 g of the desired bisazo compound D—(1) (63%). From the analytical results of m.p. 300°C or higher, FD-MS spectrum which indicates a peak of $M^+$ at m/Z 1089, and the elemental analysis of C = 73.72%, N = 11.47%, H = 4.37% (Calcd. values, C = 73.81%, N = 11.56%, H = 4.35%), it was confirmed that the desired substance was synthesized.

*Embodiment E*

The compound may be of formula [IE]:

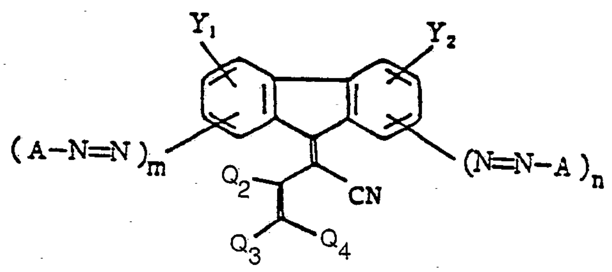

[IE]

wherein $Q_2$, $Q_3$, $Q_4$, $Y_1$, $Y_2$, *m*, *n* and A are as defined in formula [I].

Preferred compounds having good sensitivity and stability to heat and light are of formula [IE]—II:

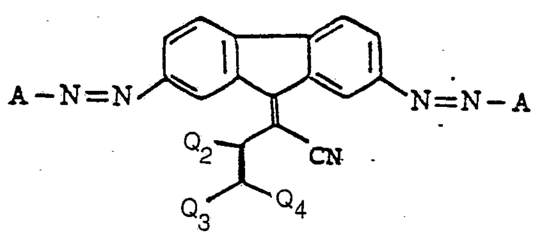

[IE]-II

wherein $Q_2$, $Q_3$, $Q_4$, $Y_1$, $Y_2$ and A are as defined in formula [ID].

Examples of useful azo compounds of formula [IE] include, for example, those of formula:

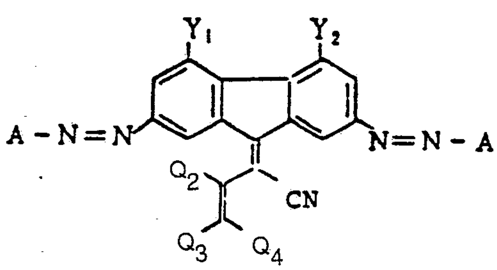

[IE]—III

| Compound No. | A | $Q_1$ | $Q_2$ | $Q_3$ | $Y_1$ | $Y_2$ |
|---|---|---|---|---|---|---|
| E-(1) | 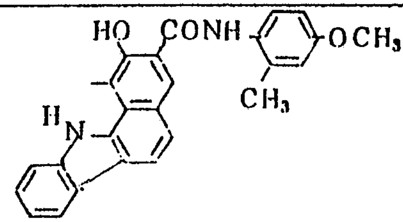 | H | $CH_3$ | $CH_3$ | H | H |
| E-(2) | 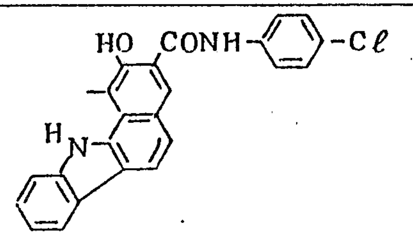 | H | H | H | H | H |
| E-(3) | 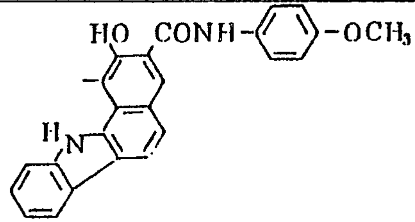 | H | $CO_2CH_3$ | H | H | H |
| E-(4) | 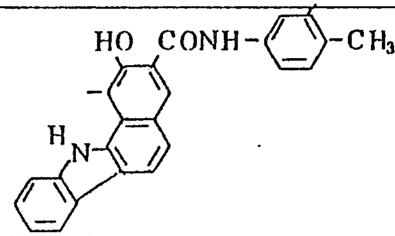 | H | H | H | H | H |

| | | | | | | |
|---|---|---|---|---|---|---|
| E-(5) | 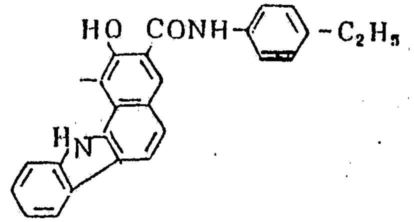 | H | H | H | H | H |
| E-(6) | 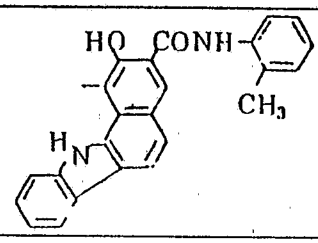 | H | H | H | H | H |
| E-(7) | 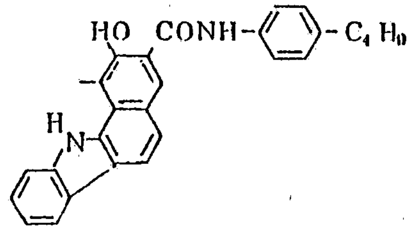 | H | H | H | H | H |
| E-(8) | 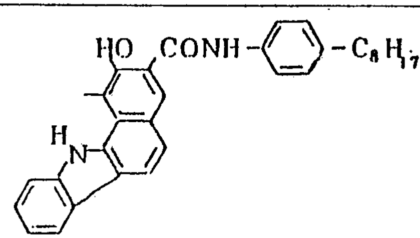 | H | H | H | H | H |

| | | | | | | |
|---|---|---|---|---|---|---|
| E-(9) | 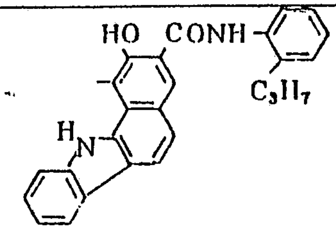 | H | H | H | H | H |
| E-(10) | 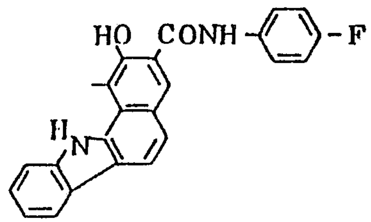 | H | H | H | H | H |
| E-(11) | 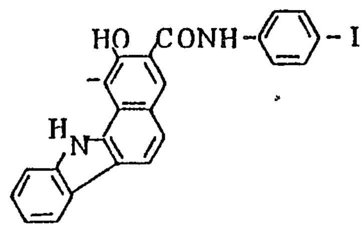 | H | $CH_3$ | H | H | H |
| E-(12) | 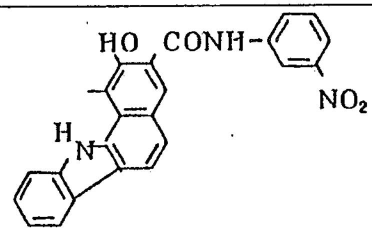 | H | H | $CH_3$ | H | $CH_3$ |

| | | | | | | |
|---|---|---|---|---|---|---|
| E-(13) | 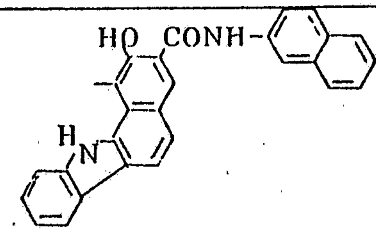 | H | H | H | H | H |
| E-(14) | 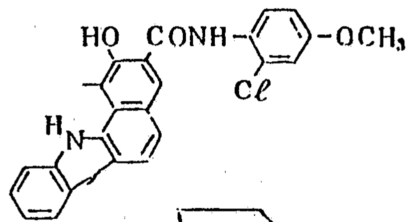 | H | H | H | H | O $CH_3$ |
| E-(15) | 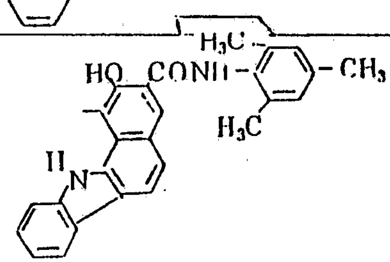 | H | $CH_3$ | H | $CH_3$ | H |
| E-(16) | " | H | H | $CH_3$ | $CH_3$ | H |
| E-(17) | 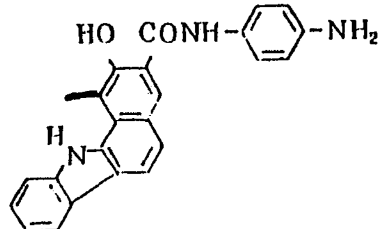 | H | H | H | H | Cℓ |

| | | | | | | |
|---|---|---|---|---|---|---|
| E-(18) | 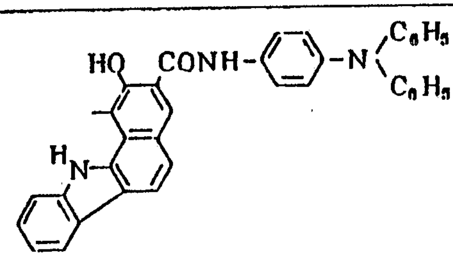 | H | 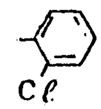 | H | H | H |
| E-(19) | 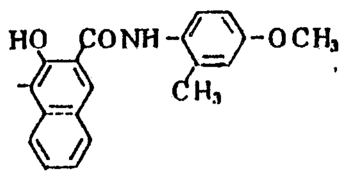 | H | H | H | H | H |
| E-(20) | 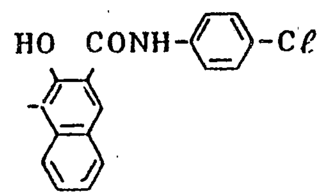 | 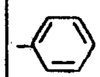 | 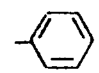 | H | H | H |
| E-(21) | 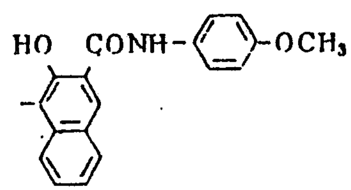 | H | H | H | H | H |

| | | | | | | |
|---|---|---|---|---|---|---|
| E-(22) | 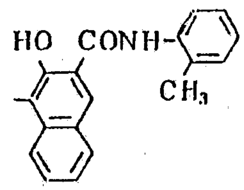 | H | $CH_3$ | H | H | H |
| E-(23) | 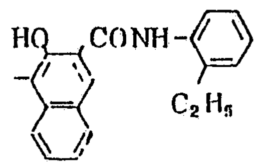 | H | H | H | H | H |
| E-(24) | 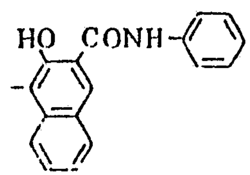 | H | H | H | H | H |
| E-(25) | 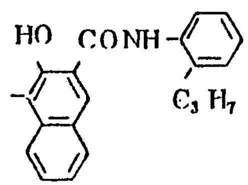 | H | $CH=CH-CH_3$ | H | H | H |

| | | | | | | |
|---|---|---|---|---|---|---|
| E-(26) | 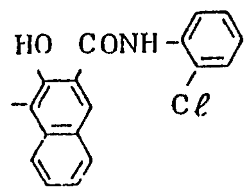 | H | H | H | H | H |
| E-(27) | 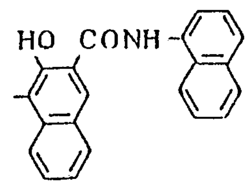 | H | H | H | H | H |
| E-(28) | " | H | 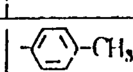 | H | H | H |
| E-(29) | 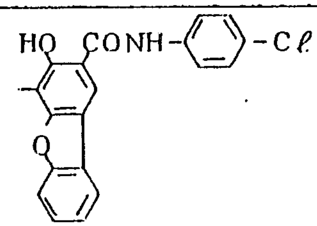 | H | OH | H | H | H |
| E-(30) | 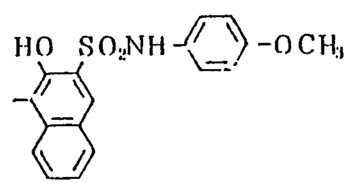 | H | 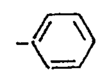 | H | H | H |

| | | | | | | |
|---|---|---|---|---|---|---|
| E-(31) | 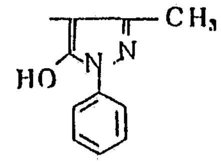 | H | -CH=CH-$CH_3$ | H | H | H |
| E-(32) | 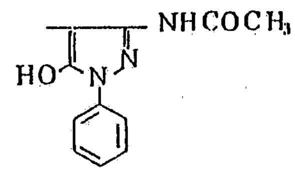 | H | $-OC_2H_5$ | H | H | H |
| E-(33) | 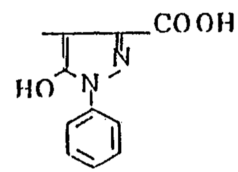 | H | 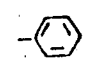 | H | H | H |
| E-(34) | 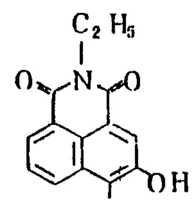 | H | $-CH_2N(CH_3)_2$ | H | H | H |

| | | | | | | |
|---|---|---|---|---|---|---|
| E- (35) | 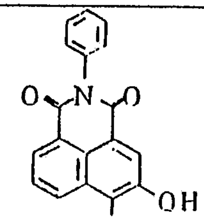 | H | $-NHC_6H_{11}$ | H | H | H |
| E-(36) | 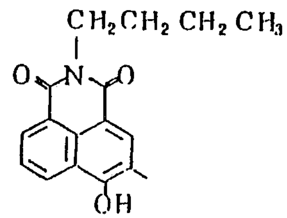 | H | 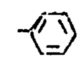 | H | H | H |

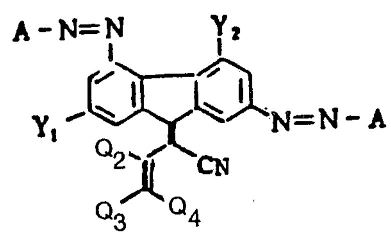

[IE]–IV

| Compound No. | A | $Q_1$ | $Q_2$ | $Q_3$ | $Y_1$ | $Y_2$ |
|---|---|---|---|---|---|---|
| E-(37) | 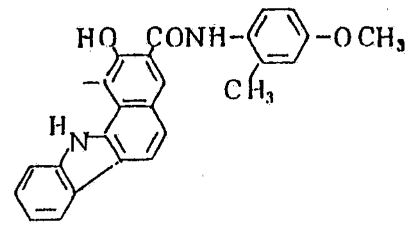 | H | $CH=CH-CH_3$ | H | H | H |
| E-(38) | 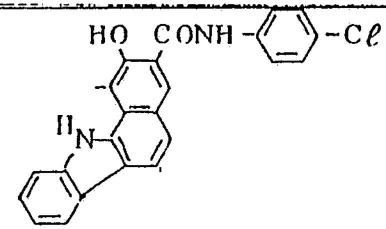 | H | $CO_2CH_3$ | H | H | H |
| E-(39) | 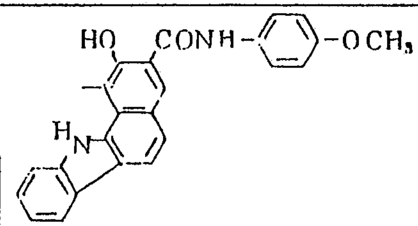 | H | $CH_3$ | $CH_3$ | H | H |
| E-(40) | " | H | H | H | H | H |

| | | | | | | |
|---|---|---|---|---|---|---|
| E-(41) | 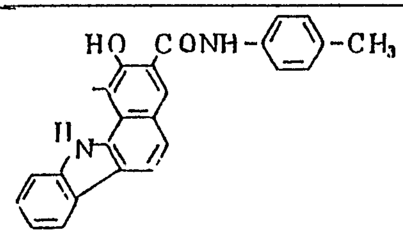 | H | $-OC_2H_5$ | H | H | H |
| E-(42) | 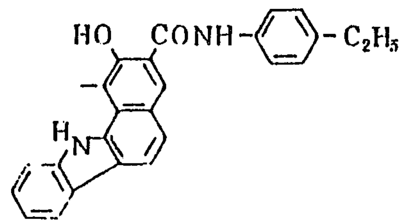 | H | 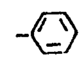 | H | H | H |
| E-(43) | 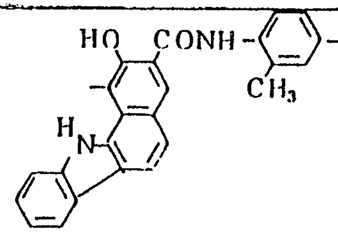 | H | $CO_2CH_3$ | H | H | H |
| E-(44) | 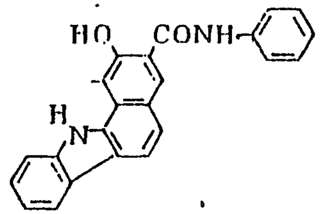 | H | H | H | H | H |

| | | | | | | |
|---|---|---|---|---|---|---|
| B-(45) | 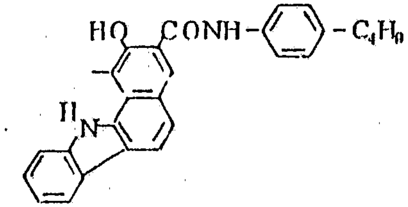 | H | H | H | H | H |
| E-(46) | 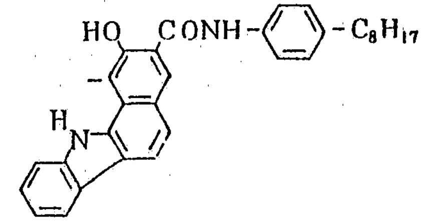 | H | 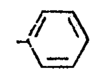 | H | H | H |
| E-(47) | 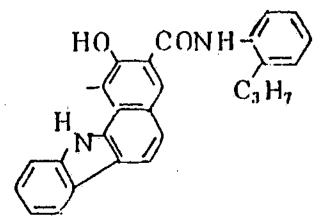 | H | 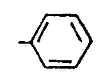 | H | H | H |
| E-(48) | 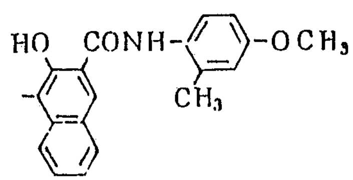 | H | H | H | H | H |

| | | | | | | |
|---|---|---|---|---|---|---|
| E-(49) | 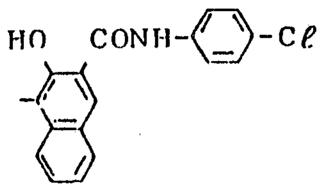 | H | CH=CH-CH$_3$ | H | H | H |
| E-(50) | 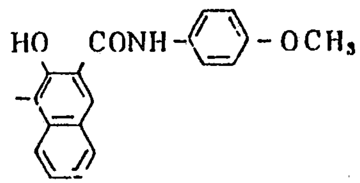 | H | $-OC_2H_5$ | H | H | H |
| E-(51) | 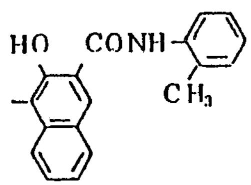 | H | H | H | H | H |
| E-(52) | 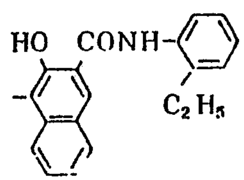 | 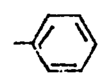 | 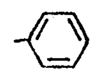 | H | H | H |

| | | | | | | |
|---|---|---|---|---|---|---|
| E-(53) | 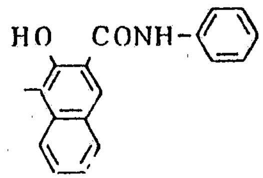 | H | $CH_3$ | $CH_3$ | H | H |
| E-(54) | 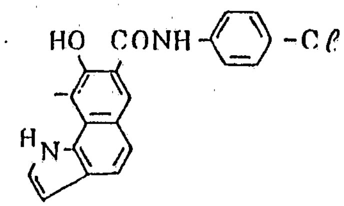 | H | $CO_2C_2H_5$ | H | H | H |
| E-(55) | 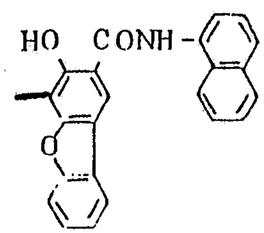 | H | $CO_2C_2H_5$ | H | H | H |
| E-(56) | 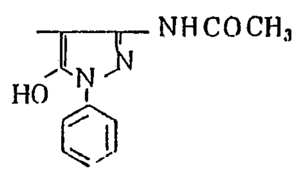 | H | H | H | H | H |

| | | | | | | |
|---|---|---|---|---|---|---|
| E-(57) | 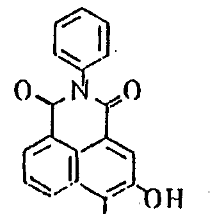 | H | 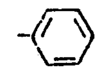 | H | H | H |
| E-(58) | 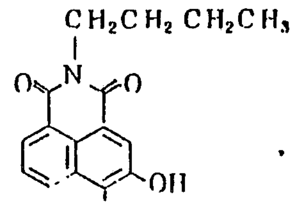 | H | $-CH=CH-CH_3$ | H | H | H |
| E-(59) | 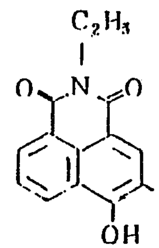 | H | $-OCH_3$ | H | H | H |

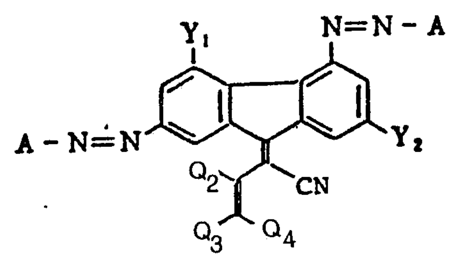

(IE)-V

| Compound No. | A | $Q_1$ | $Q_2$ | $Q_3$ | $Y_1$ | $Y_2$ |
|---|---|---|---|---|---|---|
| E-(60) | 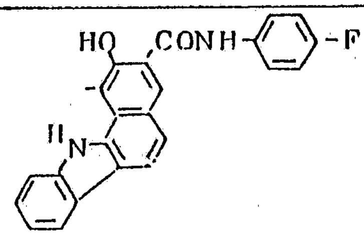 | H | H | H | H | H |
| E-(61) | 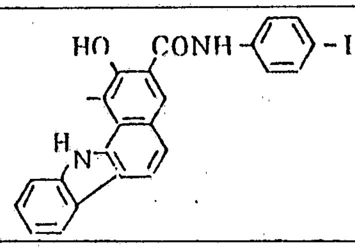 | 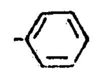 | 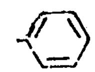 | H | H | H |
| E-(62) | 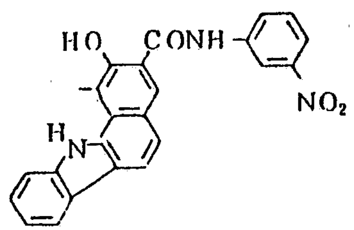 | 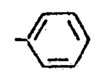 | 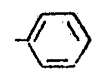 | H | $CH_3$ | H |
| E-(63) | 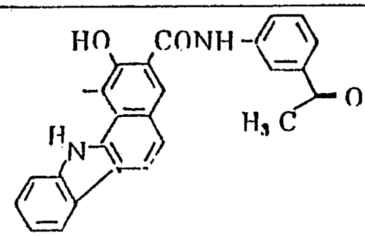 | H | H | H | H | H |

| | | | | | | |
|---|---|---|---|---|---|---|
| E-(64) | 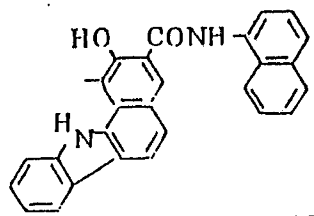 | H | $CH=CH-CH_3$ | H | H | H |
| E-(65) | 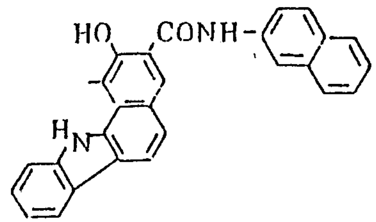 | H | CH=CH-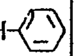 | H | H | H |
| E-(66) | 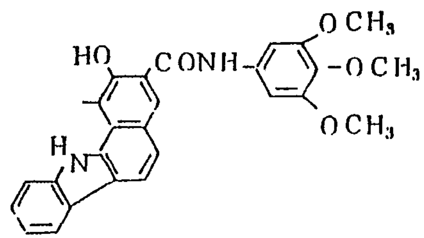 | H | H | H | $OCH_3$ | H |
| E-(67) | 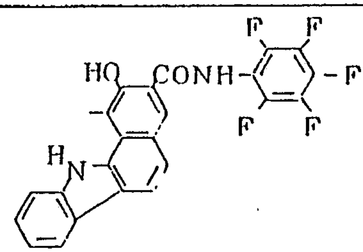 | H | H | H | H | H |

| | | | | | | |
|---|---|---|---|---|---|---|
| E-(68) | 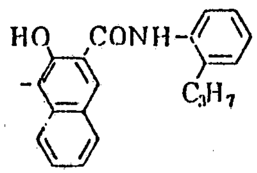 | H | H | H | H | H |
| E-(69) | 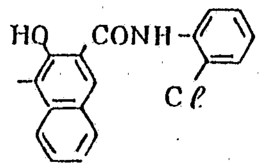 | H | $CH_3$ | $CH_3$ | H | H |
| E-(70) | 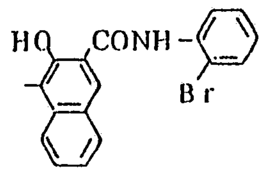 | H | $CH_3$ | $CH_3$ | H | H |
| E-(71) | 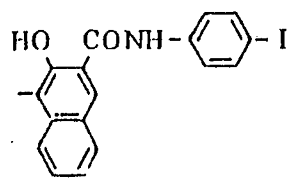 | H | $CH_3$ | $CH_3$ | H | H |

| | | | | | | |
|---|---|---|---|---|---|---|
| E-(72) | 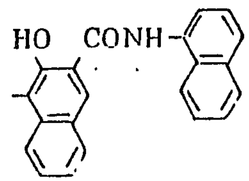 | H | H | H | H | H |
| E-(73) | " | H | 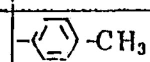 | H | H | H |
| E-(74) | 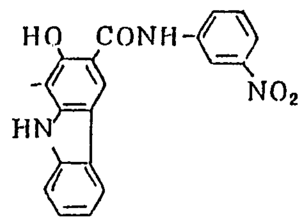 | H | H | H | H | H |
| E-(75) | 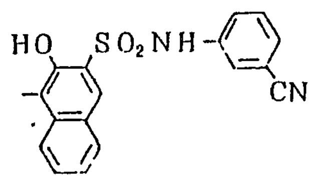 | H | $OC_2H_5$ | H | H | H |

| | | | | | | |
|---|---|---|---|---|---|---|
| E-(76) | 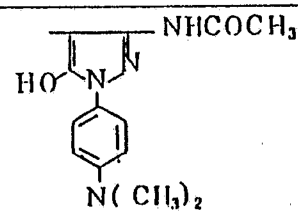 | H | H | H | H | H |
| E-(77) | 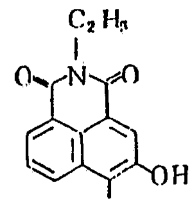 | H | 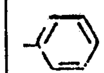 | H | H | H |
| E-(78) | 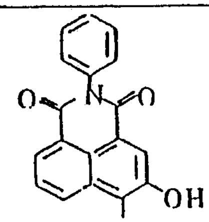 | H | 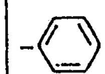 | H | H | H |

| | | | | | | |
|---|---|---|---|---|---|---|
| E-(79) | 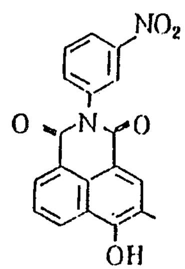 | H | 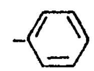 | H | H | H |

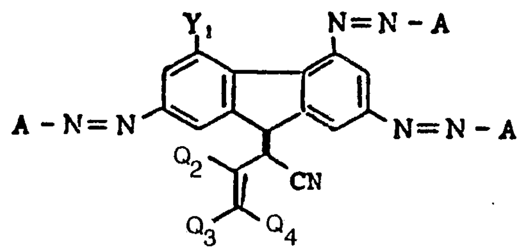 [IE]-VI

| Compound No. | A | $Q_1$ | $Q_2$ | $Q_3$ | $Y_1$ |
|---|---|---|---|---|---|
| E-(80) | 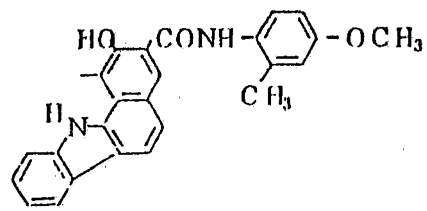 | H | H | H | H |
| E-(81) | 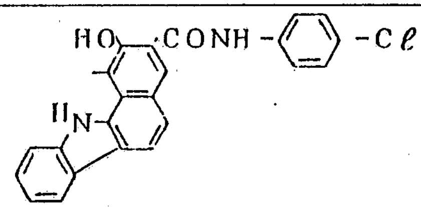 | H | 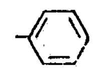 | H | H |
| E-(82) | 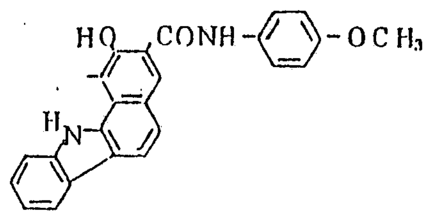 | H | 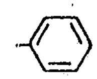 | H | H |
| E-(83) | 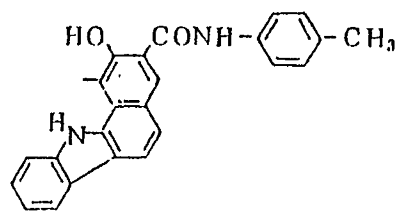 | H | H | H | H |

| | | | | | |
|---|---|---|---|---|---|
| E-(84) | 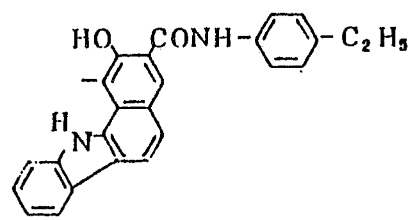 | H | $CO_2CH_3$ | H | H |
| E-(85) | 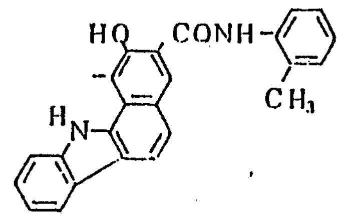 | H | $CO_2CH_3$ | H | H |
| E-(86) | 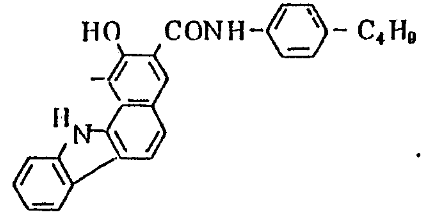 | H | H | H | H |
| E-(87) | 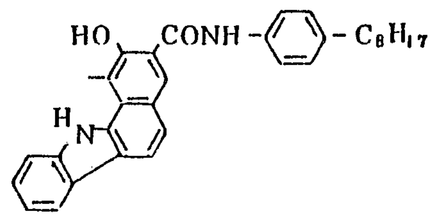 | H | $CH_3$ | $CH_3$ | H |

| | | | | | |
|---|---|---|---|---|---|
| E-(88) | 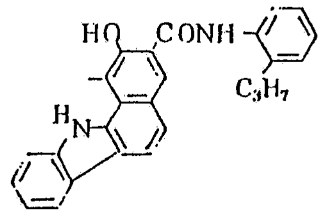 | $CH_3$ | $CH_3$ | $CH_3$ | H |
| E-(89) | 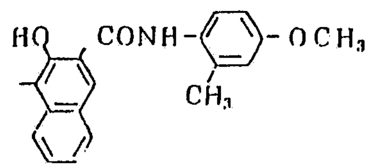 | H | H | H | H |
| E-(90) | 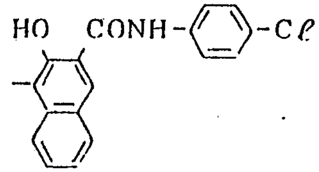 | H | H | H | H |
| E-(91) | 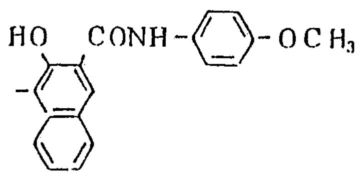 | H | H | H | H |

| | | | | | |
|---|---|---|---|---|---|
| E-(92) | 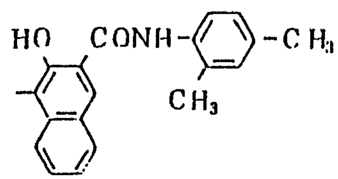 | H | $-CH=CH-CH_3$ | H | H |
| E-(93) | 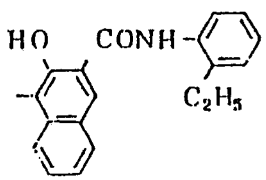 | H | 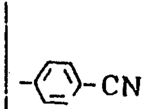 | H | H |
| E-(94) | 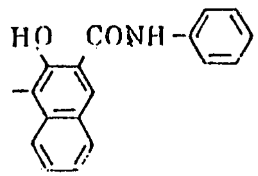 | H | $CH_2N\langle^{CH_3}_{CH_3}$ | H | H |
| E-(95) | 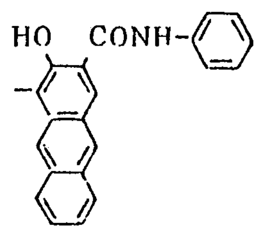 | H | H | H | H |

| | | | | | |
|---|---|---|---|---|---|
| E-(96) | 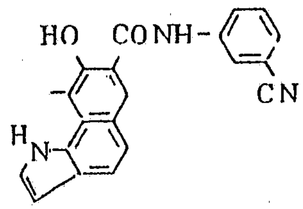 | H | H | H | H |
| E-(97) | 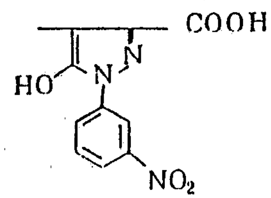 | H | 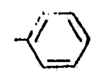 | H | H |
| E-(98) | 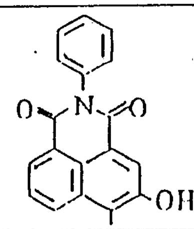 | H | 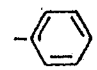 | H | H |
| E-(99) | 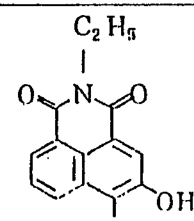 | H | 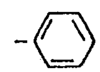 | H | H |

E - (37)

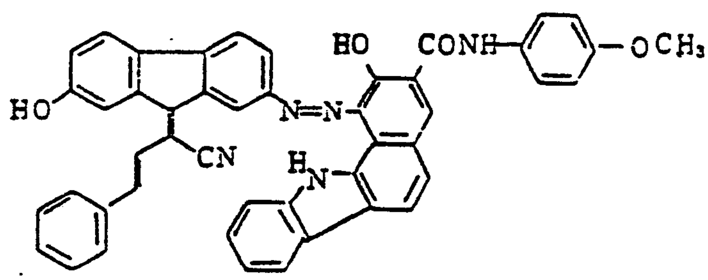

E - (38)

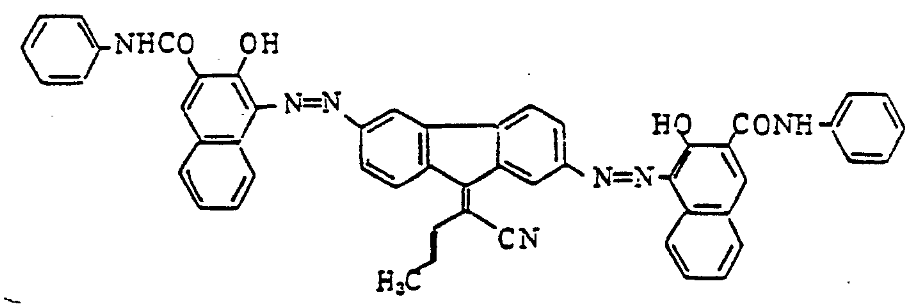

The azo compounds used in the present invention have excellent photoconductivity. A photoreceptor may be prepared by dispersing the azo compound in a binder on an electroconductive support. A particularly good effect can be obtained when the photoreceptor of the so-called function separation type is constituted by use of the azo compound of formula [I] as the carrier generating material through utilization of the particularly excellent carrier photoconductivity generating ability possessed by the azo compound, together with a carrier transporting material which can act effectively in combination therewith. The function separation type photoreceptor may be a dispersion type, but a lamination type photoreceptor in which the carrier generating layer containing the carrier generating material and the carrier transporting layer containing the carrier transporting material are laminated together is preferred.

The azo compound to be used in the present invention may be employed either alone or as a combination of two or more compounds of formula [I], or in combination with other azo compounds.

Various forms are known for mechanical constitution of photoreceptors, and any one of them can be used for the photoreceptor of this invention.

Generally, photoreceptors take the forms as shown in Figs. 1 through 6. In Fig. 1 and Fig. 3, a photosensitive layer comprising a laminated product of a carrier generating layer 2 containing the azo compound of formula [I] as the main component and a carrier transporting layer 3 containing a carrier transporting material as the main component is provided on an electroconductive support 1. As shown in Fig. 2 and Fig. 4, the photoreceptor may also be provided with an intermediate layer 5 provided on the electroconductive support. A photoreceptor with the best electrophotographic characteristics can be obtained when the photosensitive layer 4 is thus constituted of the two layers. The present invention may also provide a photoreceptor as shown in Fig. 5 and Fig. 6, which comprises a photosensitive layer 4 comprising the above carrier generating material 7 dispersed in the layer 6 containing the carrier transporting material as the main component directly or through the intermediate layer 5.

When the azo compound of formula [I] is employed as the carrier generating material, the carrier transporting material which can be used in combination therewith may, for example, be electron acceptors which can readily transport electrons such as trinitrofluorenone or tetranitrofluorenone, and otherwise electron doners which can readily transport positive holes such as polymers having heterocyclic groups as side chains, typically poly-N-vinylcarbazole, triazole derivatives, oxadiazole derivatives, imidazole derivatives, pyrazoline derivatives, polyarylalkane derivatives, phenylenediamine derivatives, hydrazone derivatives, amino-substituted chalcone derivatives, triarylamine derivatives, carbazole derivatives, stilbene derivatives, and phenothiazine derivatives.

The carrier generating layer 2 constituting the photosensitive layer 4 with a double-layer construction may be formed directly on the electroconductive support 1 or the carrier transporting layer 3, or on an intermediate layer, which may or may not be present, such as an adhesive layer or a barrier layer as described below.

M—1) A method in which a solution of the azo compound dissolved in an appropriate solvent, optionally mixed and dissolved with a binder, is coated.

M—2) A method in which the azo compound is micropulverized in a dispersing medium by means of a ball mill or a homomixer, optionally together with a binder, and the resultant dispersion is coated.

The solvent or dispersing medium used in the formation of the carrier generating layer includes, for example, n-butylamine, diethylamine, ethylenediamine, isopropanolamine, triethanolamine, triethylenediamine, N,N-dimethylformamide, acetone, methyl ethyl ketone, cyclohexanone, benzene, toluene, xylene, chloroform, 1,2-dichoroethane, dichloromethane, tetrahydrofuran, dioxane, methanol, ethanol, isopropanol, ethyl acetate, butyl acetate, and dimethyl sulfoxide.

Any binder may be used in the carrier generating layer or the carrier transporting layer, but it is preferred to use a film-forming polymer which is hydrophobic, and which has a high dielectric constant and is electrically insulating. Such polymers may be, for example:

P—1) Polycarbonate;
P—2) Polyester;
P—3) Methacrylic resin;
P—4) Acrylic resin;
P—5) Polyvinyl chloride;
P—6) Polyvinylidene chloride;
P—7) Polystyrene;
P—8) Polyvinyl acetate;
P—9) Styrene-butadiene copolymer;
P—10) Vinylidene chloride-acrylonitrile copolymer;
P—11) Vinyl chloride—vinyl acetate copolymer;
P—12) Vinyl chloride—vinyl acetate-maleic anhydride copolymer;
P—13) Silicone resin;
P—14) Silicone-alkyd resin;
P—15) Phenol-formaldehyde resin;
P—16) Styrene-alkyd resin;
P—17) Poly-N-vinylcarbazole.

These binders may be used either singly or as a mixture of two or more.

The carrier generating layer 2 preferably has a thickness of 0.01 μm to 20 μm, more preferably of 0.05 μm to 5 μm. When the carrier generating layer or the photosensitive layer is a dispersion system, the azo compound should preferably have a particle size of 5 μm or less, more preferably 1 μm or less.

The electroconductive support used in the photoreceptor of the invention may be, for example, a plate or drum of a metal or alloys, or a paper or plastic film made electroconductive by coating, vapor deposition or lamination of a metal thin films or a thin film of an electroconductive compound or alloy thereon. In the intermediate layer, such as an adhesive layer or barrier layer, in addition to the polymers used as the binder, it is also possible to use organic polymeric materials such as polyvinyl alcohol, ethyl cellulose or carboxymethyl cellulose or aluminum oxide.

The photoreceptor of the invention has excellent charging characteristics, sensitivity characteristics and image forming characteristics, and is particularly excellent in durability without deterioration due to fatigue when used repeatedly, as can clearly be seen from the following Examples.

Example 1

To 110 ml of 1,2-dichloroethane were added 2 g of compound A—(21) and 2 g of a polycarbonate resin "Panlite L-1250" (trade name, produced by Teijin Kasei K.K.) and dispersed therein in a ball mill for 12 hours. The resultant dispersion was applied to a polyester film with aluminum vapor deposited thereon to provide a dried film thickness of 1 μm to provide a carrier generating layer, followed further by coating thereon with a solution of 6 g of 1-phenyl-(p-methylstyryl)-5-(p-methoxyphenyl)-pyrazoline (having the formula K—(1) shown below) and 10 g of a polycarbonate resin "Panlite L-1250" dissolved in 110 ml of 1,2-dichloroethane to a dried film thickness of 15 μm to form a carrier transporting layer, thus preparing a photoreceptor of this invention.

K - (1)

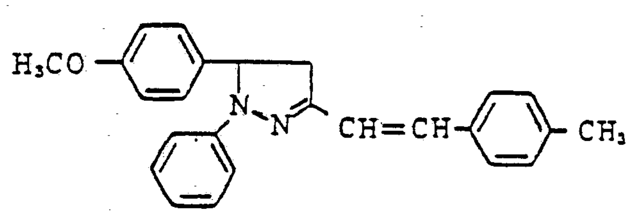

By use of the photoreceptor as described above, the following characteristic evaluations were conducted with an electrical paper testing machine Model SP-428 produced by Kawaguchi Denki Seisakusho K.K. After charging at a charged voltage of −6 KV for 5 seconds, the member was left to stand in dark for 5 seconds and then irradiated with a halogen lamp light to a luminosity of 35 lux on the surface of the photoreceptor, and the dose required for attenuating the surface potential to the half value (half-reduction dosage) $E_{1/2}$ was determined. Also, the surface potential after exposure at a dose of 30 lux · sec (residual potential) $V_R$ was determined. Further, similar measurements were repeated for 100 times. The results are shown in Table 1.

Table 1

| | First measurement | 100th measurement |
|---|---|---|
| $E_{1/2}$ (lux·sec) | 1.5 | 1.5 |
| $V_R$ (V) | 0 | 0 |

Comparative Example 1

A photoreceptor for comparative purpose was prepared in the same manner as in Example 1 except for employing the bisazo compound L—(1) shown below as the carrier generating material.

L - (1)

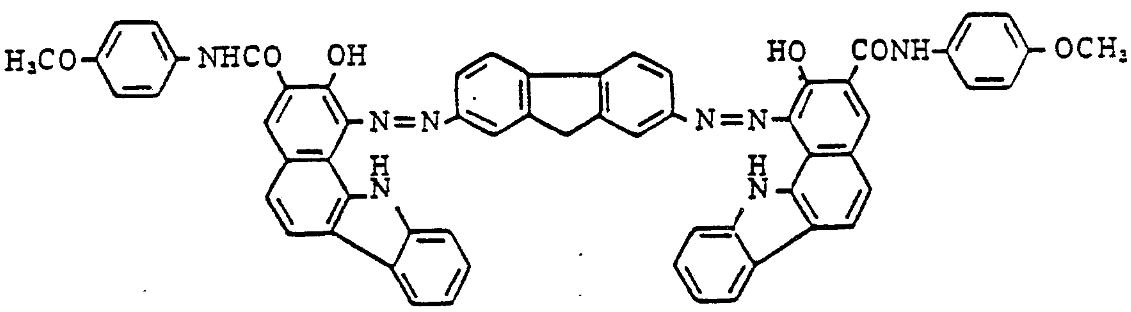

For this photoreceptor for comparative purpose, measurements were conducted similarly as in Example 1 to obtain the results as shown in Table 2.

Table 2

| | First measurement | 100th measurement |
|---|---|---|
| $E_{1/2}$ (lux·sec) | 9.5 | 12.3 |
| $V_R$ (V) | - 25 | - 140 |

As seen from the above results, the photoreceptor of the invention is very superior to the photoreceptor for comparative purpose with respect to sensitivity, residual potential and stability in repeated uses.

Examples 2—4

Using compounds A—(5), A—(6) and A—(7) as the carrier generating material, and 6-methyl-1-(1-ethyl-4-carbazolyl)methylideneamino-1,2,3,4-tetrahydroquinoline (compound K—(1) shown below), 1-(1-ethyl-4-carbazolyl)methylideneamino-1,2,3,4-tetrahydroquinoline (the compound K—(2) shown below) and 4,4′-dimethyl-4″-(4-chloro)-styryltriphenylamine (the compound K—(3) shown below), respectively, following otherwise the same procedure as described in Example 1, photoconductive members of this invention were prepared and subjected to similar measurements to obtain the results shown in Table 3.

K - (2)

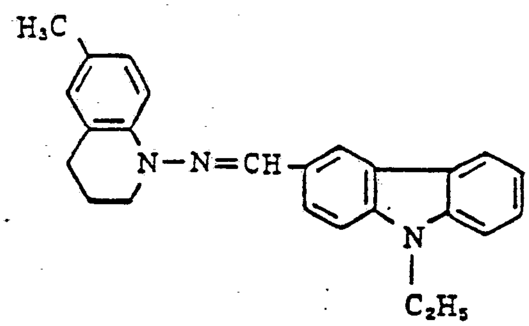

K - (3)

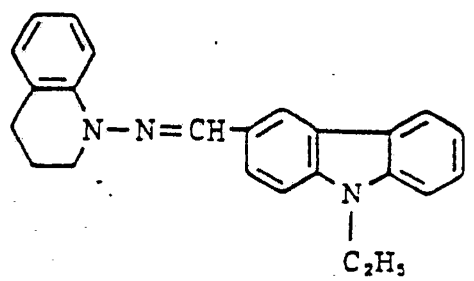

K - (4)

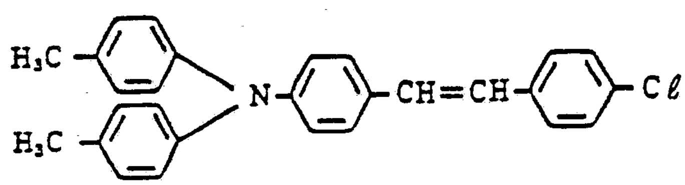

Table 3

| Example | Azo compound | First measurement | | 100th measurement | |
|---|---|---|---|---|---|
| | | $E_{1/2}$ (lux·sec) | $V_R$ (V) | $E_{1/2}$ (lux·sec) | $V_R$ (V) |
| 2 | Exemplary compound A - (5) | 1.3 | 0 | 1.3 | 0 |
| 3 | Exemplary compound A - (6) | 1.4 | 0 | 1.4 | 0 |
| 4 | Exemplary compound A - (7) | 1.6 | 0 | 1.6 | 0 |

Example 5

On an electroconductive support comprising a polyester film on which an aluminium foil is laminated, an intermediate layer with a thickness of 0.05 μm comprising a vinyl chloride-vinyl acetate-maleic anhydride copolymer. "Ethlec MF-10" (trade name, produced by Sekisui Kagaku K.K.) was provided, and

on the intermediate layer was further formed a carrier generating layer by coating with a dispersion prepared by dispersing a mixture of 2 g of compound A—(11) and 110 ml of 1,2-dichloroethane in a ball mill for 24 hours to provide a dried film thickness of 0.5 µm. On the carrier generating layer, a solution of 6 g of 3,3',4-trimethyl-triphenylamine and 10 g of a methacrylic resin "Acrypet" (trade name, produced by Mitsubishi Rayon K.K.) dissolved in 70 ml of 1,2-dichloroethane was applied to a dried film thickness of 10 µm to form a carrier transporting layer, thus preparing an electrophotographic photoreceptor of this invention.

For this photoreceptor, the same measurements as in Example 1 were conducted to obtain the results of $E_{1/2}$ = 2.2 lux · sec and $V_R$ = 0 V.

Example 6

On the electroconductive support having the intermediate layer employed in Example 5 provided thereon, a 1% solution of compound A—(40) in ethylenediamine was applied to a dried film thickness of 0.3 µm to form a carrier generating layer.

Subsequently, on the carrier generating layer was further applied a solution of 6 g of 4-methoxy-4'-styryltriphenylamine (the compound K—(5) shown below) and 10 g of a polyester resin "Byron 200" (trade name, produced by Toyo Boseki K.K.) dissolved in 70 ml of 1,2-dichloroethane to provide a dried film thickness of 12 µm to form a carrier transporting layer. Thus, a photosensitive member of this invention was prepared.

K – (5)

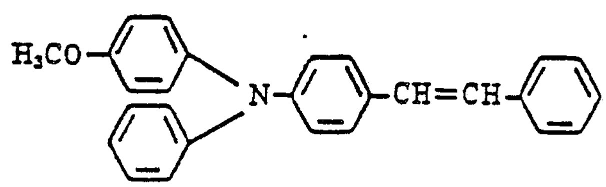

For this photoreceptor, the same measurements as in Example 1 were conducted to obtain the results as shown in Table 4.

Comparative Example 2

Example 6 was repeated except for substituting the bisazo compound L—(2) of the formula shown below for compound A—(32) to prepare an electrophotographic photoreceptor for comparative purpose.

For this photoreceptor, the same measurements as in Example 1 were conducted to obtain the results as shown in Table 4.

L – (2)

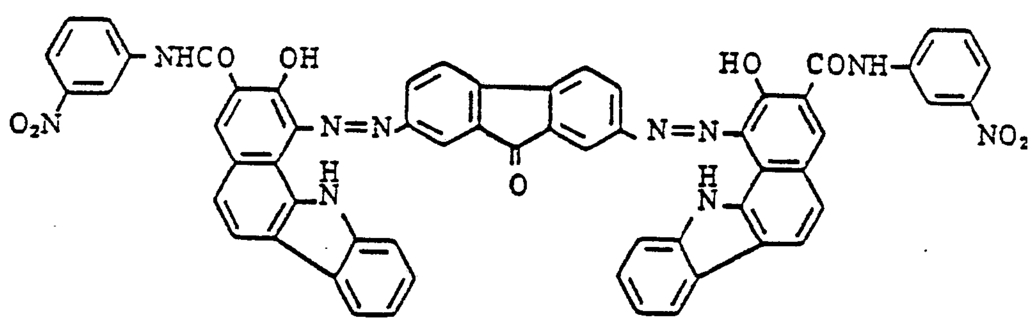

Table 4

| | First measurement | | 100 th measurement | |
|---|---|---|---|---|
| | $E_{1/2}$(lux·sec) | $V_R$(V) | $E_{1/2}$(lux·sec) | $V_R$(V) |
| Example 6 | 1.5 | 0 | 1.6 | 0 |
| Comparative example 2 | 7.0 | 0 | 11.3 | - 70 |

Example 7

A carrier generating layer was formed in the same manner as in Example 5 except for employing compound A—(37) in place of compound A—(11). On this layer was applied a solution of 6 g of 3-(p-methoxystyryl)-9-(p-methoxyphenyl)carbazole (Compound K—(6) shown below) and 10 g of a polycarbonate "Panlite L-1250" (trade name, produced by Teijin Kasei K.K.) dissolved in 70 ml of 1,2-dichloroethane to provide a dried film thickness of 10 µm to form a carrier transporting layer, thus preparing a photoreceptor of this invention.

For this photoreceptor, the same measurements as in Example 1 were conducted to obtain the results of $E_{1/2}$ = 1.8 lux · sec and $V_R$ = 0 V.

Example 8

On the surface of an aluminium drum of 100 mm in diameter was provided an intermediate layer with a thickness of 0.05 µm made of a vinyl chloride-vinyl acetate-maleic anhydride copolymer "Ethlec MF-10" (trade name, produced by Sekisui Kagaku K.K.), followed by coating thereon with a dispersion prepared by dispersing a mixture of 4 g of compound A—(36) and 400 ml of 1,2-dichloroethane in a ball mill for 24 hours to provide a dried film thickness of 0.6 µm to form a carrier generating layer.

Further, on the carrier generating layer was applied a solution of 30 g of 3-(p-methoxystyryl)-9-(p-methoxyphenyl)carbazole (Compound K—(6) shown below) and 50 g of a polycarbonate resin "Copiron S—1000" (trade name, produced by Mitsubishi Gas Kagaku K.K.) dissolved in 400 ml of 1,2-dichloroethane to a dried film thickness of 13 µm to form a carrier transporting layer, thus preparing a drum-shaped electrophotographic photoreceptor.

K - (6)

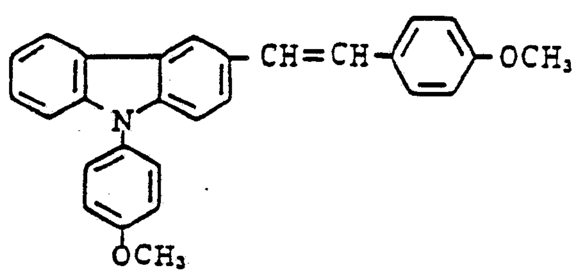

The photoreceptor thus prepared was mounted on a modified electrophotographic copying machine "U-Bix 1600 MR" (trade name, produced by Konishiroku Photo Industry Co., Ltd.) and images were copied to obtain copied images which are high in contrast, faithful to original image and also clear. The quality did not change at all even when repeated for 10,000 times.

Comparative Example 3

A drum-shaped photoreceptor for comparative purpose was prepared similarly as in Example 8, except for using the triazo compound L—(3) of the formula shown below in place of compound A—(36), and the copied images were evaluated similarly as in Example 8. Only images with much fogging were obtained. Further, as copying was repeated, the copied images were lowered in contrast, until substantially no copied image was obtained after repetition for 2,000 times.

L - (3)

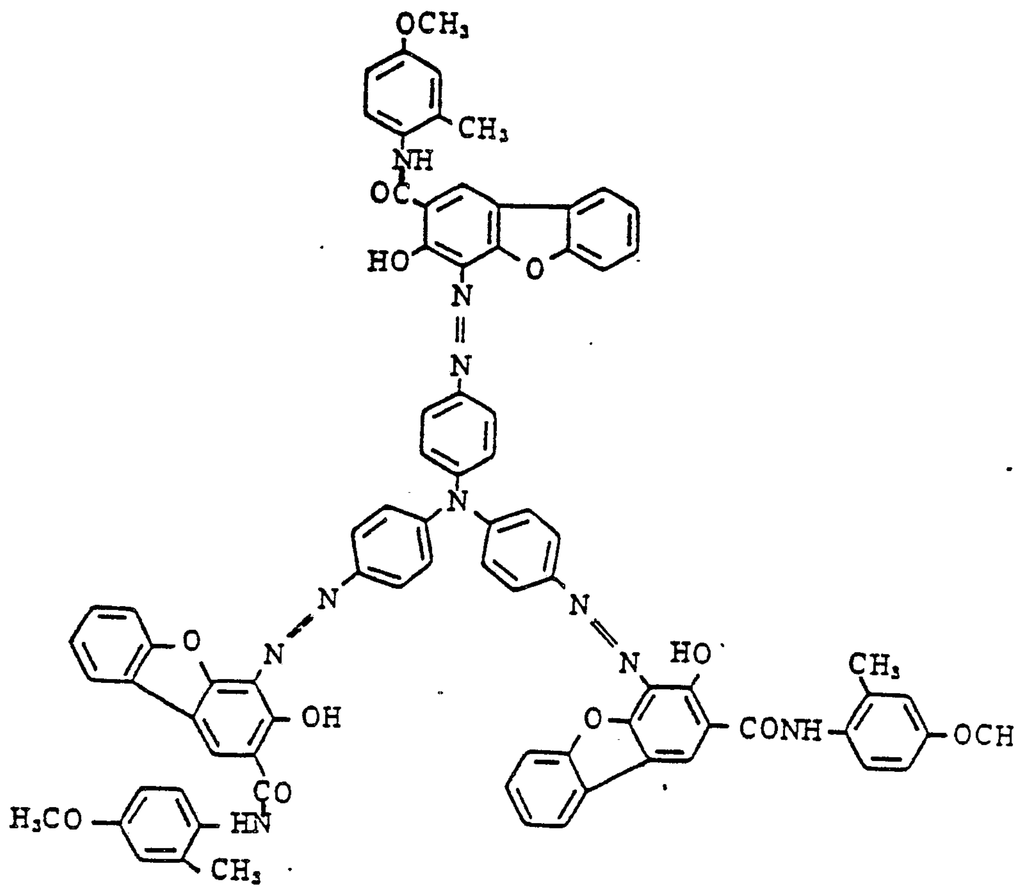

Example 9

On an electroconductive support comprising a polyester film on which aluminium foil is laminated, an intermediate layer with a thickness of 0.05 μm comprising a vinyl chloride-vinyl acetate-maleic anhydride copolymer. "Ethlec MF-10" (trade name, produced by Sekisui Kagaku K.K.) was provided, and on the intermediate layer was further formed a carrier generating layer by coating with a dispersion prepared by dispersing a mixture of 5 g of compound A—(17) and 3.3 g of a polycarbonate resin "Panlite L-1250" (trade name, produced by Teijin Kasei K.K.) in 100 ml of dichloromethane in a ball mill for 24 hours to provide a dried film thickness of 10 μm, to prepare a photoreceptor.

For the thus obtained photoreceptor, $E_{1/2}$ and $V_R$ were measured similarly as in Example 1 except for changing the charging voltage to +6 KV. The results of the first measurement were $E_{1/2}$ = 2.2 lux · sec and $V_R$ = +5 V.

Example 10

On a polyester film on which aluminium was vapor deposited, a solution of 6 g of p(N,N-diethylamino)-benzaldehyde-1,1-diphenylhydrazone and 10 g of a polyester resin "Byron 200" (trade name, produced by Toyo Boseki K.K.) dissolved in 70 ml of 1,2-dichloroethane was applied as the carrier transporting layer to provide a dried film thickness of 10 μm.

Subsequently, on this layer was further formed a carrier generating layer by coating with a dispersion prepared by dispersing a mixture of 1 g of compound A—(12) and 1 g of compound A—(14) with 110 ml of 1,2-dichloroethane in a ball mill for 24 hours to provide a dried film thickness of 0.5 μm to prepare a photoreceptor of this invention.

The thus obtained photoreceptor was evaluated similarly as in Example 9 to obtain the results of $E_{1/2}$ = 2.4 lux · sec and $V_R$ = +5 V.

Example 11

A 2% solution of compound A—(10) in ethylenediamine was applied on a polyester film laminated with aluminum to provide a dried film thickness of 0.5 μm to form a carrier generating layer. Further, a carrier transporting layer was formed on the carrier generating layer by coating with a solution of about 10 g of 1-methyl-3-(p-diethylaminophenyl)-5-(p-diethylaminophenyl)pyrazoline (compound K—(7) shown below), 1-phenyl-(p-methoxystyryl)-5-(p-diethylaminophenyl)pyrazoline (compound K—(8) shown below) and 1-phenyl-(p-methylstyryl)-5-(p-methylphenyl)pyrazoline (compound—(9) shown below) dissolved separately together with 14 g of a polycarbonate resin (trade name, Panlite L-1250, produced by Teijin Kasei K.K.) in 140 ml of 1,2-dichloromethane to provide a dried film thickness of 12 μm, followed by drying, to prepare photoreceptors with three kinds of different carrier transporting materials.

K - (7)

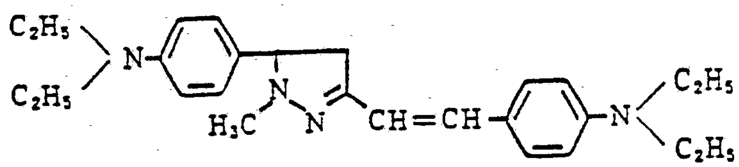

K - (8)

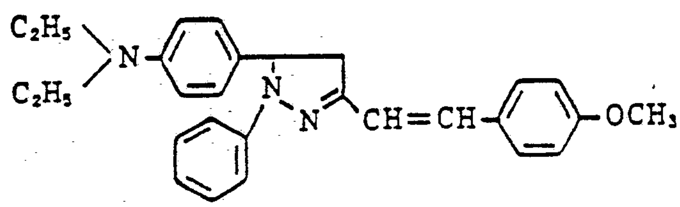

K - (9)

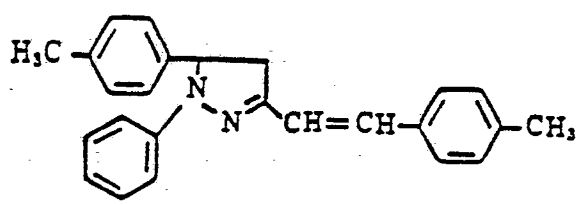

The three kinds of photoreceptors were subjected to the following characteristic evaluations by means of an electrical paper testing machine Model SP-428 produced by Kawaguchi Denki Seisakusho K.K. After charging at a charged voltage of −6 KV for 5 seconds, the member was left to stand in dark for 5 seconds and then irradiated with a halogen lamp light to a luminosity of 35 lux · on the surface of the photoreceptor, and the dose required for attenuating the surface potential to the half value (half-dosage) $E_{1/2}$ was determined. Also, the surface potential after exposure at a dose of 30 lux · sec (residual potential) $V_R$ was determined. The results are shown in Table 5, which shows that good results can be obtained in each combination with any one of the carrier transporting materials.

Table 5

| Carrier transporting material combined with exemplary compound A - (10) | $E_{1/2}$(lux·sec) | $V_R$ (V) |
|---|---|---|
| K - (7) | 1.3 | 0 |
| K - (8) | 1.4 | 0 |
| K - (9) | 1.5 | 0 |

Comparative Example 4

A comparative photoreceptor was prepared in the same manner as in Example 11 except for substituting the bisazo compound shown below (L—(4)) for compound A—(10) and subjected to characteristic evaluation.

L - (4)

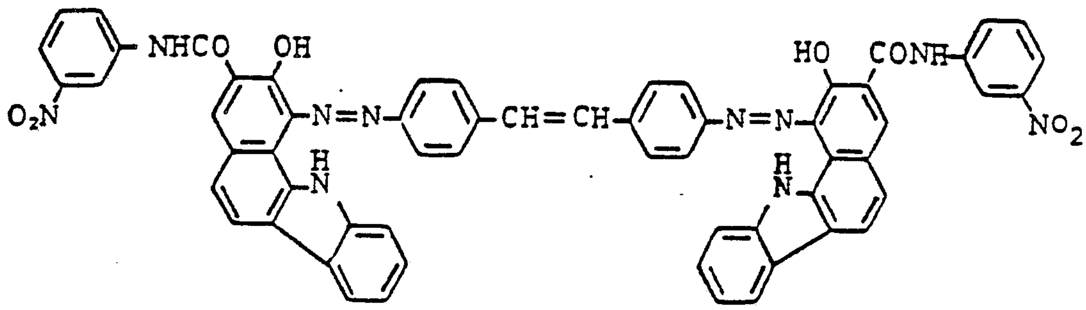

As shown in Table 6, the results were found to be varied depending on the carrier transporting material.

Table 6

| Carrier transporting material combined with the compound L - (4) | $E_{1/2}$(lux·sec) | $V_R$ (V) |
|---|---|---|
| K - (7) | 4.1 | 2 |
| K - (8) | 7.8 | 10 |
| K - (9) | 12.3 | 50 |

Example 12

On the electroconductive support having an intermediate layer provided thereon as employed in Example 5, a dispersion prepared by mixing well 2 g of compound A—(2) and 100 ml of 1,2-dichloroethane was applied to provide a dried film thickness of 0.3 µm to prepare a carrier generating layer.

Subsequently, a carrier transporting layer was formed on the carrier generating layer by coating with a solution of carrier transporting materials of 6 g of 4-methyl-4'-styryl-triphenylamine (compound K—(10) shown below) and 10 g of a polycarbonate resin "Panlite L-1250" (trade name, produced by Teijin Kasei K.K.) dissolved in 90 g of 1,2-dichloroethane to provide a dried film thickness of 10 µm to prepare a photoreceptor of this invention.

K - (10)

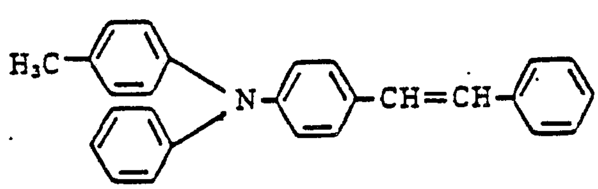

For this photoreceptor, electrophotographic characteristics at room temperatures of 25°C and 60°C were measured similarly as in Example 7. The results are shown in Table 7.

Table 7

| | 25 °C | 60 °C |
|---|---|---|
| VA (V) | - 890 | - 910 |
| $E_{1/2}$ (lux·sec) | 1.7 | 1.7 |
| $V_R$ (V) | 0 | 0 |

As seen from the above results, the electrophotographic photoreceptor has good sensitivity and residual potential characteristic even at higher temperature, indicating a good stability to heat.

Example 13

On the electroconductive support having an intermediate layer provided thereon as employed in Example 5, a dispersion prepared by mixing well 2 g of compound A—(1) with 110 ml of 1,2-dichloroethane was applied to provide a dried film thickness of 0.3 μm to prepare a carrier generating layer.

For testing durability of the carrier generating layer against UV-rays, it was placed at a distance of 30 cm from an ultra-high pressure mercury lamp (produced by Tokyo Shibaura Denki K.K.) and UV-rays was irradiated at 1500 cd/cm³ for 10 minutes.

Next, a carrier transporting layer was formed on the UV-ray irradiated material by coating it with a solution of carrier transporting materials of 7 g of 4-methoxy-4'-(4-methylstyryl)-triphenylamine (compound K—(11) shown below) and 10 g of a polycarbonate resin (Panlite L-1250, trade name, produced by Teijin Kasei K.K.) dissolved in 90 g of 1,2-dichloroethane to provide a dried film thickness of 12 μm to prepare a photoreceptor of this invention.

K - (11)

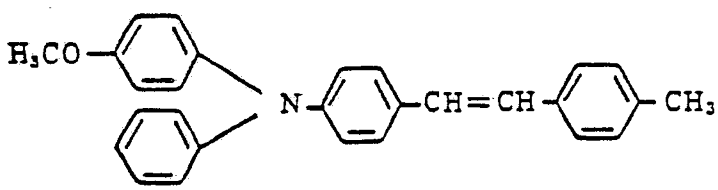

For this photoreceptor, measurements were conducted similarly as in Example 5. The results are shown in Table 8.

Example 14

Example 13 was repeated except for effecting no UV-ray irradiation after formation of the carrier generating layer to prepare a photoreceptor, for which the same measurements as in Example 5 were conducted. The results are shown in Table 8.

Table 8

| | Example 13 | Example 14 |
|---|---|---|
| $V_A$ (V) | - 1000 | - 980 |
| $E_{1/2}$ (lux·sec) | 1.4 | 1.3 |
| $V_R$ (V) | 0 | 0 |

As seen from the above results, the electrophotographic photoreceptor of the invention has excellent sensitivity and residual potential characteristics relative to UV-ray irradiation, little variation of the receptor potential and is also stable to light.

Comparative Example 5

Photoreceptors were prepared in the same manner as in Example 13 and Example 14, except for changing compound A—(1) to the bisazo compound (L—(5)) as shown below, and the same measurements as in Example 5 were conducted.

L - (5)

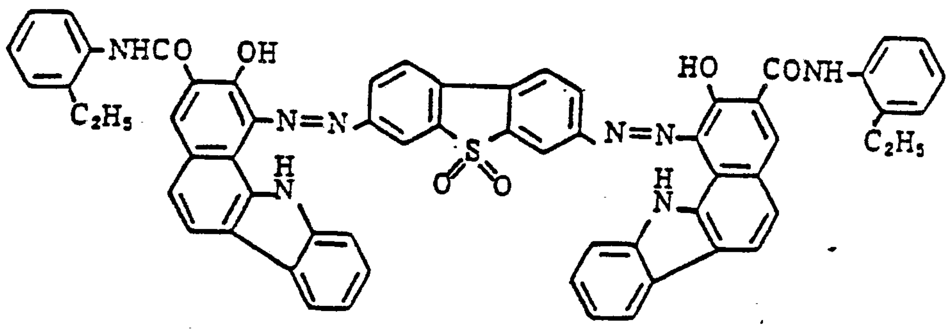

The results are shown in Table 9.

Table 9

| | With UV-ray irradiation | Without UV-ray irradiation |
|---|---|---|
| $V_A$ (V) | - 1000 | - 920 |
| $E_{1/2}$ (lux·sec) | 12.6 | 9.3 |
| $V_R$ (V) | - 14 | - 5 |

As seen from the above results, the photoreceptor prepared by use of the above compound has deteriorated sensitivity and residual potential characteristics with UV-ray irradiation and a larger variation of receptor potential.

Example 15

A drum-shaped photoreceptor was prepared in the same manner as in Example 5 except for using compound A—(3) in place of compound A—(11). The photoreceptor was found to have a spectral sensitivity of 0.43 μJ/cm$^3$ (half-reduction dosage). A practical copying test was conducted with a testing machine in which a semiconductor laser (780 nm) with a laser beam intensity of 0.85 mW on the surface of the photoreceptor of this invention was mounted.

After charging the surface of the photoreceptor to −6 KV, the member was exposed to the laser beam and subjected to reversal development by a bias voltage of −250 V, whereby good images without fogging were obtained.

Comparative Example 6

Example 15 was repeated except for employing comparative bisazo compound L—(6) shown below in place of compound A—(1) to obtain a comparative photoreceptor.

L - (6)

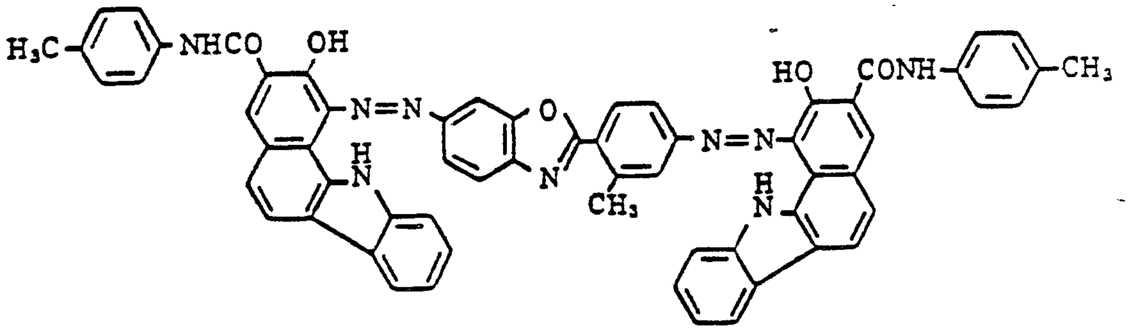

The photoreceptor was found to have a spectral sensitivity of 8.0 μJ/cm³ (half-reduction dosage). When a practical copying test by the semiconductor laser was conducted similarly as in Example 15, much fogging occurred to give no good image.

Example 16

Example 1 was repeated except that compound A—(21) was replaced with compound B—(7) and 1-phenyl-(p-methylstyryl)-5-(p-methoxyphenyl)pyrazoline with 1-(1-phenyl-4-carbazolyl)methylideneamino-1,2,3,4-tetra-hydroquinoline (having the formula K—(11) shown below).

K - (11)

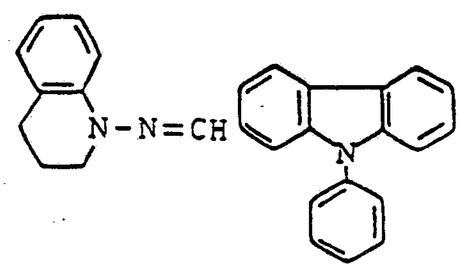

The results are shown in Table 10.

Table 10

| | First measurement | 100th measurement |
|---|---|---|
| $E_{1/2}$ (lux·sec) | 1.1 | 1.1 |
| $V_R$ (V) | 0 | 0 |

Comparative Example 7

A photoreceptor for comparative purpose was prepared in the same manner as in Example 16 except for employing the bisazo compound L—(7) shown below as the carrier generating material.

L - (7)

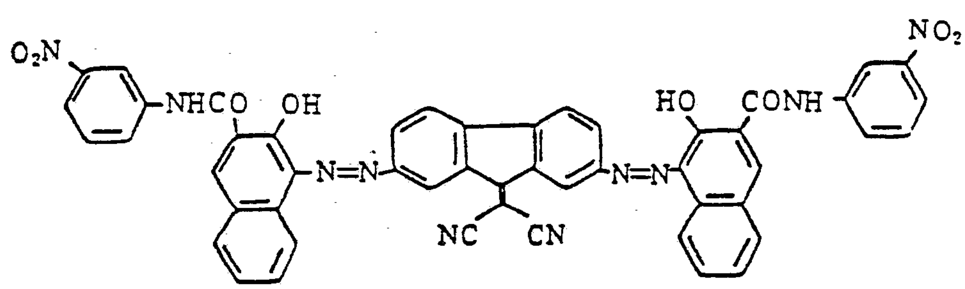

For this photoreceptor for comparative purpose, measurements were conducted similarly as in Example 16 to obtain the results as shown in Table 11.

Table 11

| | First measurement | 100th measurement |
|---|---|---|
| $E_{1/2}$ (lux·sec) | 6.5 | 10.2 |
| $V_R$ (V) | - 12 | - 100 |

As seen from the above results, the photoreceptor of this invention is very superior to the photoreceptor for comparative purpose with respect to sensitivity, residual potential and stability in repeated uses.

Examples 17—19

Using compounds B—(15), B—(17) and B—(18) as the carrier generating material, and 4-methoxy-4'-(4-methoxy)styryl-triphenylamine (compound K—(34) shown below), 4-methoxy-4'-(4-methyl)styryl-triphenylamine (compound K—(1) shown above) and 4-methoxy-4'-styryl-triphenylamine (compound K—(16) shown above), respectively, as the carrier transporting material following otherwise the same procedure as described in Example 16, photoconductive members of this invention were prepared and subjected to similar measurements to obtain the results shown in Table 12.

K - (12)

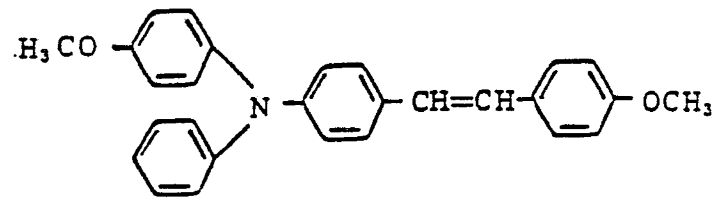

K - (13)

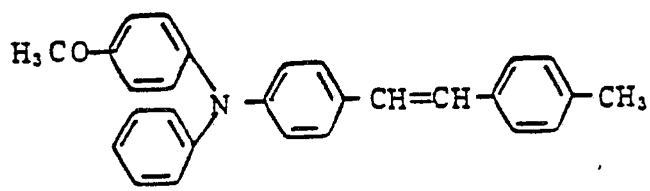

K - (14)

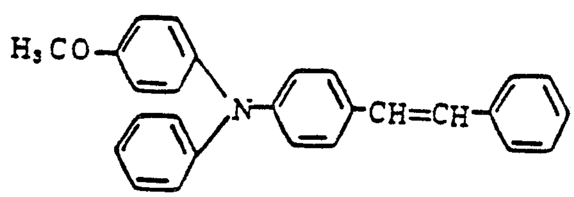

Table 12

| Example | Bisazo compound | First measurement $E_{1/2}$(lux·sec) | First measurement $V_R$(V) | 100th measurement $E_{1/2}$(lux·sec) | 100th measurement $V_R$(V) |
|---|---|---|---|---|---|
| 17 | Exemplary compound B - (15) | 0.9 | 0 | 0.9 | 0 |
| 18 | Exemplary compound B - (17) | 1.0 | 0 | 1.0 | 0 |
| 19 | Exemplary compound B - (18) | 1.1 | 0 | 1.1 | 0 |

Example 20

Example 5 was repeated except that compound A—(11) was replaced with compound B—(32) and 3,3',4-trimethyl-triphenylamine with 4-methyl-4'-styryl-triphenylamine.

For this photoreceptor, the same measurements as in Example 16 were conducted to obtain the results of $E_{1/2}$ = 1.0 lux · sec and $V_R$ = 0 V.

### Example 21

Example 6 was repeated except that compound A—(40) was replaced with compound B—(65), and 4-methoxy-4'-styryl-triphenylamine with 1-[4-(N,N-diethylamino)benzylidene]-amino-1,2,3,4-tetrahydroquinoline (compound K—(15) shown below) to obtain the results shown in Table 13.

K - (15)

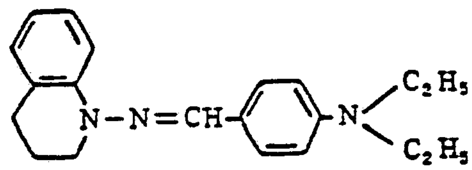

### Comparative Example 8

Example 21 was repeated except for substituting bisazo compound L—(8) of the formula shown below for compound B—(65) to prepare an electrophotographic photoreceptor for comparative purpose.

L - (8)

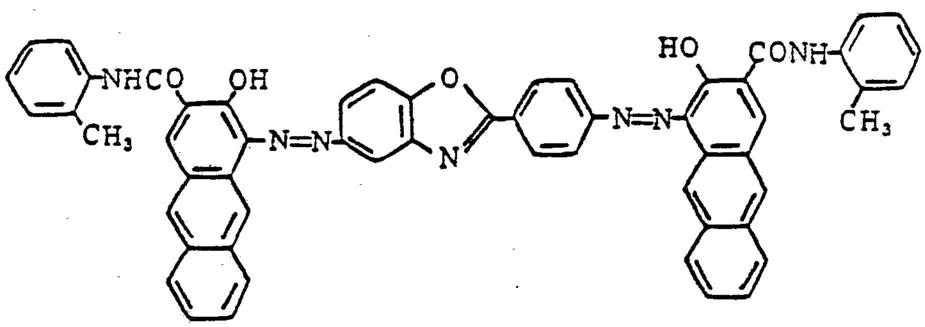

For this photoreceptor, the same measurements as in Example 16 were conducted to obtain the results as shown in Table 13.

Table 13

| | First measurement | | 100th measurement | |
|---|---|---|---|---|
| | $E_{1/2}$(lux·sec) | $V_R$(V) | $E_{1/2}$(lux·sec) | $V_R$(V) |
| Example 21 | 1.2 | 0 | 1.2 | 0 |
| Comparative example 8 | 7.4 | 0 | 14.5 | - 40 |

### Example 22

Example 7 was repeated except that compound A—(37) was replaced with compound B—(36) and 3-(p-methoxystyryl)-9-(p-methoxyphenyl)carbazone with 1-(1-ethyl-4-carbazolyl)methylideneamino-indoline (compound K—(16) shown below) to prepare a photoreceptor of this invention.

K - (16)

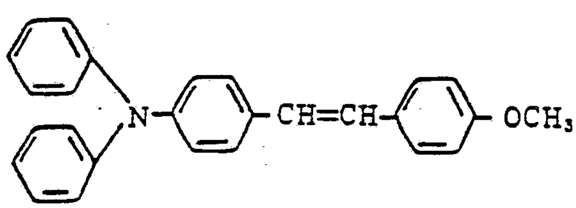

For this photoreceptor, the same measurements as in Example 16 were conducted to obtain the results of $E_{1/2}$ = 1.3 lux · sec and $V_R$ = 0 V.

Example 23

Example 8 was repeated except that compound A—(36) was replaced with compound B—(26), and 3-(p-methoxystyryl)-9-(p-methoxyphenyl)carbazone with 4,4'-dimethyl-4''-(4-methoxy)styryl-triphenylamine (the compound K—(17) shown below). Similar results as in Example 8 were obtained.

K - (17)

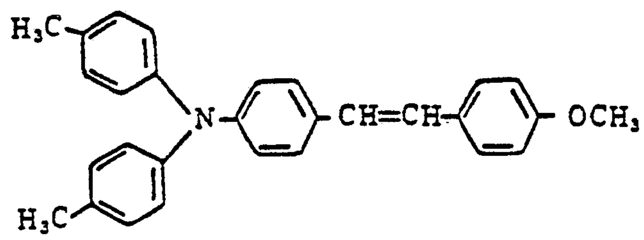

Comparative Example 9

Example 23 was repeated except for using bisazo compound L—(9) of the formula shown below in place of the examplary compound B—(26), and the copied images were evaluated similarly as in Example 23. Only images with much fogging were obtained. Further, as copying was repeated, the copied images were lowered in contrast, until substantially no copied image was obtained after repetition for 2,000 times.

L - (9)

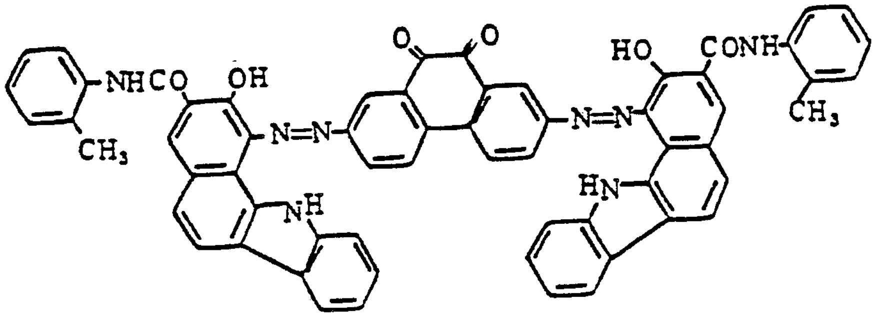

Example 24

Example 9 was repeated except that compound A—(17) was replaced with compound B—(74) to prepare a photoreceptor.

For the thus obtained photoreceptor, $E_{1/2}$ and $V_R$ were measured similarly as in Example 16 except for changing the charging voltage to +6 KV. The results of the first measurement were $E_{1/2}$ = 2.0 lux · sec and $V_R$ = 0 V.

Example 25

Example 10 was repeated except that p-(N,N-diethylamino)-benzaldehyde-1,1-diphenylhydrazone was replaced with 1-phenyl-3-(p-diethylaminostyryl)-5-(p-diethylaminophenyl)pyrazoline (compound K—(18) shown below), and compounds A—(12) and A—(14) were replaced with compounds B—(9) and B—(10), respectively.

K - (18)

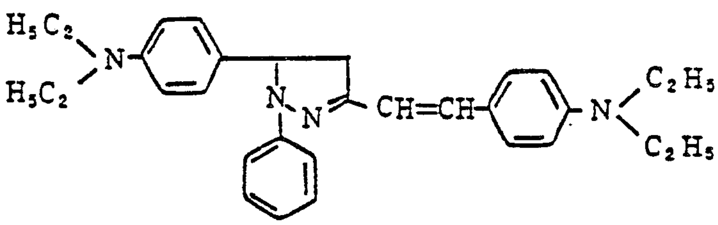

The thus obtained photoreceptor was evaluated similarly as in Example 24 to obtain the results of $E_{1/2}$ = 1.7 lux · sec and $V_R$ = +5 V.

Example 26

On an electroconductive support having aluminium foil laminated on a polyester film was provided an intermediate layer with a thickness of 0.05 μm made of a vinyl chloride-vinyl acetate-maleic anhydride copolymer "Ethlec MF-10" (trade name, produced by Sekisui Kagaku K.K.), followed by coating thereon with a dispersion prepared by dispersing a mixture of 4 g of the exemplary compound B—(54) and 8 g of 4-methoxy-4'-methyl-4"-(4-methyl)styryl-triphenylamine (compound K—(19) shown below), 3 g of a polycarbonate resin "Panlite L-1250" (trade name, produced by Teijin Kasei K.K.) in 100 ml of dichloroethane in a sand grinder for 24 hours to prepare a photoreceptor.

K - (19)

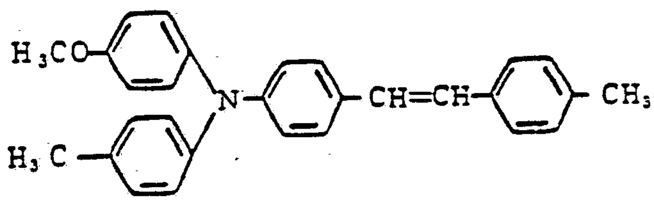

For this photoreceptor, $E_{1/2}$ and $V_R$ were measured in the same manner as in Example 16 except for changing the charged voltage to +6 KV to obtain the results of the first measurement of $E_{1/2}$ = 1.0 lux · sec and $V_R$ = 0 V.

Example 27

Example 11 was repeated except that compound A—(10) was replaced with compound B—(66), 1-methyl-3-(p-diethylaminophenyl)-5-(p-diethylaminophenyl)pyrazoline with 4-methoxy-4'-(4-chloro)-styryl-triphenylamine (compound K—(20) shown below), 1-phenyl-(p-methoxystyryl)-5-(p-diethylaminophenyl)-pyrazoline with 4,4'-dimethyl-4"-(4-bromo)-styryl-triphenylamine (compound K—(21) shown below) and 1-phenyl-(p-methylstyryl)-5-(p-methylphenyl)pyrazoline with 4-(4-octyl)-styryl-triphenylamine (compound K—(22) shown below) to obtain the results shown in Table 14.

K - (20)

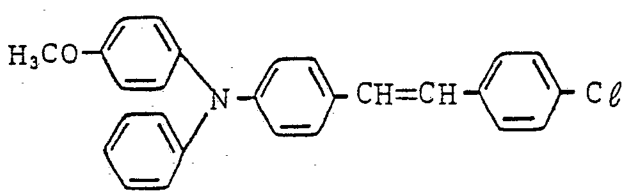

K - (21)

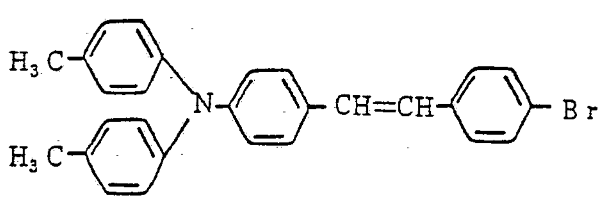

K - (22)

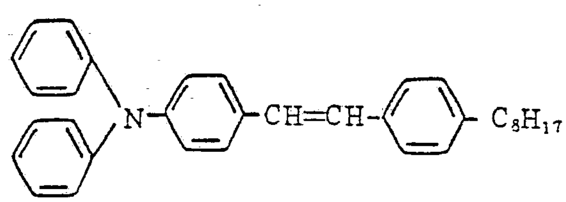

Table 14

| Carrier transporting material combined with exemplary compound B - (66) | $E_{1/2}$(lux·sec) | $V_R$ (V) |
|---|---|---|
| K - (20) | 1.1 | 0 |
| K - (21) | 1.0 | 0 |
| K - (22) | 0.9 | 0 |

Comparative Example 10

A comparative photoreceptor was prepared in the same manner as in Example 27 except for substituting bisazo compound (L—(10)) shown below for compound B—(66) and subjected to characteristic evaluation.

L - (10)

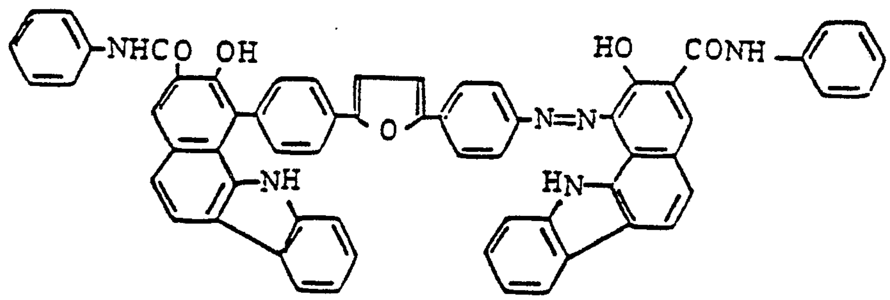

As shown in Table 15, the results were found to be varied depending on the carrier transporting material.

Table 15

| Carrier transporting material combined with the compound L - (10) | $E_{1/2}$(lux·sec) | $V_R$ (V) |
|---|---|---|
| K - (20) | 16.7 | 40 |
| K - (21) | 11.2 | 20 |
| K - (22) | 6.2 | 7 |

Example 88

Example 12 was repeated except that compound A—(2) was replaced with compound B—(59), and 4-methyl-4'-styryl-triphenylamine with 4-methoxytriphenylamine (compound K—(23) shown below) to obtain the results shown in Table 16.

K - (23)

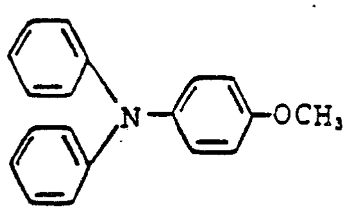

Table 16

| | 25 °C | 60 °C |
|---|---|---|
| VA (V) | - 1000 | - 1010 |
| $E_{1/2}$ (lux·sec) | 1.0 | 1.0 |
| $V_R$ (V) | 0 | 0 |

As seen from the above results, the electrophotographic photoreceptor has good sensitivity and residual potential chartacteristic even at higher temperatures, indicating good stability to heat.

Example 29

Example 13 was repeated except that compound A—(1) was replaced with compound B—(3), and 4-methoxy-4'-(4-methoxystyryl)-triphenylamine with 3-(p-methoxystyryl)-9-(p-methoxy-phenyl)carbazole (compound K—(24) shown below), to obtain the results as shown in Table 17.

K - (24)

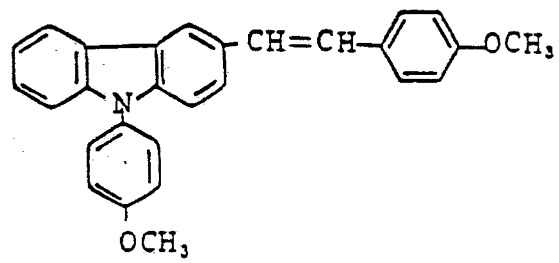

Example 30

Example 29 was repeated except for effecting no irradiation of UV-ray after formation of the carrier generating layer to obtain the results shown in Table 17.

Table 17

| | Example 29 | Example 30 |
|---|---|---|
| VA (V) | - 960 | - 940 |
| $E_{1/2}$ (lux·sec) | 1.1 | 1.1 |
| $V_R$ (V) | 0 | 0 |

As seen from the above results, the electrophotographic photoreceptor of the invention has excellent sensitivity and residual potential characteristics relative to UV-ray irradiation, little variation of receptor potential and is also stable to light.

Comparative Example 11

Photoreceptors were prepared in the same manner as in Example 29 and Example 30, except for changing compound B—(3) to the bisazo compound (L—(11)) shown below, and the same measurements as in Example 20 were conducted.

L - (11)

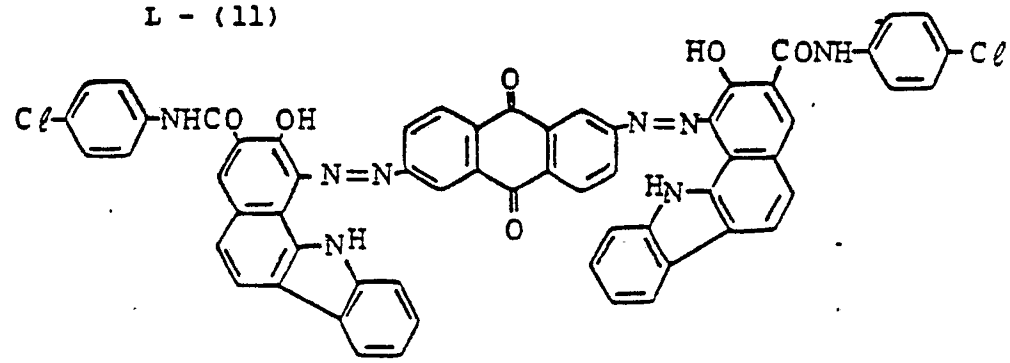

The results are shown in Table 18.

Table 18

| | With UV-ray irradiation | Without UV-ray irradiation |
|---|---|---|
| VA (V) | - 910 | - 900 |
| $E_{1/2}$ (lux·sec) | 13.1 | 6.0 |
| $V_R$ (V) | - 25 | - 5 |

As seen from the above results, the photoreceptor prepared by use of the above compound has deteriorated sensitivity and residual potential characteristics with UV-ray irradiation and a large amount of variation of receptor potential.

Example 31

Example 20 was repeated except for using compound B—(1) in place of compound B—(32). The drum-shaped photoreceptor obtained was found to have a spectral sensitivity at 9 nm of 950 volt · $cm^2$ · $\mu W^{-1}$ (half-reduction rate). A copying test was conducted by means of a testing machine in which a semiconductor laser (9 nm) was mounted to give a laser beam intensity of 0.85 mW on the surface of the photoreceptor of this invention.

After charging the surface of the photoreceptor to −6 KV, the member was subjected to exposure to the laser beam, followed by reversal development with a bias voltage of −250 V, whereby good images without fogging were obtained.

Comparative Example 12

Example 31 was repeated except for employing comparative bisazo compound L—(12) shown below in place of compound B—(1) to obtain a comparative photoreceptor.

L - (12)

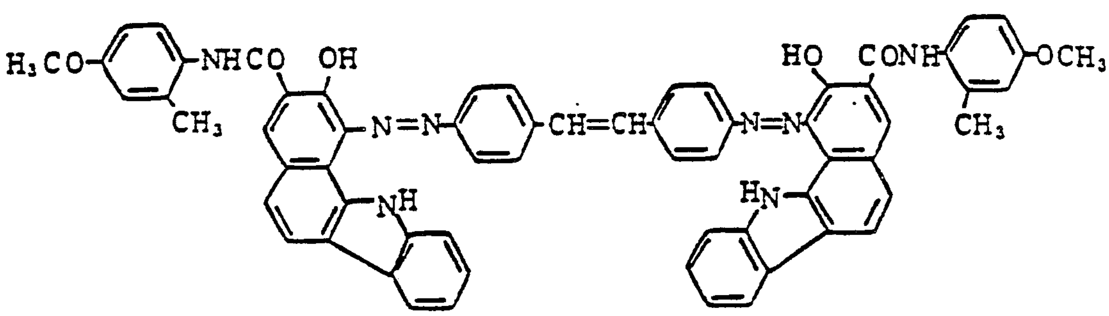

The photoreceptor was found to have a spectral sensitivity at 9 nm of 50 volt · $cm^2$ · $\mu W^{-1}$ (half-reduction rate). When a copying test by the semiconductor laser was conducted similarly as in Example 29, much fogging occurred to give no good image.

Examples 32—45

In Example 20, compound B—(32) (charge generating material) and 4-methyl-4′-styryl-triphenylamine (charge transporting material) were changed, respectively, to those as shown in Table 19, under otherwise the same conditions to prepare drum-shaped photoreceptors. These photoreceptors were found to have spectral sensitivities at 790 nm as shown in Table 19. In any of the copying tests conducted similarly as in Example 31 by use of these photoreceptors (Examples 32 to 45), good images without fog were obtained.

Table 19

| Example No. | Charge generating material | Charge transporting material | Spectral sensitivity volt · $cm^2$ · $\mu W^{-1}$ · $sec^{-1}$ |
|---|---|---|---|
| Example 32 | Exemplary compound B-(5) | Compound K-(25) | 950 |
| Example 33 | " B-(6) | " K-(26) | 880 |
| Example 34 | " B-(12) | " K-(27) | 1020 |
| Example 35 | " B-(13) | " K-(28) | 990 |
| Example 36 | " B-(14) | " K-(29) | 900 |
| Example 37 | " B-(19) | " K-(30) | 800 |
| Example 38 | " B-(20) | " K-(31) | 780 |
| Example 39 | " B-(21) | " K-(32) | 990 |
| Example 40 | " B-(22) | " K-(33) | 1000 |
| Example 41 | " B-(23) | " K-(34) | 920 |
| Example 42 | " B-(24) | " K-(35) | 930 |
| Example 43 | " B-(25) | " K-(36) | 940 |
| Example 44 | " B-(78) | " K-(37) | 620 |
| Example 45 | " B-(111) | " K-(38) | 710 |

Compound K - (25)

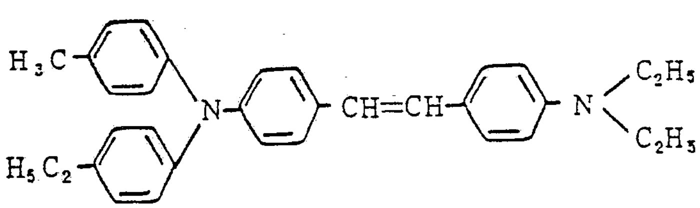

Compound K - (26)

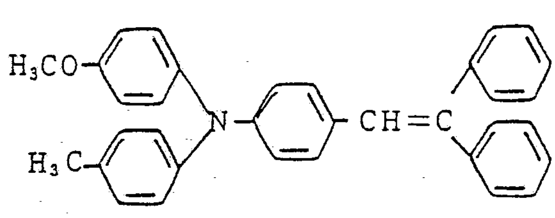

Compound K - (27)

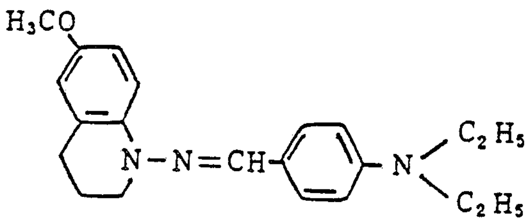

Compound K - (28)

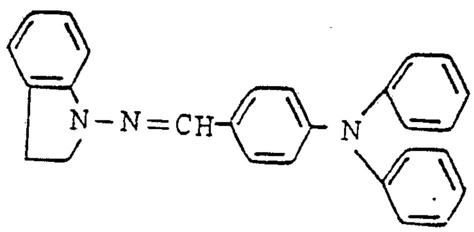

Compound K - (29)

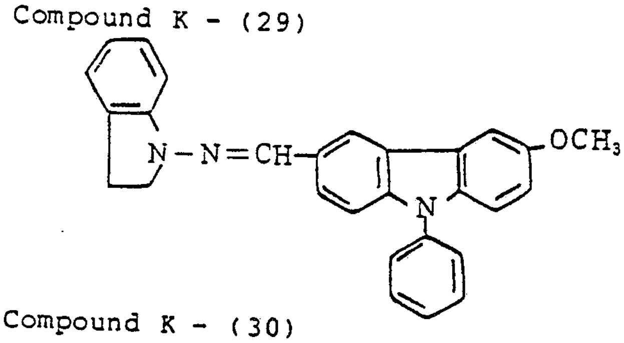

Compound K - (30)

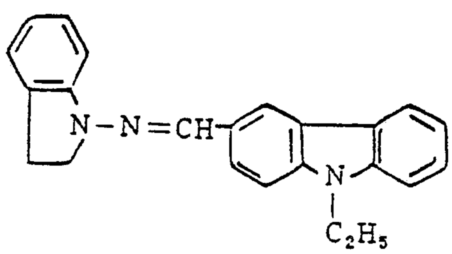

Compound K - (31)

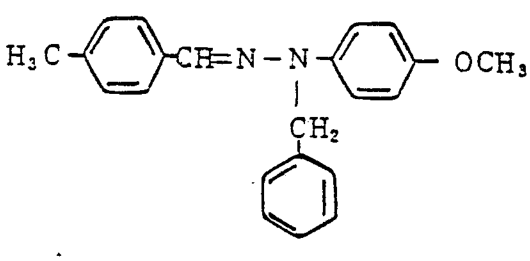

Compound K - (32)

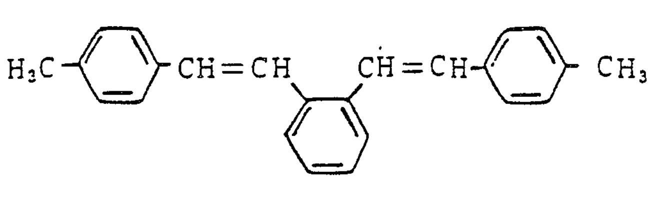

Compound K - (33)

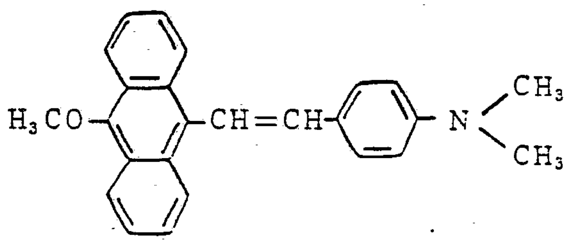

Compound K - (34)

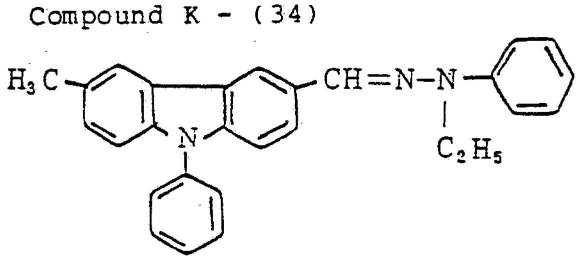

Compound K - (35)

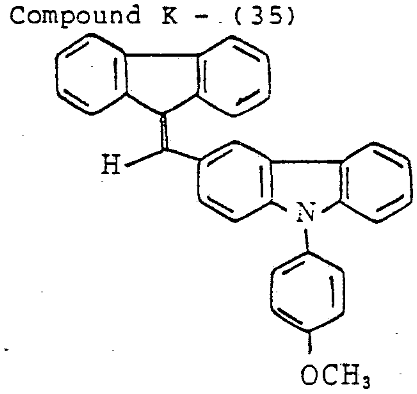

Compound K - (36)

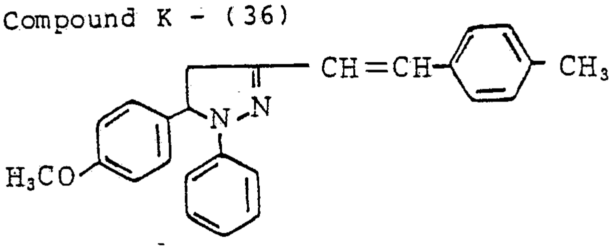

Compound K - (37)

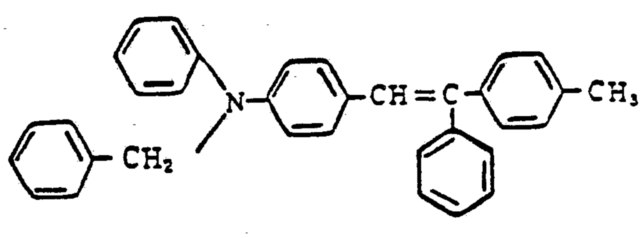

Compound K - (38)

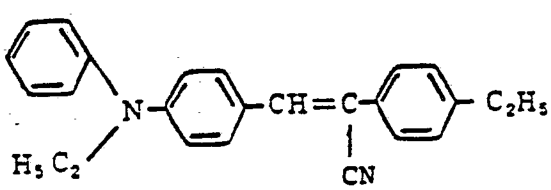

Examples 46—47

Using compounds C—(70) and C—(10) as the carrier generating material, and the compounds shown below K—(39) and K—(40), respectively, as the carrier transporting material following otherwise the same procedure as described in Example 1, photoconductive members of the present invention were prepared and subjected to similar measurements to obtain the results shown in Table 20.

K - (39)

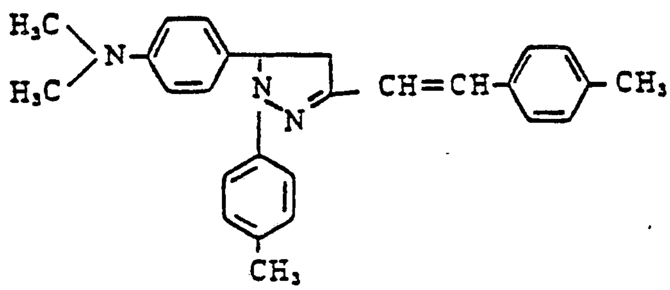

K - (40)

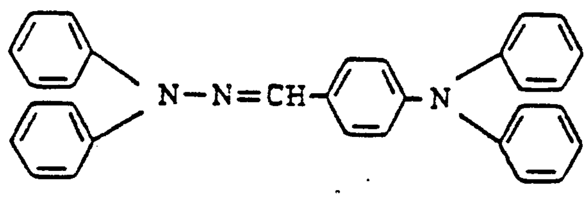

Table 20

| Example | Bisazo compound | First measurement | | 100th measurement | |
|---|---|---|---|---|---|
| | | $E_{1/2}$(lux·sec) | $V_R$(V) | $E_{1/2}$(lux·sec) | $V_R$(V) |
| 46 | Exemplary compound C - (70) | 1.2 | 0 | 1.2 | 0 |
| 47 | Exemplary compound C - (10) | 1.5 | 0 | 1.5 | 0 |

Example 48

Example 7 was repeated except that compound A—(37) was replaced with compound C—(59) and compound K—(41) shown below was employed as the carrier transporting material to prepare a photoreceptor of this invention.

K - (41)

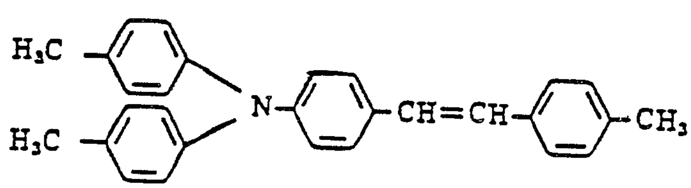

For this photoreceptor, the same measurements as in Example 91 were conducted to obtain the results of $E_{1/2}$ = 1.5 lux · sec and $V_R$ = 0 V.

Example 49

Example 12 was repeated except that compound A—(2) was replaced with compound C—(61) and compound K—(42) shown below was used as the carrier transporting material to obtain the results shown in Table 21.

K - (42)

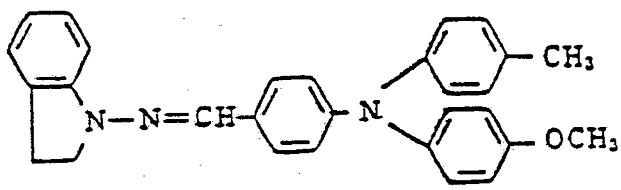

Table 21

| | 25 °C | 60 °C |
|---|---|---|
| VA (V) | - 990 | - 1010 |
| $E_{1/2}$ (lux·sec) | 1.0 | 1.0 |
| $V_R$ (V) | 0 | 0 |

As seen from the above results, the electrophotographic photoreceptor has good sensitivity and residual potential characteristics, even at higher temperatures, indicating good stability to heat.

Example 50

Example 13 was repeated except that compound A—(1) was replaced with compound C—(53) and compound K—(43) shown below was employed as the carrier transporting material to obtain the results as shown in Table 22.

K - (43)

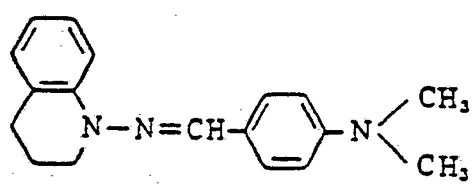

Example 51

Example 50 was repeated except for effecting no irradiation with UV-rays after formation of the carrier generating layer to obtain the results shown in Table 22.

Table 22

| | Example 50 | Example 51 |
|---|---|---|
| VA (V) | - 950 | - 920 |
| $E_{1/2}$ (lux·sec) | 1.3 | 1.3 |
| $V_R$ (V) | 0 | 0 |

As seen from the above results, the electrophotographic photoreceptor of the present invention has excellent sensitivity and residual potential characteristics with UV-ray irradiation, little variation of receptor potential and is also stable to light.

Comparative Example 13

Photoreceptors were prepared in the same manner as in Example 50 and Example 51, except for changing compound C—(53) to bisazo compound (L—(13)) as shown below, and the same measurements as in Example 20 were conducted.

L - (13)

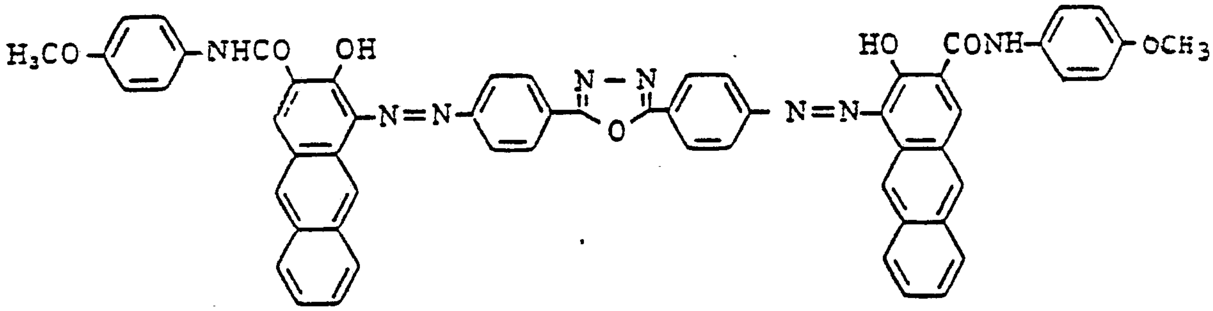

The results are shown in Table 23.

Table 23

| | With UV-ray irradiation | Without UV-ray irradiation |
|---|---|---|
| VA (V) | - 850 | - 800 |
| $E_{1/2}$ (lux·sec) | 11.3 | 3.7 |
| $V_R$ (V) | - 20 | - 5 |

As seen from the above results, the photoreceptor prepared by use of the above compound has deteriorated sensitivity and residual potential characteristics with UV-ray irradiation and a larger variation of the receptor potential.

Example 52

Example 5 was repeated except for using compound A—(11) in place of compound C—(63). The drum-shaped photoreceptor obtained was found to have a spectral sensitivity at 790 nm of 920 volt · cm$^2$ · µW$^{-1}$ · sec$^{-1}$ (half-reduction rate). A copying test was conducted with a testing machine in which a semiconductor laser (790 nm) was mounted to give a laser beam intensity of 0.85 mW on the surface of the photoreceptor of this invention.

After charging the surface of the photoreceptor to −6 KV, the member was subjected to exposure to the laser beam, followed by reversal development with a bias voltage of −250 V, whereby good images without fogging were obtained.

Comparative Example 14

Example 52 was repeated except for employing comparative bisazo compound L—(14) shown below in place of compound C—(63) to obtain a comparative photoreceptor.

L - (14)

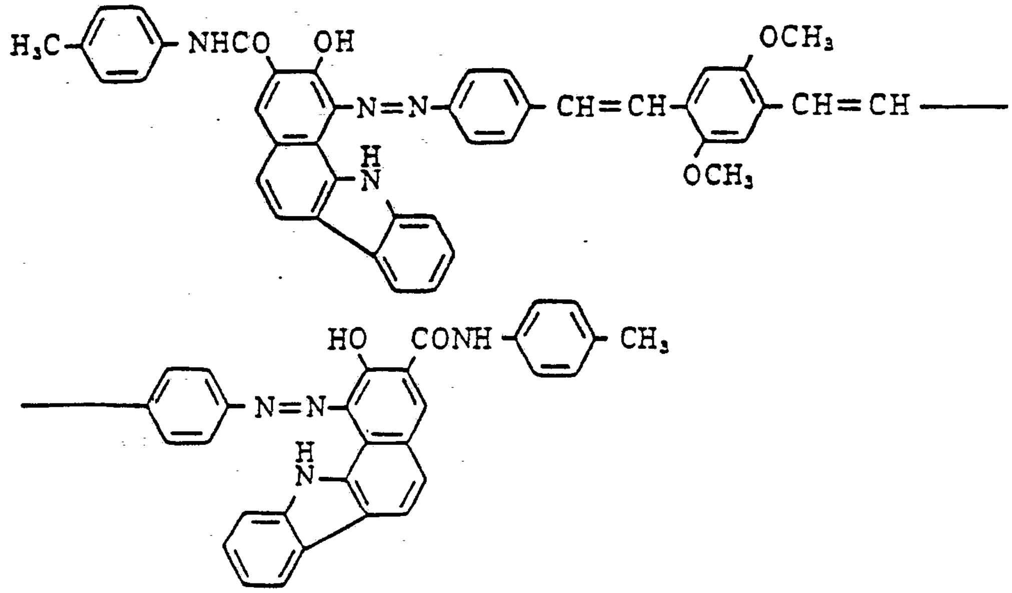

The photoreceptor was found to have a spectral sensitivity at 790 nm of 50 volt · $cm^2 \cdot \mu W^{-1} \cdot sec^{-1}$ (half-reduction rate). When a copying test with the semiconductor laser was conducted similarly as in Example 106, much fogging occurred to give no good image.

Examples 53—57

In Example 5, exemplary compound A—(11) (charge generating material) and the compound for charge transporting material were changed, respectively, to those as shown in Table 24, under otherwise the same conditions to prepare drum-shaped photoreceptors. These photoreceptors were found to have spectral sensitivities at 790 nm as shown in Table 24. In any of the copying tests conducted similarly as in Example 52 by use of these photoreceptors (Examples 53—57), good images without fog were obtained.

Table 24

| Example No. | Charge generating material | Charge transporting material | Spectral sensitivity volt·$cm^2 \cdot \mu W^{-1} \cdot sec^{-1}$ |
|---|---|---|---|
| Example 53 | Exemplary compound C-(8) | Compound K-(44) | 900 |
| Example 54 | " C-(15) | " K-(45) | 800 |
| Example 55 | " C-(18) | " K-(46) | 720 |
| Example 56 | " C-(26) | " K-(47) | 730 |
| Example 57 | " C-(37) | " K-(48) | 980 |

Compound K - (44)

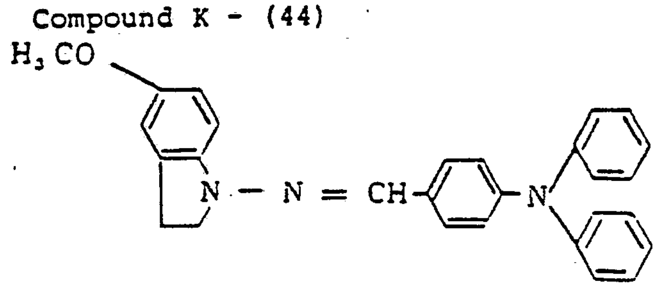

Compound K - (45)

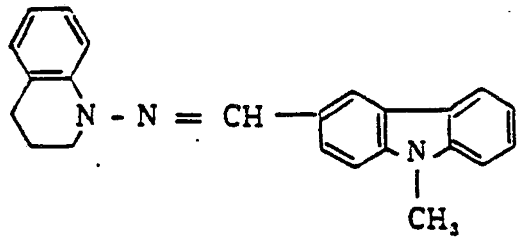

Compound K - (46)

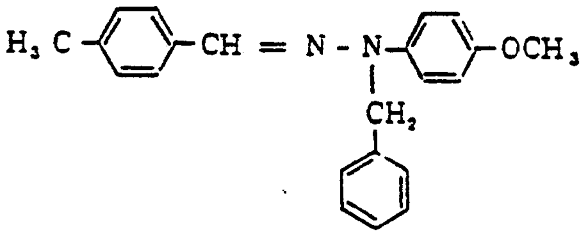

Compound K - (47)

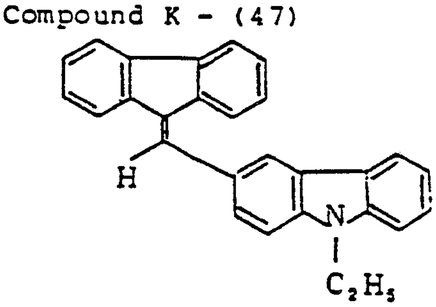

Compound K - (48)

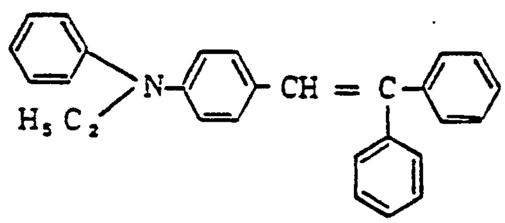

Examples 58—59

Using compounds D—(56) and D—(2) as the carrier generating material, and compounds shown below K—(49) and K—(50), respectively, as the carrier transporting material following otherwise the same procedure as described in Example 1, photoconductive members of this invention were prepared and subjected to similar measurements to obtain the results shown in Table 25.

K - (49)

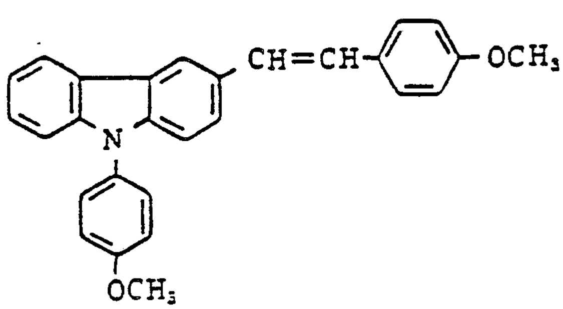

K - (50)

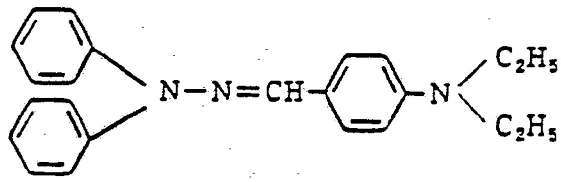

Table 25

| Example | Bisazo compound | First measurement | | 100th measurement | |
|---|---|---|---|---|---|
| | | $E_{1/2}$(lux·sec) | $V_R$(V) | $E_{1/2}$(lux·sec) | $V_R$(V) |
| 58 | Exemplary compound D - (56) | 1.4 | 0 | 1.4 | 0 |
| 59 | Exemplary compound D - (2) | 1.5 | 0 | 1.5 | 0 |

Example 60

Example 9 was repeated except that compound A—(17) was replaced with compound D—(35) to prepare a photoreceptor.

For the thus obtained photoreceptor, $E_{1/2}$ and $V_R$ were measured similarly as in Example 1 except for changing the charging voltage to +6 KV. The results of the first measurement were $E_{1/2}$ = 1.8 lux · sec and $V_R$ = +5 V.

Example 61

Example 10 was repeated except that compound K—(51) shown below was employed as the carrier transporting material, and compound D—(57) and the following bisazo compound were employed as the carrier generating materials, respectively.

K - (51)

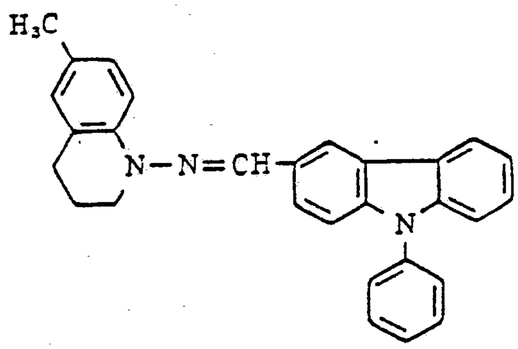

Bisazo compound

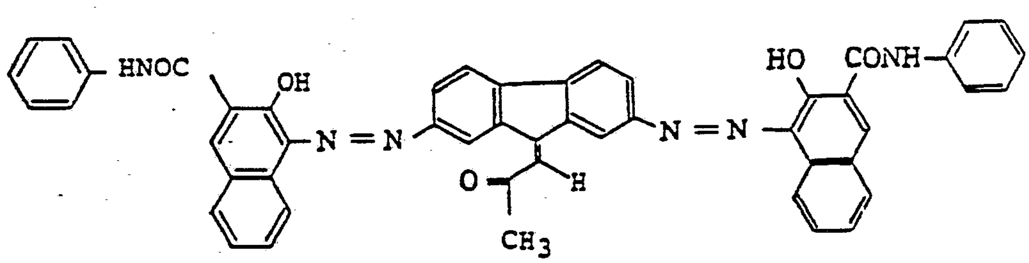

The thus obtained photoreceptor was evaluated similarly as in Example 60 to obtain the results of $E_{1/2} = 2.0$ lux · sec and $V_R = +7$ V.

Examples 62—65

In Example 5, compound A—(5) (charge generating material) and the compound for charge transporting material were changed, respectively, to those as shown in Table 26, under otherwise the same conditions to prepare drum-shaped photoreceptors. These photoreceptors were found to have spectral sensitivities at 790 nm as shown in Table 26. In any of the copying tests conducted similarly as in Example 5 by use of these photoreceptors (Examples 62—65), good images without fog were obtained.

Table 26

| Example No. | Charge generating material | Charge transporting material | Spectral sensitivity $volt \cdot cm^2 \cdot \mu W^{-1} \cdot sec^{-1}$ |
|---|---|---|---|
| Example 62 | Exemplary compound D-(4) | Compound K-(52) | 1020 |
| Example 63 | " D-(7) | " K-(53) | 970 |
| Example 64 | " D-(15) | " K-(54) | 960 |
| Example 65 | " D-(23) | " K-(55) | 880 |

Compound K - (52)

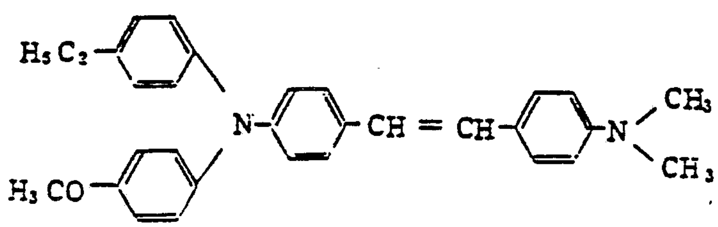

Compound K - (53)

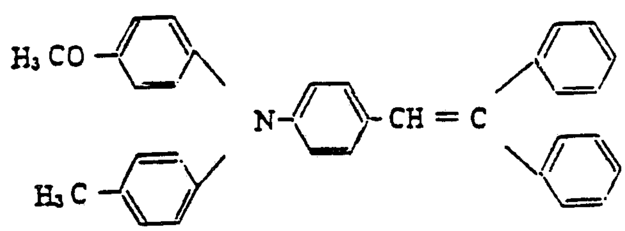

Compound K - (54)

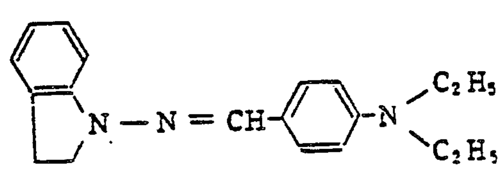

Compound K - (55)

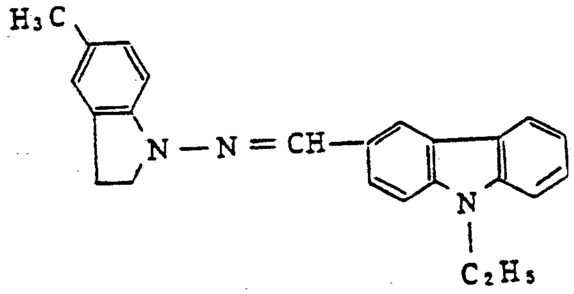

Example 66

Example 9 was repeated except that compound A—(17) was replaced with compound E—(27) to prepare a photoreceptor.

For the thus obtained photoreceptor, $E_{1/2}$ and $V_R$ were measured similarly as in Example 1 except for changing the charging voltage to +6 KV. The results of the first measurement were $E_{1/2}$ = 1.7 lux · sec and $V_R$ = +4 V.

Example 67

Example 11 was repeated except that compound A—(10) was replaced with compound E—(35), and the carrier transporting materials were changed to the compounds shown below K—(56), K—(57) and K—(58), respectively, to obtain the results shown in Table 27.

K - (56)

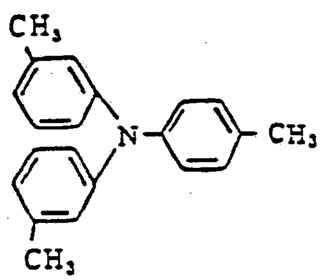

K - (57)

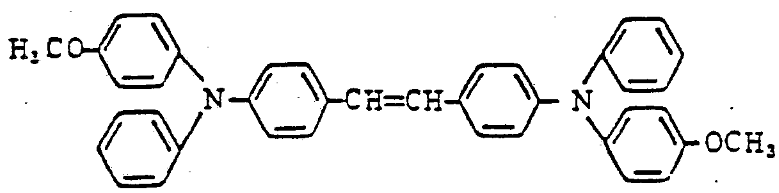

K - (58)

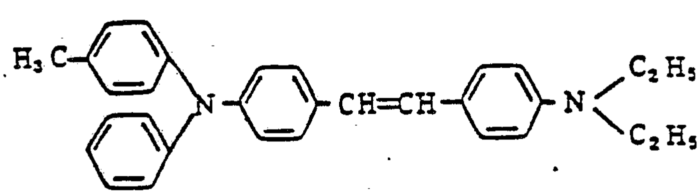

Table 27

| Carrier transporting material combined with exemplary compound E - (35) | $E_{1/2}$(lux·sec) | $V_R$ (V) |
|---|---|---|
| K - (56) | 1.8 | 0 |
| K - (57) | 1.5 | 0 |
| K - (58) | 1.1 | 0 |

Comparative Example 15

A comparative photoreceptor was prepared in the same manner as in Example 67 except for substituting the bisazo compound (L—15)) shown below for compound E—(35) and subjected to characteristic evaluation.

L - (15)

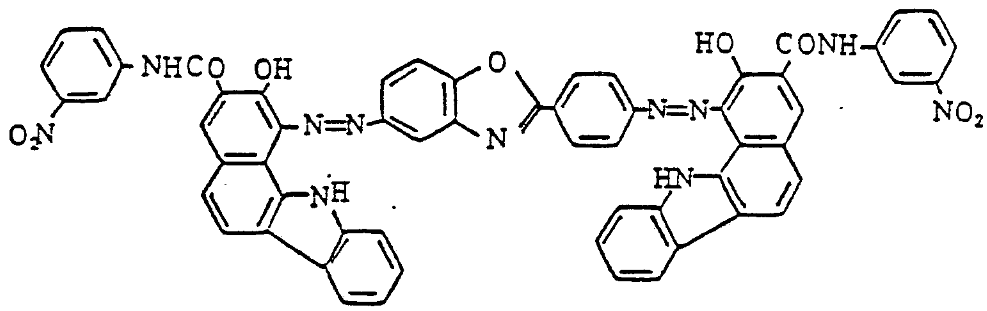

As shown in Table 27, the results were found to vary depending on the carrier transporting material.

Table 27

| Carrier transporting material combined with the compound L - (15) | $E_{1/2}$(lux·sec) | $V_R$ (V) |
|---|---|---|
| K - (56) | 10.1 | 33 |
| K - (57) | 7.8 | 24 |
| K - (58) | 5.7 | 15 |

Example 68

Example 12 was repeated except that compound A—(2) was replaced with compound E—(72) and the compound K—(59) shown below was used as the carrier transporting material to obtain the results shown in Table 28.

K - (59)

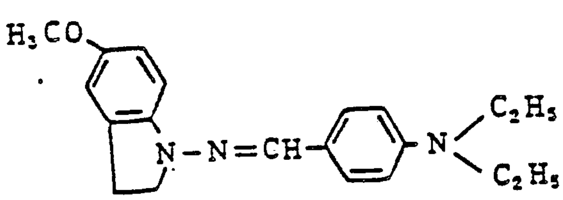

Table 28

| | 25 °C | 60 °C |
|---|---|---|
| VA (V) | - 1020 | - 1040 |
| $E_{1/2}$ (lux·sec) | 1.3 | 1.3 |
| $V_R$ (V) | 0 | 0. |

As seen from the above results, the electrophotographic photoreceptor has good sensitivity and residual potential characteristics even at higher temperatures, indicating good stability to heat.

Example 69

Example 13 was repeated except that compound A—(1) was replaced with compound E—(57) and the compound K—(60) shown below was employed as the carrier transporting material to obtain the results as shown in Table 29.

K - (60)

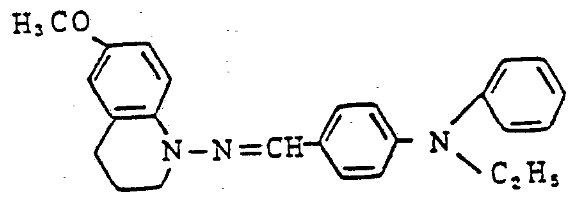

Example 70

Example 69 was repeated except for effecting no irradiation with UV-rays after formation of the carrier generating layer to obtain the results shown in Table 29.

Table 29

| | Example 69 | Example 70 |
|---|---|---|
| VA (V) | - 980 | - 950 |
| $E_{1/2}$ (lux·sec) | 1.3 | 1.3 |
| $V_R$ (V) | 0 | 0 |

As seen from the above results, the electrophotographic photoreceptor of the present invention has excellent sensitivity and residual potential characteristics with UV-ray irradiation, little variation of receptor potential and is also stable to light.

Comparative Example 16

Photoreceptors were prepared in the same manner as in Examples 69 and 70, except for changing compound E—(57) to the bisazo compound (L—16)) shown below, and the same measurements as in Example 5 were conducted.

L - (16)

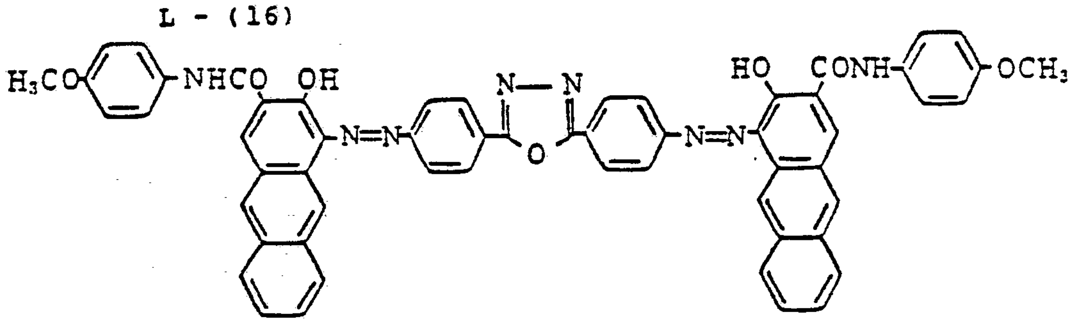

The results are shown in Table 30.

Table 30

| | With UV-ray irradiation | Without UV-ray irradiation |
|---|---|---|
| VA (V) | - 950 | - 920 |
| $E_{1/2}$ (lux·sec) | - 9.8 | - 5.1 |
| $V_R$ (V) | - 40 | - 21 |

As seen from the above results, the photoreceptor prepared by use of the above compound has deteriorated sensitivity and residual potential characteristics with UV-ray irradiation and a large variation of receptor potential.

Examples 71—75

In Example 5, compound A—(11) (charge generating material) and the compound for charge transporting material were changed, respectively, to those as shown in Table 31, under otherwise the same conditions to prepare drum-shaped photoreceptors. These photoreceptors were found to have spectral sensitivities at 790 nm as shown in Table 31. In any of the copying tests conducted similarly as in Example 5 by use of these photoreceptors (Examples 71—75), good images without fog were obtained.

Table 31

| Example No. | Charge generating material | Charge transporting material | Spectral sensitivity volt·cm$^2$·uW$^{-1}$·sec$^{-1}$ |
|---|---|---|---|
| Example 71 | Exemplary compound E-(1) | Compound K-(61) | 1010 |
| Example 72 | " E-(14) | " K-(62) | 950 |
| Example 73 | " E-(30) | " K-(63) | 960 |
| Example 74 | " E-(33) | " K-(64) | 850 |
| Example 75 | " E-(33) | " K-(65) | 910 |

Compound K - (61)

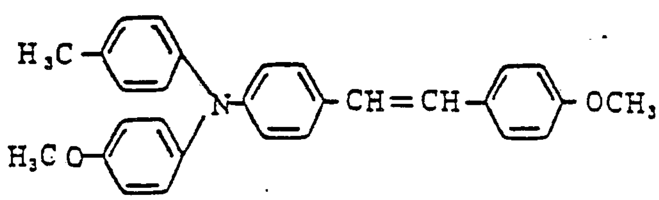

Compound K - (62)

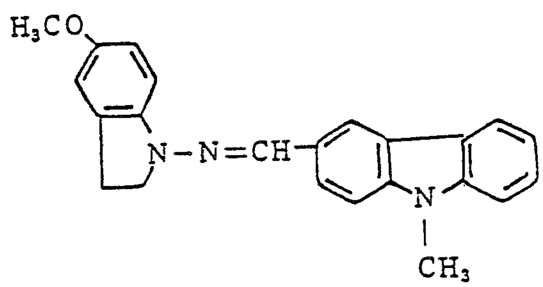

Compound K - (63)

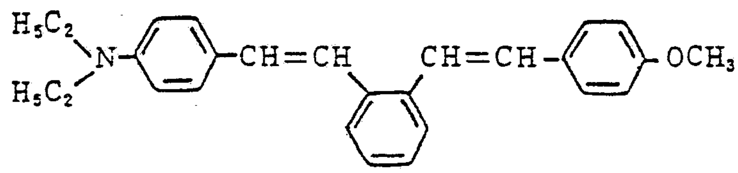

Compound K - (64)

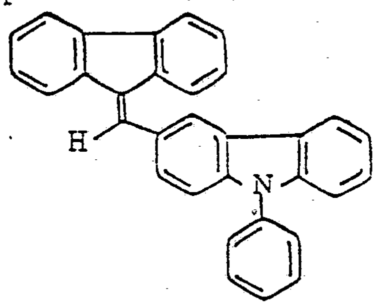

Compound K - (65)

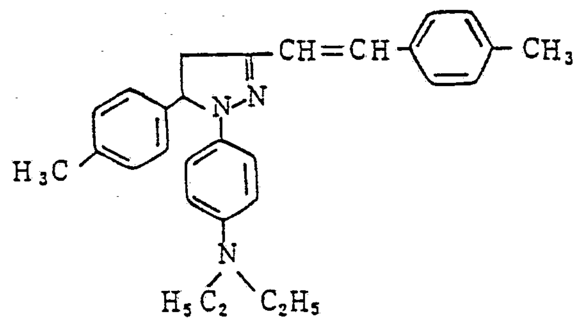

As seen from the Examples and Comparative Examples, the photoreceptors of the present invention have excellent characteristics such as stability, sensitivity, durability, and ability to be combined with a wide range of carrier transporting materials.

By the use of the azo compounds of formula [I] as the photoconductive material constituting the photosensitive layer of the photoreceptor according to this invention, it is possible to prepare a photoreceptor as intended by this invention, which is stable to heat and light, excellent in electrophotographic characteristics such as charge retentive force, sensitivity, residual potential and which also has little fatigue deterioration when used repeatedly, and which further has sufficient sensitivity in the long wavelength region of 780 nm or longer.

**Claims**

1. A photoreceptor comprising a support and a photosensitive layer which comprises an azo compound of formula [I]:

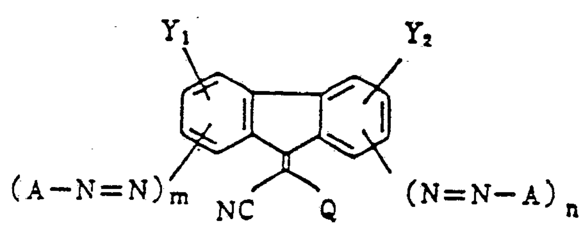

[I]

wherein

Q is a halogen atom, a hydrogen atom, an alkyl group, an alkoxy group, an alkylsulfonyl group, an aryl group, an acetylamido group,

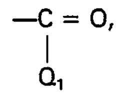

wherein $Q_1$ is an alkyl group, an alkoxy group, a phenyl group, an amino group, a hydroxy group or a hydrogen atom, or

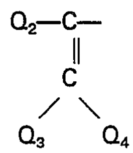

wherein $Q_2$, $Q_3$ and $Q_4$ independently are an alkyl group, an alkoxy group, a phenyl group, an acyl group, an ester group, a hydroxy group, a cyano group, a vinyl group, a halogen atom or a hydrogen atom, wherein any one or more of said alkyl group, alkoxy group, aryl group, amino group, acyl group, acetylamido group, alkylsulphonyl group and vinyl group may have a substituent;

$Y_1$ and $Y_2$ independently are a hydrogen atom, a halogen atom, a cyano group, a hydroxy group, an alkyl group or an alkoxy group;

*m* and *n* each independently represents an integer of from 0 to 2, with the proviso that *m* and *n* cannot be both 0;

each A independently represents a group of formula:

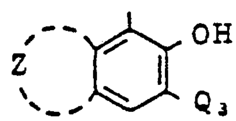

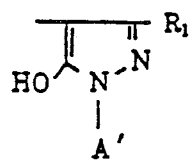

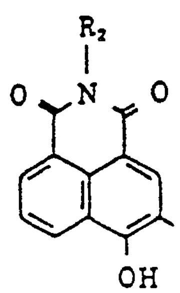

or

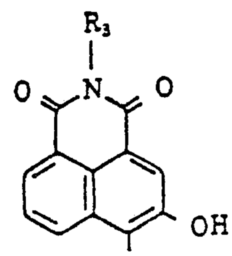

wherein Z is a group which, together with the carbons to which it is attached, forms a substituted or unsubstituted aromatic hydrocarbon ring or a substituted or unsubstituted aromatic heterocyclic ring, $P_3$ is a substituted or unsubstituted carbamoyl group or a substituted or unsubstituted sulfamoyl group, $R_1$ is a hydrogen atom, a substituted or unsubstituted alkyl group, a substituted or unsubstituted amino group, a substituted or unsubstituted carbamoyl group, a carboxyl group or an ester group thereof or a cyano group, A' is a substituted or unsubstituted aryl group, and $R_2$ and $R_3$ independently are a substituted or unsubstituted alkyl group, a substituted or unsubstituted aralkyl group or a substituted or unsubstituted aryl group.

2. A photoreceptor according to Claim 1, wherein the azo compound is of formula [IA]:

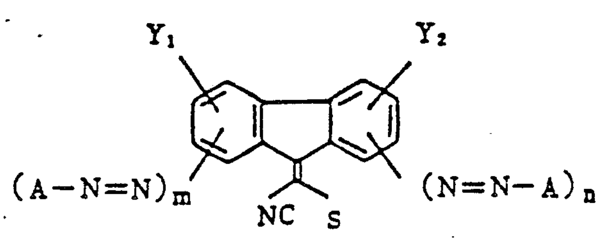

[IA]

wherein S is a substituted or unsubstituted benzene ring or an alkyl group; and $Y_1$, $Y_2$, *m*, *n* and A are as defined in Claim 1.

3. A photoreceptor according to Claim 2, wherein the azo compound is of formula [IA]—II:

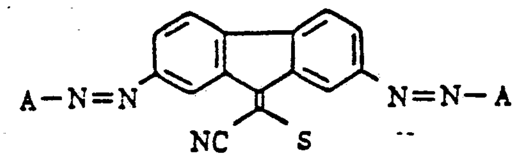

[IA]-II

wherein S and A are as defined in Claim 2.

4. A photoreceptor according to Claim 1, wherein the azo compound is of formula [IB]:

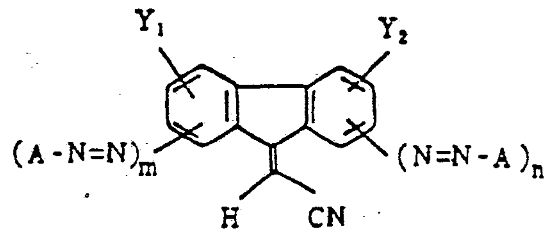

[IB]

wherein $Y_1$, $Y_2$, *m*, *n* and A are as defined in Claim 1.

5. A photoreceptor according to Claim 4, wherein the azo compound is of formula [IB]—II:

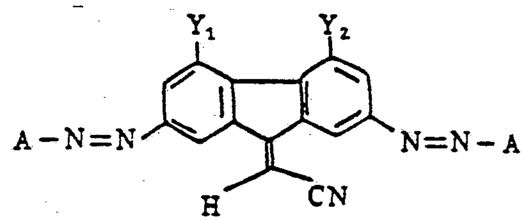

[IB]-II

wherein $Y_1$, $Y_2$ and A are as defined in Claim 4.

6. A photoreceptor according to Claim 1, wherein the azo compound is of formula [IC]:

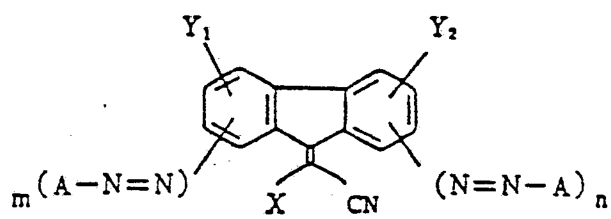

[IC]

wherein X is a halogen atom; and $Y_1$, $Y_2$, *m*, *n* and A are as defined in Claim 1.

7. A photoreceptor according to Claim 6, wherein the azo compound is of formula [IC]—II:

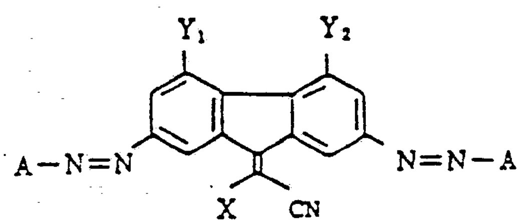

[IC]-II

wherein X, W, $Y_1$, $Y_2$ and A are as defined in Claim 6.

8. A photoreceptor according to Claim 1, wherein the azo compound is of formula [ID]:

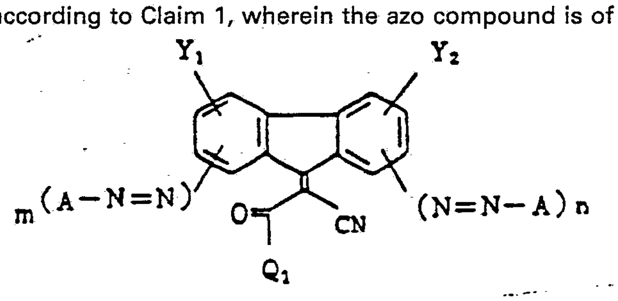

[ID]

wherein $Q_1$, $Y_1$, $Y_2$, *m*, *n* and A are as defined in Claim 1.

9. A photoreceptor according to Claim 8, wherein the azo compound is of formula [ID]—II:

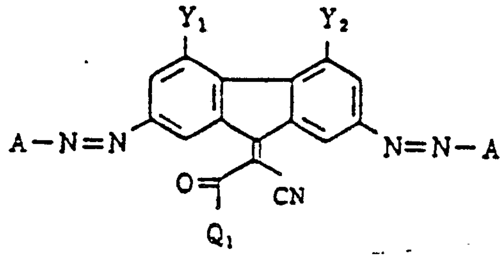

[ID]-II

wherein $Q_1$, $Y_1$, $Y_2$ and A are as defined in Claim 8.

10. A photoreceptor according to Claim 1, wherein the azo compound is of formula [IE]:

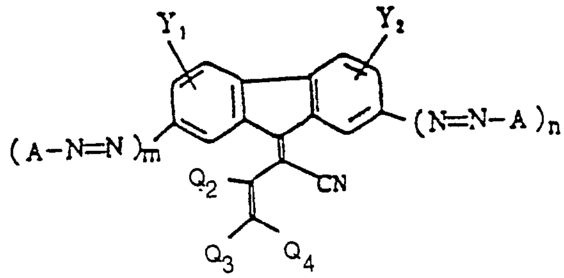

[IE]

wherein $Q_2$, $Q_3$, $Q_4$, $Y_1$, $Y_2$, *m*, *n* and A are as defined in Claim 1.

11. A photoreceptor according to Claim 10, wherein the azo compound is of formula [IE]—II:

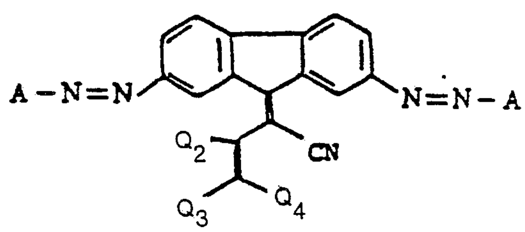

[IE]-II

wherein $Q_2$, $Q_3$, $Q_4$ and A are as defined in Claim 10.

12. A photoreceptor according to any one of Claims 1 to 11, wherein said photosensitive layer comprises a carrier transporting material and said azo compound as a carrier generating material.

13. A photoreceptor according to Claim 12, wherein said photosensitive layer comprises a carrier transport layer which comprises said carrier transporting material and a carrier generation layer which comprises said carrier generating material.

14. A photoreceptor according to Claim 12, wherein said carrier generation layer has a thickness of from 0.01 µm to 20 µm.

15. A photoreceptor according to any one of Claims 12 to 14, wherein said carrier transporting material is an electron acceptor of trinitrofluorenone or tetranitrofluorenone or an electron donor of a polymer having heterocyclic groups as side chains, which is poly-N-vinylcarbazole, a triazole derivative, an oxadiazole derivative, an imidazole derivative, a pyrazoline derivative, a polyarylalkane derivative, a phenylenediamine derivative, a hydrazone derivative, an amino-substituted chalcone derivative, a triarylamine derivative, a carbazole derivative, a stilbene derivative or a phenothiazine derivative.

16. A photoreceptor according to Claim 12, wherein said photosensitive layer is a single layer in which said carrier generating material and carrier transporting material are dispersed.

17. A photoreceptor according to any one of Claims 1 to 16, which has an intermediate layer between said photosensitive layer and said support.

18. A photoreceptor according to any one of Claims 1 to 17, wherein said support is a plate or drum of a metal or an alloy, or a paper or plastic film made electroconductive by coating, vapor deposition or lamination of a metal thin film or thin film of an electroconductive compound or alloy thereon.

**Patentansprüche**

1. Photorezeptor mit einem Träger und einer photoempfindlichen Schicht, die eine Azoverbindung nachstehender Formel (I) enthält:

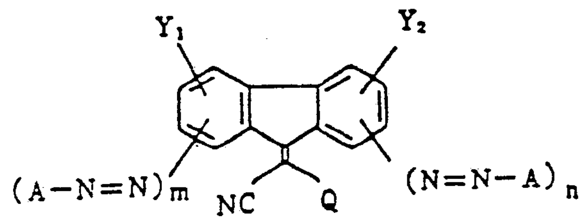

[I]

worin

Q ein Halogenatom, ein Wasserstoffatom, eine Alkylgruppe, eine Alkoxygruppe, eine Alkylsulfonylgruppe, eine Arylgruppe, eine Acetylamidogruppe, eine

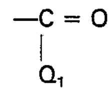

Gruppierung, in der $Q_1$ für eine Alkylgruppe, eine Alkoxygruppe, eine Phenylgruppe, eine Aminogruppe, eine Hydroxygruppe oder ein Wasserstoffatom steht, oder

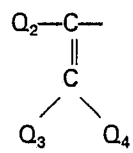

Gruppierung bedeutet, worin $Q_2$, $Q_3$ und $Q_4$ unabhängig voneinander für eine Alkylgruppe, eine Alkoxygruppe, eine Phenylgruppe, eine Acylgruppe, eine Estergruppe, eine Hydroxygruppe, eine Cyanogruppe, eine Vinylgruppe, ein Halogenatom oder ein Wasserstoffatom stehen, wobei jede oder mehrere der erwähnten Alkylgruppen, Alkoxygruppen, Arylgruppen, Aminogruppen, Acylgruppen, Acetylamidogruppen, Alkylsulfonylgruppen und Vinylgruppen einen Substituenten aufweisen können;

$Y_1$ und $Y_2$ unabhängig voneinander ein Wasserstoffatom, ein Halogenatom, eine Cyanogruppe, eine Hydroxygruppe, eine Alkylgruppe oder eine Alkoxygruppe bedehten;

*m* und *n* jeweils unabhängig voneinander eine ganze Zahl von 0 bis 2 bedeuten mit der Maßgabe, daß *m* und *n* nicht beide 0 sein können;

jedes A für sich eine Gruppe nachstehender Formel darstellt:

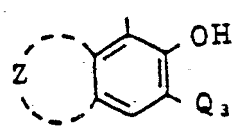

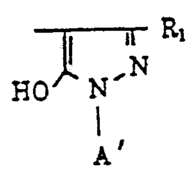

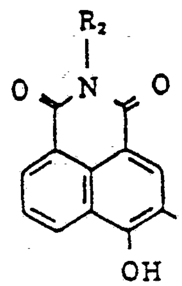

oder

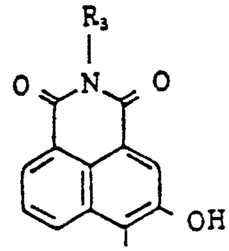

worin Z für eine Gruppe steht, die, zusammen mit den Kohlenstoffatomen, an welche sie gebunden ist, einen substituerten oder unsubstituerten aromatischen Kohlenwasserstoffring oder einen substitueirten oder unsubstituerten aromatischen heterocyklischen Ring bildet, $P_3$ eine substituierte oder unsubstituierte Carbamoylgruppe oder eine substituierte oder unsubstituierte Sulfamoylgruppe bedeutet, $R_1$ für ein

Wasserstoffatom, eine substituierte oder unsubstituierte Alkylgruppe, eine substituierte oder unsubstituierte Aminogruppe, eine substituierte oder unsubstituierte Carbamoylgruppe, eine Carboxylgruppe oder eine hiervon abgeleitete Estergruppe oder eine Cyanogruppe steht, A' eine substituierte oder unsubstituierte Arylgruppe ist, und $R_2$ und $R_3$ unabhängig voneinander eine substituierte oder unsubstituerte Alkylgruppe, eine substituierte oder unsubstituierte Aralkylgruppe oder eine substituierte oder unsubstituierte Arylgruppe bedeuten.

2. Photorezeptor nach Anspruch 1, wobei die Azogruppe nachstehende Formel aufweist:

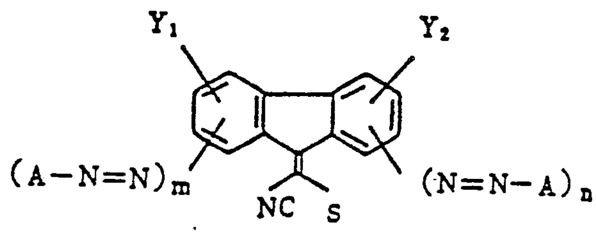

[IA]

worin S einen substituierten oder unsubstituierten Benzolring oder eine Alkylgruppe darstellt; und $Y_1$, $Y_2$, *m*, *n* und A die im Anspruch 1 angegebene Bedeutung besitzen.

3. Photorezeptor nach Anspruch 2, wobei die Azogruppe die nachstehende Formel (IA)—II aufweist:

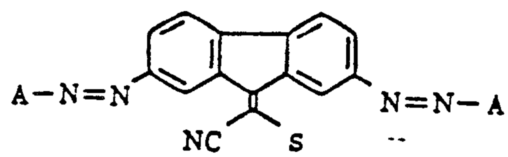

[IA]-II

worin S und A die in Anspruch 2 angegebene Bedeutung besitzen.

4. Photorezeptor nach Anspruch 1, wobei die Azogruppe die nachstehende Formel (IB) aufweist:

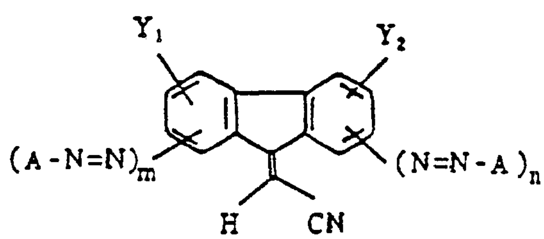

[IB]

worin $Y_1$, $Y_2$, *m*, *n* und A die im Anspruch 1 angegebene Bedeutung haben.

5. Photorezeptor nach Anspruch 4, wobei die Azogruppe nachstehende Formel (IB)—II aufweist:

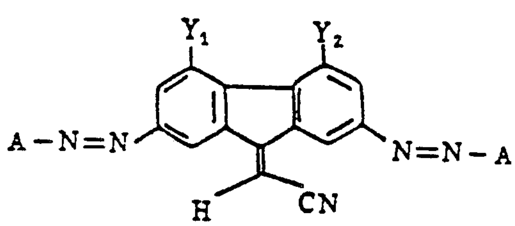

[IB]-II

worin $Y_1$, $Y_2$ und A die im Anspruch 4 angegebene Bedeutung haben.

6. Photorezeptor nach Anspruch 1, wobei die Azogruppe nachstehende Formel (IC) aufweist:

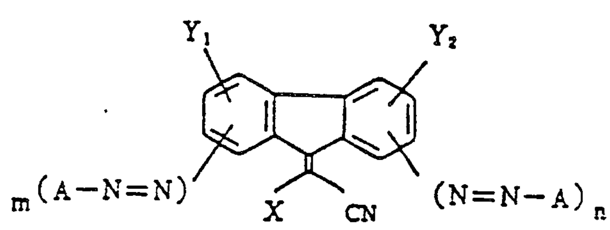

[IC]

worin X für ein Halogenatom steht; und $Y_1$, $Y_2$, *m*, *n* und A die im Anspruch 1 angegebene Bedeutung haben.

7. Photorezeptor nach Anspruch 6, wobei die Azogruppe nachstehende Formel (IC)—II aufweist:

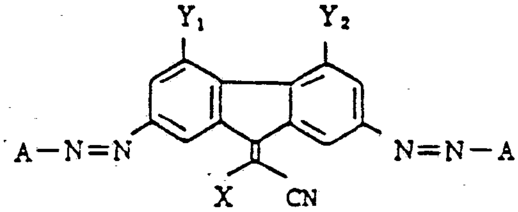

[IC]-II

worin X, W, $Y_1$, $Y_2$ und A die im Anspruch 6 angegebene Bedeutung aufweist.

8. Photorezeptor nach Anspruch 1 wobei die Azogruppe nachstehende Formel (ID) aufweist:

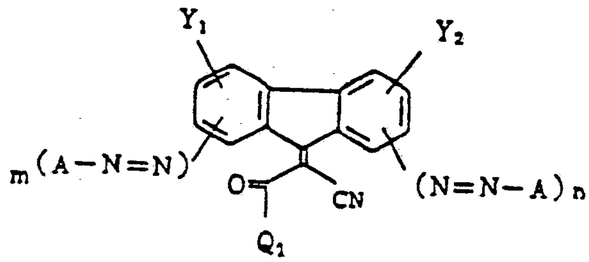

[ID]

worin $Q_1$, $Y_1$, $Y_2$, *m*, *n* und A die im Anspruch 1 angegebene Bedeutung haben.

9. Photorezeptor nach Anspruch 6, wobei die Azogruppe nachstehende Formel (ID)—II aufweist:

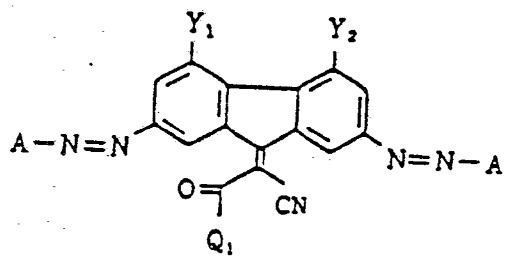

[ID]-II

worin $Q_1$, $Y_1$, $Y_2$ und A die im Anspruch 8 angegebene Bedeutung haben.

10. Photorezeptor nach Anspruch 1, wobei die Azogruppe nachstehende Formel (IE) aufweist:

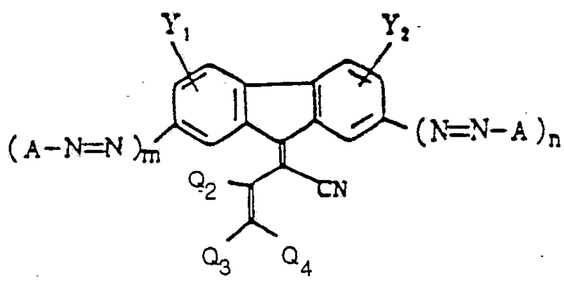

[IE]

worin $Q_2$, $Q_3$, $Q_4$, $Y_1$, $Y_2$, *m*, *n* und A die im Anspruch 1 angegebene Bedeutung haben.

11. Photorezeptor nach Anspruch 10, wobei die Azoverbindung nachstehende Formel (IE)—II aufweist:

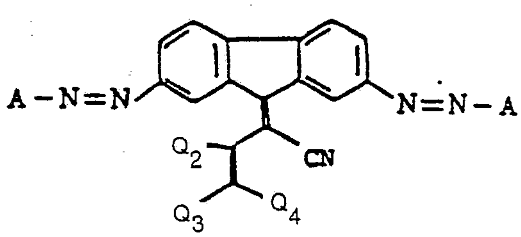

[IE]-II

worin $Q_2$, $Q_3$, $Q_4$ und A die im Anspruch 10 angegebene Bedeutung haben.

12. Photorezeptor nach einem der Ansprüche 1 bis 11, wobei die photoempfindliche Schicht ein Träger transportierendes Material und die genannte Azoverbindung als Träger erzeugendes Material aufweist.

13. Photorezeptor nach Anspruch 12, wobei die erwähnte photoempfindliche Schicht eine Träger-Transport-Schicht aufweist, die das erwähnte Träger transportierende Material und eine Trägererzeugungsschicht umfaßt, welche das Träger erzeugende Material enthält.

14. Photorezeptor nach Anspruch 12, wobei die erwähnte Trägererzeugunsschicht eine Dicke von 0.01 µm bis 20 µm aufweist.

15. Photorezeptor nach einem der Ansprüche 12 bis 14, wobei das erwähnte, Träger transportierende Material ein Elektronenakzeptor aus Trinitrofluorenon oder Tetranitrofluorenon oder ein Elektronendonator aus einem Polymer mit heterocyclischen Gruppen als Seitenketten ist, nämlich: Poly-N-Vinylcarbazol, ein Triazolderivat, ein Oxadiazolderivat, ein Imidazolderivat, ein Pyrazolinderivat, ein Polyarylalkanderivat, ein Phenylendiaminderivat, ein Hydrazonderivat, ein Amino-substituiertes Chalconderivat, ein Triarylaminderivat, ein Carbazolderivat, ein Stilbenderivat oder in Phenothiazinderivat.

16. Photorezeptor nach Anspruch 12, wobei die erwähnte photoempfindliche Schicht die alleinige Schicht darstellt, in welcher das erwänhte, Träger erzeugende Material und Träger transportierende Material dispergiert sind.

17. Photorezeptor nach einem der Ansprüche 1 bis 16 mit einer Zwischenschicht zwischen der erwähnten photoempfindlichen Schicht und dem erwähnten Träger.

18. Photorezeptor nach einem der Ansprüche 1 bis 17, wobei der Träger eine Platte oder Trommel aus einem Metall oder einer Legierung ist oder von einer Papier- oder Kunststoffolie gebildet ist, die durch Aufbringen einer dünnen Metallfolie oder einer dünnen Folie einer elektrisch leitfähigen Substanz oder Legierung im Wege eines Überzugsverfahrens, einer Dampfabscheidung oder Laminierung elektrisch leitend gemacht wurde.

**Revendications**

1. Photorécepteur comprenant un support et une couche photosensible qui comprend un composé azo de formula (I):

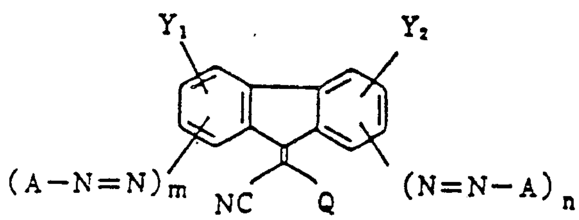

[I]

dans laquelle

Q est un atome d'halogène, un atome d'hydrogène, un groupe alkyle, un groupe alcoxy, un groupe alkylsulfonyle, un groupe aryle, un groupe acétylamido,

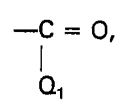

où $Q_1$ est un groupe alkyle, un groupe alcoxy, un groupe phényle, un groupe amino, un groupe hydroxy, ou un atome d'hydrogène, ou

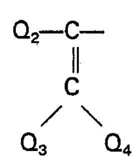

où X $Q_2$, $Q_3$ et $Q_4$ représentent indépendamment un groupe alkyle, un groupe alcoxy, un groupe phényle, un groupe acyle, un groupe ester, un groupe hydroxy, un groupe cyano, un groupe vinyle, un atome d'halogène ou un atome d'hydrogène, dans lesquels l'un ou plusieurs des groupes alkyle, alcoxy, aryle, amino, acyle, acétylamido, alkylsulfonyle et vinyle peuvent comporter un substituant;

$Y_1$ et $Y_2$ pouvant être indépendamment un atome d'hydrogène, un atome d'halogène, un groupe cyano, un groupe hydroxy, un groupe alkyle ou un groupe alcoxy;

*m* et *n* représentent chacun indépendamment un nombre entier de 0 à 2, à condition que *m* et *n* soient pas tout deux égaux à 0;

chaque A représente in indépendamment un groupe de formule:

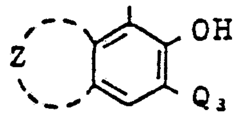

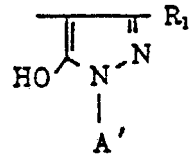

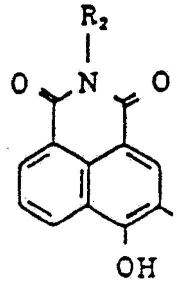

ou

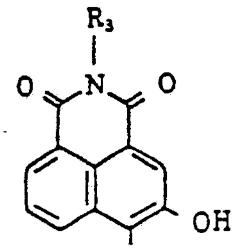

dans lesquelles Z est un groupe qui, en commun avec les carbones auxquels il est attaché, forme un noyau hydrocarboné aromatique, substitué ou non substitué, ou un hétérocycle aromatique, substitué ou non substitué, $P_3$ est un groupe carbamoyle substitué ou non substitué, ou un groupe sulfamoyle substitué ou non substitué, $R_1$ est un atome d'hydrogène, un groupe alkyle substitué ou non substitué, un groupe amino, substitué ou non substitué, un groupe carbamoyle substitué ou non substitué, un groupe carboxyle ou un groupe ester de ce dernier, ou un groupe cyano, A' est un groupe aryle substitué ou non substitué, et $R_2$ et $R_3$ sont indépendamment un groupe alkyle, substitué ou non substitué, un groupe aralkyle, substitué ou non substitué, ou un groupe aryle, substitué un non substitué.

2. Photorécepteur selon la revendication 1, dans lequel le composé azo répond à la formule [IA]:

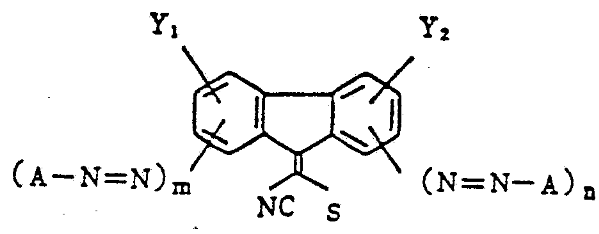

[IA]

dans laquelle S est un cycle benzénique, substitué ou non substitué, ou un groupe alkyle; et $Y_1$, $Y_2$, *m*, *n* et A sont définis comme dans la revendication 1.

3. Photorécepteur selon la revendication 1, dans lequel le composé azo répond à la formule [IA]—II:

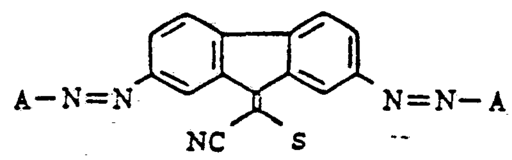

[IA]-II

dans laquelle S et A sont définis comme dans la revendication 2.

4. Photorécepteur selon la revendication 1, dans lequel le composé azo répond à la formule [IB]:

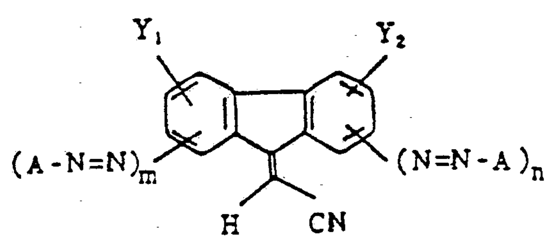

[IB]

dans laquelle $Y_1$, $Y_2$, *m*, *n* et A sont définis comme dans la revendication 1.

5. Photorécepteur selon la revendication 4, dans lequel le composé azo répond à la formule [IB]—II:

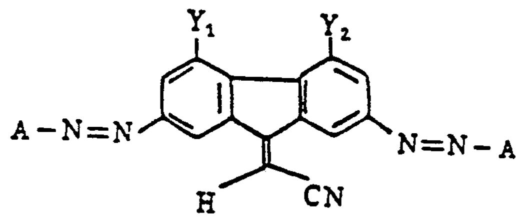

[IB]-II

dans laquelle $Y_1$, $Y_2$ et A sont définis comme dans la revendication 4.

6. Photorécepteur selon la revendication 1, dans lequel le composé azo répond à la formule [IC]:

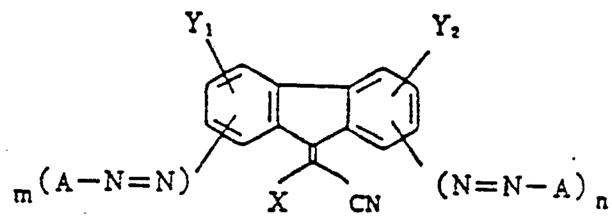

[IC]

dans laquelle X est un atome d'halogène, et $Y_1$, $Y_2$, *m*, *n* et A sont définis comme dans la revendication 1.

7. Photorécepteur selon la revendication 6, dans lequel le composé azo répond à la formule [IC]—II:

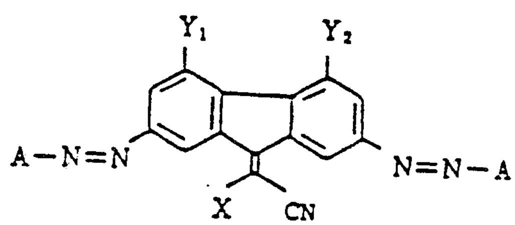

[IC]-II

dans laquelle X, W, $Y_1$, $Y_2$ et A sont définis comme dans la revendication 6.

8. Photorécepteur selon la revendication 1, dans lequel le composé azo répond à la formule [ID]:

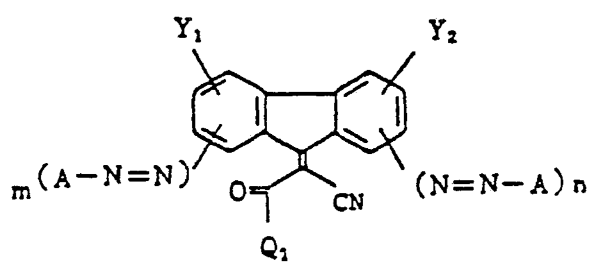

[ID]

dans laquelle $Q_1$, $Y_1$, $Y_2$, *m*, *n* et A sont définis comme dans la revendication 1.

9. Photorécepteur selon la revendication 8, dans lequel le composé azo répond à la formule [ID]—II:

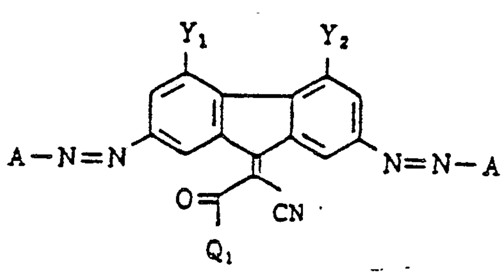

[ID]-II

dans laquelle $Q_1$, $Y_1$, $Y_2$ et A sont définis comme dans la revendication 8.

10. Photorécepteur selon la revendication 1, dans lequel le composé azo répond à la formule [IE]:

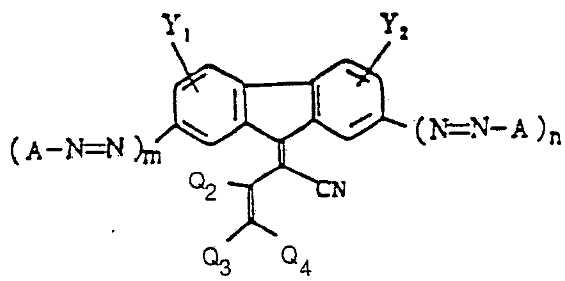

[IE]

dans laquelle $Q_2$, $Q_3$, $Q_4$, $Y_1$, $Y_2$, *m*, *n* et A sont définis comme dans la revendication 1.

11. Photorécepteur selon la revendication 10, dans lequel le composé azo répond à la formule [IE]—II:

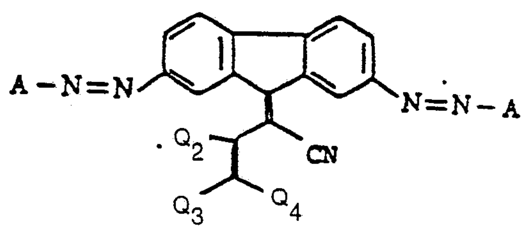

[IE]-II

dans laquelle $Q_2$, $Q_3$, $Q_4$ et A sont définis comme dans la revendication 1.

12. Photorécepteur selon l'une quelconque des revendications 1 à 11, dans lequel ladite couche photosensible comprend une matière vectrice de support et ledit composé azo comme matière génératrice de support.

13. Photorécepteur selon la revendication 12, dans lequel ladite couche photosensible comprend une couche vectrice de support qui comprend ladite matière vectrice de support et une couche génératrice de support qui comprend ladite matière génératrice de support.

14. Photorécepteur selon la revendication 12, dans lequel ladite couche génératrice de support présente une épaisseur de 0,01 à 20 µm.

15. Photorécepteur selon l'une quelconque des revendications 12 à 14, dans lequel ladite matière vectrice de support est un accepteur d'électron de trinitrofluorénone ou tétranitrofluorénone ou un donneur d'électrons d'un polymère ayant des groupes hétérocycliques comme chaînes latérales, qui est le poly-N-vinylcarbazole, un dérivé de triazole, un dérivé d'oxadiazole, un dérivé d'imidazole, un dérivé de pyrazoline, un dérivé de polyarylalcane, un dérivé de phénylènediamine, un dérivé d'hydrazone, un dérivé de chalcone amino-substitué, un dérivé de triarylamine, un dérivé de carbazole, un dérivé de stilbène ou un dérivé de phénothiazine.

16. Photorécepteur selon la revendication 12, dans lequel ladite couche photosensible est une couche simple dans laquelle la matière génératrice de support et la matière vectrice de support sont dispersées.

17. Photorécepteur selon l'une quelconque des revendications 1 à 16, qui comprend une couche intermédiaire entre ladite couche photosensible et ledit support.

18. Photorécepteur selon l'une quelconque des revendications 1 à 17, dans lequel ledit support est une plaque ou un cylindre en métal, en alliage, en papier ou en film plastique, rendu électroconducteur par enduction, par revêtement en phase vapeur ou par application par laminage d'un film mince métallique ou d'un film mince d'un composé électroconducteur ou d'un alliage sur ledit papier ou film plastique.

FIG. 1

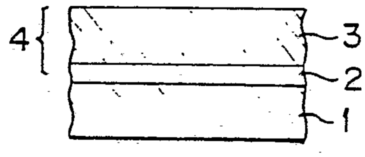


FIG. 2

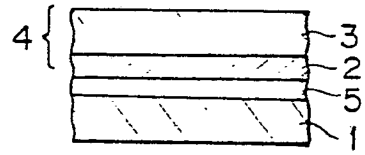


FIG. 3

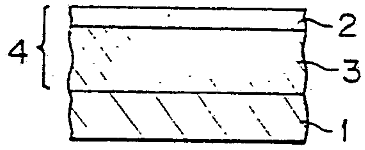


FIG. 4

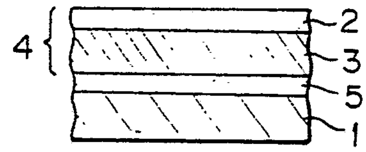


FIG. 5

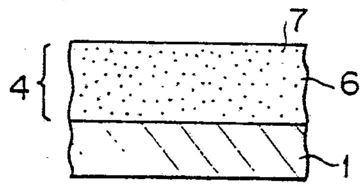


FIG. 6